# EUROPEAN PATENT SPECIFICATION

(11) **EP 3 480 098 B1**
(45) Date of publication and mention of the grant of the patent: **21.09.2022**
(21) Application number: 18203043.7
(22) Date of filing: 29.10.2018
(51) Int. Cl.: B62L 3/02, B60T 8/36, B62K 19/38

(54) **STRADDLED VEHICLE**
GRÄTSCHSITZFAHRZEUG
VÉHICULE À ENFOURCHER

(30) Priority: 07.11.2017 JP 2017214663
(43) Date of publication of application: 08.05.2019
(73) Proprietor: Yamaha Hatsudoki Kabushiki Kaisha, Shizuoka 438-8501 (JP)
(72) Inventor: ASADA, Yasuhiro, Shizuoka-ken, Shizuoka 438-0026 (JP)
(74) Representative: Grünecker Patent- und Rechtsanwälte PartG mbB

(56) References cited:
- EP-A1- 2 548 792
- EP-A1- 2 604 498
- EP-A1- 2 829 463
- EP-A1- 3 124 343
- JP-A- 2008 074 206
- US-B2- 7 350 881
- Anonymous: "BMW now offers ABS Pro retrofit to older S 1000 RR models | Cycle World", Cycleworld, 30 September 2015 (2015-09-30), XP055824944, Retrieved from the Internet: URL:https://www.cycleworld.com/sport-rider /bmw-now-offers-abs-pro-retrofit-to-older- s-1000-rr-models/ [retrieved on 2021-07-15]
- Unknown: "SUZUKI 2004-2007 GSXR 750 GALFER GP FRONT BRAIDED STAINLESS STEEL BRAKE LINE KIT", , 5 July 2021 (2021-07-05), XP055824947, Retrieved from the Internet: URL:https://www.waterfallkk.com/index.php? main_page=product_info&products_id=692011 [retrieved on 2021-07-15]

## Description

This invention relates to a straddled vehicle having a hydraulic unit.

Japanese Unexamined Patent Publications No. 2013-124071 and No. 2017-30394 each disclose a two-wheeled motor vehicle. Description will first be made of a construction common to the two-wheeled motor vehicles in Japanese Unexamined Patent Publications No. 2013-124071 and No. 2017-30394.

Each two-wheeled motor vehicle has a body frame and a steering device. The body frame includes a head tube. The steering device is rotatable relative to the head tube. The steering device supports a front wheel. The steering device includes a handlebar, an upper bracket, an under bracket, a right front fork, and a left front fork.

The two-wheeled motor vehicle has a hydraulic unit, a master cylinder, and a brake caliper. The hydraulic unit is supported by the body frame. The hydraulic unit is located more rearward than the head tube. The master cylinder is attached to the handlebar. The brake caliper is supported by the right front fork or left front fork.

The two-wheeled motor vehicle has a brake line. The brake line includes primary piping and secondary piping. The primary piping connects the master cylinder and the hydraulic unit. The secondary piping connects the master cylinder and the brake caliper. The hydraulic unit, master cylinder, brake caliper, primary piping, and secondary piping are elements of an antilock brake system (ABS). Arrangements of the brake lines in Japanese Unexamined Patent Publications No. 2013-124071 and No. 2017-30394 will be described individually below.

Arrangement of the brake line In Japanese Unexamined Patent Publication No. 2013-124071 The primary piping and secondary piping pass below the under bracket. More particularly, the primary piping and secondary piping include lower portions, respectively. The lower portion of the primary piping and the lower portion of the secondary piping are located in positions lower than the under bracket, respectively. The lower portion of the primary piping and the lower portion of the secondary piping overlap the under bracket in plan view, respectively.

The lower portion of secondary piping, in particular, bends not only when the steering device rotates relative to the head tube, but also when the right front fork and left front fork extend and contract.

Arrangement of the brake line In Japanese Unexamined Patent Publication No. 2017-30394 The secondary piping passes through a position higher than the upper bracket. More particularly, the secondary piping includes an upper portion. The upper portion of the secondary piping is located in a position higher than the upper bracket. The upper portion of the secondary piping is curved to bulge upward in a front view of the vehicle.

However, the conventional examples with such constructions have the following problems. In both Japanese Unexamined Patent Publications No. 2013-124071 and No. 2017-30394, the members other than the brake line (hereinafter called "other members" as appropriate) are subject to relatively severe restrictions by the brake line.

In Japanese Unexamined Patent Publication No. 2013-124071, the lower portion of the primary piping and the lower portion of the secondary piping restrict the positions and shapes of the other members. For example, the positions of the other members are restricted to ranges not interfering with either of the lower portion of the primary piping and the lower portion of the secondary piping. For example, the shapes of the other members are restricted to outer shapes and sizes not interfering with either of the lower portion of the primary piping and the lower portion of the secondary piping. For example, the other members include a front fender located below the under bracket. For example, it is difficult to locate the front fender in such a high position as to contact a lower part of the under bracket.

The bending of the lower portion of the secondary piping, in particular, is caused by any one of rotation of the steering device and extension and contraction of the right front fork and left front fork. Consequently, the lower portion of the secondary piping bends in a complicated way and to a large extent. The lower portion of the secondary piping therefore still further restricts the positions and shapes of the other members.

In Japanese Unexamined Patent Publication No. 2017-30394, the upper portion of the secondary piping restricts the positions and shapes of the other members. For example, the positions of the other members are restricted to ranges not interfering with the upper portion of the secondary piping. For example, the shapes of the other members are restricted to outer shapes and sizes not interfering with the upper portion of the secondary piping. The other members include a handlebar and meters arranged in positions higher than the upper bracket, for example.

This invention has been made having regard to the state of the art noted above, and its object is provide a straddled vehicle which allows primary piping and secondary piping to be arranged appropriately while inhibiting restrictions imposed on other members. Document EP3124343A1, which discloses all the features of the preamble of independent claim 1, shows another known straddled vehicle.

To fulfill the above object, a straddled vehicle according to claim 1 is provided. This invention provides the following construction.

A straddled vehicle, according to this invention, comprises:
a body frame;
a steering device rotatably supported by the body frame;
a front wheel supported by the steering device;
a master cylinder supported by the steering device;
a brake caliper supported by the steering device;
a hydraulic unit supported by the body frame;
primary piping connecting the master cylinder and the hydraulic unit;
secondary piping connecting the hydraulic unit and the brake caliper;
a first holding member supported by the body frame and holding the primary piping;
a second holding member supported by the body frame and holding the secondary piping; and
a third holding member supported by the steering device and holding the secondary piping;
wherein
the body frame includes a head tube;
the steering device includes:
   a steering shaft supported by the head tube to be rotatable about a center axis of the head tube;
   an upper bracket supported by the steering shaft;
   an under bracket supported by the steering shaft and located in a position lower than the upper bracket;
   an extendible and contractible right front fork supported by the upper bracket and the under bracket;
   an extendible and contractible left front fork supported by the upper bracket and the under bracket; and
   a front axle supported by the right front fork and the left front fork for supporting the front wheel;
the hydraulic unit is located more rearward than the head tube in a side view of the vehicle;
the first holding member is located more rearward than the head tube in the side
the second holding member is located more rearward than the head tube in the side view of the vehicle;
the primary piping includes an upstream portion extending from the first holding member to the master cylinder;
the upstream portion includes a first flexible portion which is a whole or a part of the upstream portion;
the first flexible portion includes a first end held by the first holding member;
the first flexible portion bends when the steering device rotates relative to the body frame;
the secondary piping includes a downstream portion extending from the second holding member to the brake caliper;
the downstream portion includes:
   a second flexible portion extending from the second holding member to the third holding member; and
   a most downstream portion extending from the third holding member to the brake caliper;
the second flexible portion bends when the steering device rotates relative to the body frame;
the most downstream portion includes a third flexible portion which is a whole or a part of the most downstream portion;
the third flexible portion bends when the right front fork and the left front fork extend and contract;
a top imaginary plane is set to an imaginary plane perpendicular to the center axis of the head tube and in contact with an upper part of the upper bracket;
a middle imaginary plane is set to an imaginary plane parallel to the top imaginary plane and in contact with a lower part of the under bracket;
a bottom imaginary plane is set to an imaginary plane parallel to the top imaginary plane and in contact with an upper part of the front wheel;
a first area is set to an area demarcated by the middle imaginary plane, the bottom imaginary plane, the right front fork, and the left front fork, when the straddled vehicle is seen in a first direction which crosses the center axis of the head tube at right angles, and crosses the front axle at right angles;
the upstream portion is located outside the first area;
the downstream portion is located outside the first area; and
the downstream portion is located equal with or lower than the top imaginary plane.

The upstream portion and downstream portion are located outside the first area, respectively. This can conveniently inhibit restrictions imposed on members other than the primary piping and secondary piping (hereinafter called "the other members" as appropriate). In particular, the restrictions imposed by the upstream portion and downstream portion on the other members located in the first area can be inhibited conveniently.

The downstream portion is located equal with or lower than the top imaginary plane. Particularly, therefore, the restrictions imposed by the downstream portion on the other members located higher than the top imaginary plane can be inhibited conveniently.

The second flexible portion bends when the steering device rotates relative to the body frame, and the third flexible portion bends when the right front fork and left front fork extend and contract. That is, the part of the downstream portion which bends when the steering device rotates relative to the body frame is different from the part of the downstream portion which bends when the right front fork and left front fork extend and contract. This can conveniently inhibit the second flexible portion from bending in a complex way, and can conveniently inhibit the second flexible portion from bending to a large extent. Consequently, the restrictions imposed by the second flexible portion on the other members located adjacent the second flexible portion can be inhibited conveniently. Similarly, the third flexible portion can conveniently be inhibited from bending in a complex way, and the third flexible portion can conveniently be inhibited from bending to a large extent. Consequently, the restrictions imposed by the third flexible portion on the other members located adjacent the third flexible portion can be inhibited conveniently.

According to the straddled vehicle, as described above, the primary piping and secondary piping can be arranged appropriately while inhibiting the restrictions imposed on the other members.

In the above straddled vehicle, it is preferred that the upstream portion is located equal with or higher than the middle imaginary plane. An area equal with or higher than the middle imaginary plane is outside the first area. Consequently, the upstream portion can conveniently be located outside the first area.

In the above straddled vehicle, it is preferred that the second flexible portion is located equal with or higher than the middle imaginary plane. The second flexible portion can conveniently be located outside the first area.

In the above straddled vehicle, it is preferred that the master cylinder is located outside the first area; the first holding member is located outside the first area; the second holding member is located outside the first area; the third holding member is located outside the first area; the brake caliper is located outside the first area; the second holding member is located equal with or lower than the top imaginary plane; the third holding member is located equal with or lower than the top imaginary plane; and the brake caliper is located equal with or lower than the bottom imaginary plane. Since the master cylinder and the first holding member are located outside the first area, respectively, the upstream portion can conveniently be located outside the first area. Since the second holding member, third holding member, and brake caliper are located outside the first area, respectively, the downstream portion can conveniently be located outside the first area. Since the second holding member and third holding member are located equal with or lower than the top imaginary plane, respectively, and the brake caliper is located lower than the bottom imaginary plane, the downstream portion can conveniently be located equal with or lower than the top imaginary plane.

In the above straddled vehicle, it is preferred that the master cylinder is located higher than the top imaginary plane; the first holding member is located equal with or higher than the middle imaginary plane; the second holding member is located equal with or higher than the middle imaginary plane; and the third holding member is located equal with or higher than the middle imaginary plane. Since the master cylinder is located higher than the top imaginary plane, and the first holding member is located equal with or higher than the middle imaginary plane, the upstream portion can conveniently be located equal with or higher than the middle imaginary plane. Since the second holding member and third holding member are located equal with or higher than the middle imaginary plane, respectively, the second flexible portion can conveniently be located equal with or higher than the middle imaginary plane.

In the above straddled vehicle, it is preferred that a second area is set to an area which is, in a front view of the vehicle, lower than the under bracket, higher than an upper end of the front wheel, more leftward than the right front fork, and more rightward than the left front fork; when the steering device is in a neutral position relative to the body frame, the upstream portion is located outside the second area; and when the steering device is in the neutral position, the downstream portion is located outside the second area. When the steering device is in the neutral position, the upstream portion and downstream portion are located outside the second area, respectively. This can conveniently inhibit the restrictions imposed on the other members. In particular, it can conveniently inhibit the restrictions imposed by at least one of the upstream portion and downstream portion on the other members located in the second area.

In the above straddled vehicle, it is preferred that, when the steering device is in the neutral position, the master cylinder is located outside the second area; when the steering device is in the neutral position, the first holding member is located outside the second area; when the steering device is in the neutral position, the second holding member is located outside the second area; when the steering device is in the neutral position, the third holding member is located outside the second area; and when the steering device is in the neutral position, the brake caliper is located outside the second area. When the steering device is in the neutral position, the master cylinder and first holding member are located outside the second area, respectively. Consequently, when the steering device is in the neutral position, the upstream portion can conveniently be located outside the second area. When the steering device is in the neutral position, the second holding member, third holding member, and brake caliper are located outside the second area, respectively. Consequently, when the steering device is in the neutral position, the downstream portion can conveniently be located outside the second area.

In the above straddled vehicle, it is preferred that a top area is set to an area higher than the upper bracket in the front view of the vehicle; a middle area is set to an area equal with or lower than the upper bracket and equal with or higher than the under bracket in the front view of the vehicle; a bottom area is set to an area equal with or lower than the upper end of the front wheel in the front view of the vehicle; a right outer area is set to an area equal with or more rightward than the right front fork in the front view of the vehicle; a left outer area is set to an area equal with or more leftward than the left front fork in the front view of the vehicle; when the steering device is in the neutral position, the upstream portion is located in at least one of the top area, the middle area, the right outer area, and the left outer area; and when the steering device is in the neutral position, the downstream portion is located in at least one of the middle area, the bottom area, the right outer area, and the left outer area. When the steering device is in the neutral position, the upstream portion is located in at least one of the top area, middle area, right outer area, and left outer area. Consequently, when the steering device is in the neutral position, the upstream portion can conveniently be located outside the second area. When the steering device is in the neutral position, the downstream portion is located in at least one of the middle area, bottom area, right outer area, and left outer area. Consequently, when the steering device is in the neutral position, the downstream portion can conveniently be located outside the second area.

In the above straddled vehicle, it is preferred that, when the steering device is in the neutral position, the master cylinder is located in at least one of the top area, the right outer area, and the left outer area; when the steering device is in the neutral position, the first holding member is located in at least one of the middle area, the right outer area, and the left outer area; when the steering device is in the neutral position, the second holding member is located in at least one of the middle area, the right outer area, and the left outer area; when the steering device is in the neutral position, the third holding member is located in at least one of the middle area, the right outer area, and the left outer area; and when the steering device is in the neutral position, the brake caliper is located in at least one of the bottom area, the right outer area, and the left outer area. When the steering device is in the neutral position, the master cylinder is located in at least one of the top area, right outer area, and left outer area, and the first holding member is located in at least one of the middle area, right outer area, and left outer area. Consequently, when the steering device is in the neutral position, the upstream portion can conveniently be located in at least one of the top area, middle area, right outer area, and left outer area. When the steering device is in the neutral position, the second holding member and third holding member are located in at least one of the middle area, right outer area, and left outer area, respectively, and the brake caliper is located in at least one of the bottom area, right outer area, and left outer area. Consequently, when the steering device is in the neutral position, the downstream portion can conveniently be located in at least one of the middle area, bottom area, right outer area, and left outer area.

In the above straddled vehicle, it is preferred that the second flexible portion is located in a position equal with or higher than the third holding member; and the most downstream portion is located in a position equal with or lower than the third holding member. The second flexible portion is located in a position substantially higher than the most downstream portion. This can effectively prevent restrictions imposed on the same other members by both the second flexible portion and most downstream portion. Thus, the restrictions imposed by the downstream portion on the other members located adjacent the downstream portion can be inhibited effectively.

In the above straddled vehicle, the second holding member is located in a position higher than the third holding member; and the brake caliper is located in a position lower than the third holding member. Since the second holding member is located in a position higher than the third holding member, the second flexible portion can conveniently be located in a position equal with or higher than the third holding member. Since the brake caliper is located in a position lower than the third holding member, the most downstream portion can conveniently be located in a position equal with or lower than the third holding member.

In the above straddled vehicle, it is preferred that a right area is set to an area more rightward than the center axis of the head tube in the front view of the vehicle; a left area is set to an area more leftward than the center axis of the head tube in the front view of the vehicle; when the steering device is in the neutral position relative to the body frame, the master cylinder is located in one of the right area and the left area; the first holding member is located in the other of the right area and the left area; the first flexible portion includes a first front overlapping portion located more forward than the head tube, the first front overlapping portion overlapping the head tube in the front view of the vehicle; the second holding member is located in the one of the right area and the left area; when the steering device is in the neutral position, the third holding member is located in the other of the right area and the left area; the second flexible portion includes a second front overlapping portion located more forward than the head tube, the second front overlapping portion overlapping the head tube in the front view of the vehicle; and when the steering device is in the neutral position, the brake caliper is located in the other of the right area and the left area.

When the steering device is in the neutral position, both the master cylinder and second holding member are located in one of the right area and left area, and the first holding member, third holding member, and brake caliper are all located in the other of the right area and left area.

For example, when the steering device is in the neutral position, both the master cylinder and second holding member are located in the right area, and the first holding member, third holding member, and brake caliper are all located in the left area. In this case, with a rightward rotation of the steering device relative to the body frame, the first flexible portion moves rearward and the second flexible portion forward. With a leftward rotation of the steering device relative to the body frame, the first flexible portion moves forward, and the second flexible portion rearward. Thus, the first flexible portion and second flexible portion move in mutually different directions with the right and left rotations of the steering device relative to the body frame. Consequently, whichever of the right direction and left direction the steering device may rotate relative to the body frame, the first flexible portion and second flexible portion can conveniently be prevented from interfering with each other. Further, the brake caliper and third holding member are both located in the left area. The most downstream portion can therefore more conveniently be located outside the first area.

For example, when the steering device is in the neutral position, both the master cylinder and second holding member are located in the left area, and the first holding member, third holding member, and brake caliper are all located in the right area. In this case, with the rightward rotation of the steering device relative to the body frame, the first flexible portion moves forward and the second flexible portion rearward. With the leftward rotation of the steering device relative to the body frame, the first flexible portion moves rearward, and the second flexible portion forward. Thus, the first flexible portion and second flexible portion move in mutually different directions with the right and left rotations of the steering device relative to the body frame. Consequently, whichever of the right direction and left direction the steering device may rotate relative to the body frame, the first flexible portion and second flexible portion can conveniently be prevented from interfering with each other. Further, the brake caliper and third holding member are both located in the right area. The most downstream portion can therefore more conveniently be located outside the first area.

In the above straddled vehicle, it is preferred that, when the steering device is in the neutral position, the first front overlapping portion of the first flexible portion does not overlap the second front overlapping portion of the second flexible portion in the front view of the vehicle. This can conveniently prevent a mutual interference between the first front overlapping portion of the first flexible portion and the second front overlapping portion of the second flexible portion.

In the above straddled vehicle, it is preferred that a right area is set to an area more rightward than the center axis of the head tube in the front view of the vehicle; a left area is set to an area more leftward than the center axis of the head tube in the front view of the vehicle; when the steering device is in the neutral position relative to the body frame, the master cylinder is located in one of the right area and the left area; the first holding member is located in the other of the right area and the left area; the first flexible portion includes a first front overlapping portion located more forward than the head tube, the first front overlapping portion overlapping the head tube in the front view of the vehicle; the second holding member is located in the one of the right area and the left area; when the steering device is in the neutral position, the third holding member is located in the one of the right area and the left area; when the steering device is in the neutral position, the second flexible portion is located in the one of the right area and the left area; and when the steering device is in the neutral position, the brake caliper is located in the one of the right area and the left area.

When the steering device is in the neutral position, the master cylinder, second holding member, third holding member, brake caliper, and second flexible member are all located in one of the right area and the left area, and the first holding member is located in the other of the right area and the left area.

For example, when the steering device is in the neutral position, the master cylinder, second holding member, third holding member, brake caliper, and second flexible portion are all located in the right area, and the first holding member is located in the left area. In this case, when the steering device rotates relative to the body frame, the first flexible portion mainly bends in the area more forward than the head tube, and the second flexible portion mainly bends in the right area. That is, bending of the first flexible portion mainly occurs in the area more forward than the head tube, and bending of the second flexible portion mainly occurs in the right area. This can conveniently prevent the first flexible portion and second flexible portion from interfering with each other. Further, the brake caliper and third holding member are both located in the right area. The most downstream portion can therefore more conveniently be located outside the first area.

For example, when the steering device is in the neutral position, the master cylinder, second holding member, third holding member, brake caliper, and second flexible portion are all located in the left area, and the first holding member is located in the right area. In this case, when the steering device rotates relative to the body frame, the first flexible portion mainly bends in the area more forward than the head tube, and the second flexible portion mainly bends in the left area. That is, bending of the first flexible portion mainly occurs in the area more forward than the head tube, and bending of the second flexible portion mainly occurs in the left area. This can conveniently prevent the first flexible portion and second flexible portion from interfering with each other. Further, the brake caliper and third holding member are both located in the left area. The most downstream portion can therefore more conveniently be located outside the first area.

In the above straddled vehicle, it is preferred that the first flexible portion includes a second end held to be immovable relative to the steering device; the first flexible portion includes a first portion extending from the first end of the first flexible portion to the first front overlapping portion of the first flexible portion; and a second portion extending from the first front overlapping portion of the first flexible portion to the second end of the first flexible portion; the first portion of the first flexible portion is located in the other of the right area and the left area; when the steering device is in the neutral position, the second portion of the first flexible portion is located more forward than a front edge of the head tube in the side view of the vehicle; and when the steering device is in the neutral position, the second flexible portion is, in the side view of the vehicle, located more rearward than at least one of the front edge of the head tube, a front edge of the right front fork, and a front edge of the left front fork.

For example, when the steering device is in the neutral position, the master cylinder, second holding member, third holding member, brake caliper, and second flexible portion are all located in the right area, and the first holding member and the first portion of the first flexible portion are both located in the left area. This can more conveniently prevent the first portion of the first flexible portion from interfering with the second flexible portion. Further, when the steering device is in the neutral position, the second portion of the first flexible portion is located more forward than the front edge of the head tube in the side view of the vehicle, and the second flexible portion is located more rearward than at least one of the front edge of the head tube, the front edge of the right front fork and the front edge of the left front fork in the side view of the vehicle. This can more conveniently prevent the second portion of the first flexible portion from interfering with the second flexible portion. Thus, the entire first flexible portion can more conveniently be prevented from interfering with the second flexible portion.

For example, when the steering device is in the neutral position, the master cylinder, second holding member, third holding member, brake caliper, and second flexible portion are all located in the left area, and the first holding member and the first portion of the first flexible portion are both located in the right area. This can more conveniently prevent the first portion of the first flexible portion from interfering with the second flexible portion. Further, when the steering device is in the neutral position, the second portion of the first flexible portion is located more forward than the front edge of the head tube in the side view of the vehicle, and the second flexible portion is located more rearward than at least one of the front edge of the head tube, the front edge of the right front fork and the front edge of the left front fork in the side view of the vehicle. This can more conveniently prevent the second portion of the first flexible portion from interfering with the second flexible portion. Thus, the entire first flexible portion can more conveniently be prevented from interfering with the second flexible portion.

This specification also discloses the following invention relating to the straddled vehicle.

(1) The straddled vehicle described above, wherein:
   the right front fork includes:
      an upper right tube supported by the upper bracket and the under bracket; and
      a lower right tube connected to the upper right tube to be movable relative to the upper right tube;
   the left front fork includes:
      an upper left tube supported by the upper bracket and the under bracket; and
      a lower left tube connected to the upper left tube to be movable relative to the upper left tube; and
   the third holding member is supported by at least one of the steering shaft, the upper bracket, the under bracket, the upper right tube, and the upper left tube.

According to (1) above, extension and contraction of the right front fork correspond to movements of the lower right tube relative to the upper right tube, and extension and contraction of the left front fork correspond to movements of the lower left tube relative to the upper left tube. Consequently, the extension and contraction of the right front fork and left front fork do not cause movements of the steering shaft, upper bracket, under bracket, upper right tube, or upper left tube to move relative to the body frame. Here, the second holding member is supported by the body frame, and the third holding member is supported by at least one of the steering shaft, upper brackct, under bracket, upper right tube, and upper left tube. Consequently, the extension and contraction of the right front fork and left front fork do not cause the third holding member to move relative to the second holding member. The second flexible portion can conveniently be prevented from bending due to the extension and contraction of the right front fork and left front fork.

(2) The straddled vehicle described above, wherein the third flexible portion includes:
a first end held to be immovable relative to the steering shaft, the upper bracket, the under bracket, the upper right tube, and the upper left tube; and
a second end held to be immovable relative to at least one of the lower right tube, the lower left tube, and the front axle,

According to (2) above, the rotation of the steering device relative to the body frame causes an integral rotation of the steering shaft, upper bracket, under bracket, upper right tube, upper left tube, lower right tube, lower left tube, and front axle. Consequently, the second end of the third flexible portion does not move relative to the first end of the third flexible portion due to the rotation of the steering device relative to the body frame. This can conveniently prevent bending of the third flexible portion due to the rotation of the steering device relative to the body frame.

(3) The straddled vehicle described above, wherein the first flexible portion includes a second end held immovable relative to the steering shaft, the upper bracket, the under bracket, the upper right tube, and the upper left tube.

According to (3) above, the second end of the first flexible portion does not move relative to the first end of the first flexible portion due to the extension and construction of the right front fork and the left front fork. The first flexible portion can therefore conveniently be prevented from bending due to the extension and contraction of the right front fork and left front fork.

(4) The straddled vehicle described above, wherein:
an opening in the right area is set to an opening demarcated by the head tube, the right front fork, the upper bracket, and the under bracket;
an opening in the left area is set to an opening demarcated by the head tube, the left front fork, the upper bracket, and the under bracket;
the first holding member is located in the other of the right area and the left area;
the second holding member is located in the one of the right area or the left area;
the first flexible portion includes a first portion extending from the first end of the first flexible portion to the first front overlapping portion of the first flexible portion;
the first portion of the first flexible portion passes through the opening in the other of the right area and the left area;
the second flexible portion includes a first end held by the second holding member;
the second flexible portion includes a first portion extending from the first end of the second flexible portion to the second front overlapping portion of the second flexible portion; and
the first portion of the second flexible portion passes through the opening in the one of the right area and the left area.

For example, when the steering device is in the neutral position, the master cylinder and second holding member are both located in the right area, and the first holding member, third holding member, and brake caliper are all located in the left area. In this case, the first portion of the first flexible portion passes through the opening in the left area, and the first portion of the second flexible portion passes through the opening in the right area. Here, since the first holding member is located in the left area and the first portion of the first flexible portion passes through the opening in the left area when the steering device is in the neutral position, the first portion of the first flexible portion can be shortened conveniently. Further, since the second holding member is located in the right area and the first portion of the second flexible portion passes through the opening in the right area when the steering device is in the neutral position, the first portion of the second flexible portion can be shortened conveniently.

For example, when the steering device is in the neutral position, the master cylinder and second holding member are both located in the left area, and the first holding member, third holding member, and brake caliper are all located in the right area. In this case, the first portion of the first flexible portion passes through the opening in the right area, and the first portion of the second flexible portion passes through the opening in the left area. Here, since the first holding member is located in the right area and the first portion of the first flexible portion passes through the opening in the right area when the steering device is in the neutral position, the first portion of the first flexible portion can be shortened conveniently. Further, since the second holding member is located in the left area and the first portion of the second flexible portion passes through the opening in the left area when the steering device is in the neutral position, the first portion of the second flexible portion can be shortened conveniently.

(5) The straddled vehicle described above, wherein:
when the steering device is in the neutral position, the third holding member is located in the other of the right area and the left area;
the second flexible portion includes a second end held by the third holding member;
the second flexible portion includes a second portion extending from the second front overlapping portion of the second flexible portion to the second end of the second flexible portion; and
the second portion of the second flexible portion passes through the opening in the other of the right area and the left area.

For example, when the steering device is in the neutral position, the master cylinder and second holding member are both located in the right area, and the first holding member, third holding member, and brake caliper are all located in the left area. In this case, the second portion of the second flexible portion passes through the opening in the left area. Here, when the steering device is in the neutral position, the third holding member is located in the left area, and the second portion of the second flexible portion passes through the opening in the left area. Consequently, the second portion of the second flexible portion can be shortened conveniently.

For example, when the steering device is in the neutral position, the master cylinder and second holding member are both located in the left area, and the first holding member, third holding member, and brake caliper are all located in the right area. In this case, the second portion of the second flexible portion passes through the opening in the right area. Here, when the steering device is in the neutral position, the third holding member is located in the right area, and the second portion of the second flexible portion passes through the opening in the right area. Consequently, the second portion of the second flexible portion can be shortened conveniently.

(6) The straddled vehicle described above, wherein:
the opening in the right area is set to an opening demarcated by the head tube, the right front fork, the upper bracket, and the under bracket;
the opening in the left area is set to an opening demarcated by the head tube, the left front fork, the upper bracket, and the under bracket;
the first holding member is located in the other of the right area and the left area;
the first flexible portion includes a first front overlapping portion located more forward than the head tube, the first front overlapping portion overlapping the head tube in the front view of the vehicle;
the first flexible portion includes a first portion extending from the first end of the first flexible portion to the first front overlapping portion of the first flexible portion;
the first portion of the first flexible portion passes through the opening in the other of the right area and the left area; and
the second flexible portion passes through neither the opening in the right area nor the opening in the left area.

For example, when the steering device is in the neutral position, the master cylinder, second holding member, third holding member, brake caliper, and second flexible portion are all located in the right area, and the first holding member is located in the left area. In this case, the first portion of the first flexible portion passes through the opening in the left area, and the second flexible portion passes through neither the opening in the right area nor the opening in the left area. Here, since the first holding member is located in the left area and the first portion of the first flexible portion passes through the opening in the left area when the steering device is in the neutral position, the first portion of the first flexible portion can be shortened conveniently. Further, since the second flexible portion passes through neither the opening in the right area nor the opening in the left area, the second flexible portion can be shortened conveniently.

For example, when the steering device is in the neutral position, the master cylinder, second holding member, third holding member, brake caliper, and second flexible portion are all located in the left area, and the first holding member is located in the right area. In this case, the first portion of the first flexible portion passes through the opening in the right area, and the second flexible portion passes through neither the opening in the right area nor the opening in the left area. Here, since the first holding member is located in the right area and the first portion of the first flexible portion passes through the opening in the right area when the steering device is in the neutral position, the first portion of the first flexible portion can be shortened conveniently. Further, since the second flexible portion passes through neither the opening in the right area nor the opening in the left area, the second flexible portion can be shortened conveniently.

For the purpose of illustrating the invention, there are shown in the drawings several forms which are presently preferred, it being understood, however, that the invention is not limited to the precise arrangement and instrumentalities shown.
Fig. 1 is a left side view of a straddled vehicle according to a first embodiment;
Fig. 2 is a left side view of the straddled vehicle;
Fig. 3 is a plan view of the straddled vehicle;
Fig. 4 is a front view of the straddled vehicle;
Fig. 5A is a schematic view of primary piping;
Fig. 5B is a schematic view of secondary piping;
Fig. 6 is a left side view of a portion of the straddled vehicle;
Fig. 7A is a front view of the straddled vehicle;
Fig. 7B is a left side view of a portion of the straddled vehicle;
Fig. 8A is a front view of a portion of the straddled vehicle;
Fig. 8B is a front view of the portion of the straddled vehicle;
Fig. 9A is a perspective view of the straddled vehicle seen in a first direction;
Fig. 9B is a left side view of the portion of the straddled vehicle;
Fig. 10A is a perspective view of a portion of the straddled vehicle seen in the direction of the center axis of a head tube;
Fig. 10B is a perspective view of the straddled vehicle seen in the first direction;
Fig. 11A is a perspective view of the portion of the straddled vehicle seen in the direction of the center axis of the head tube;
Fig. 11B is a perspective view of the straddled vehicle seen in the first direction;
Fig. 12 is a front view of a portion of the straddled vehicle;
Fig. 13 is a left side view of a portion of the straddled vehicle;
Fig. 14 is a right side view of a portion of the straddled vehicle;
Figs. 15A, 15B, and 15C are each a perspective view of the straddled vehicle seen in the direction of the center axis of the head tube;
Fig. 16 is a front view of a portion of a straddled vehicle in a second embodiment;
Fig. 17 is a schematic view of secondary piping;
Fig. 18 is a left side view of a portion of the straddled vehicle; and
Fig. 19 is a right side view of the portion of the straddled vehicle.

A straddled vehicle according to this invention will be described hereinafter with reference to the drawings.

### [First Embodiment]

### 1. Outline construction of the straddled vehicle

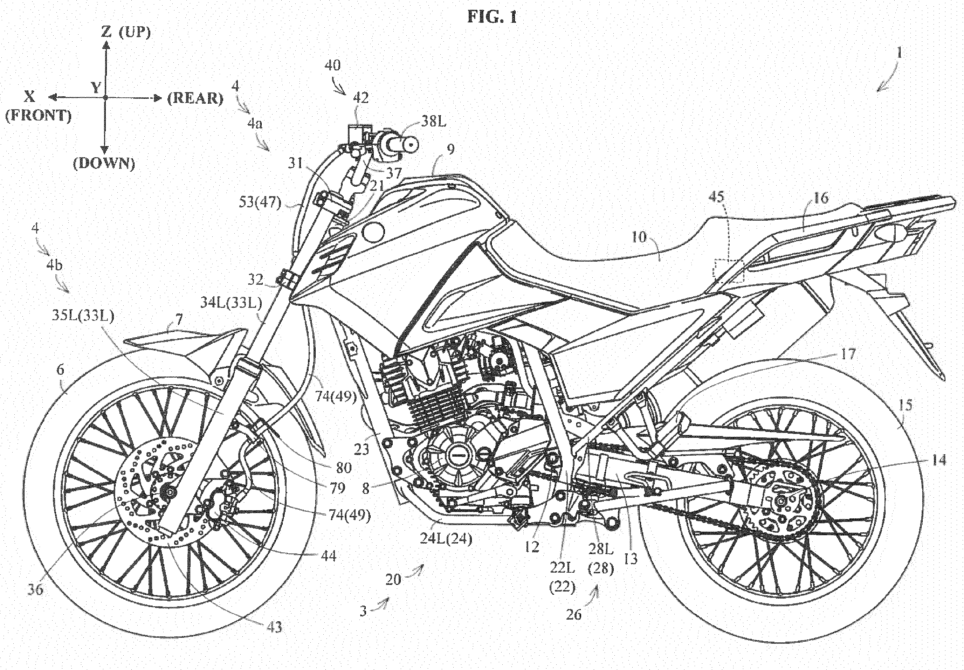

Fig. 1 is a left side view of a straddled vehicle according to a first embodiment.

Fig. 1 shows a longitudinal direction X, a transverse direction Y, and an up-down direction Z of a straddled vehicle 1. The longitudinal direction X, transverse direction Y, and up-down direction Z are defined with reference to a rider mounted on the straddled vehicle 1. The rider is a person who is mounted on the straddled vehicle 1 and controls the straddled vehicle 1. The longitudinal direction X, transverse direction Y, and up-down direction Z are perpendicular to one another.

The terms "forward", "rearward", "upward", "downward", rightward", and "leftward", respectively, mean "forward", "rearward", "upward", "downward", rightward", and "leftward" as seen from the rider mounted on the straddled vehicle 1. In this specification, unless otherwise specified, "forward" and "rearward" include not only directions parallel to the longitudinal direction X but also directions close to the longitudinal direction X. The directions close to the longitudinal direction X are, for example, directions at angles not exceeding 45 degrees to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. Fig. 1 shows, by way of reference, forward, rearward, upward, downward, rightward, and leftward as appropriate.

It is to be understood that, in this specification, various expressions describing arrangements have the following meanings, respectively. The following description will be made taking the transverse direction Y for example, and the same applies to the longitudinal direction X and the up-down direction Z.

The expression "member A is located more rightward / leftward than member B" provides a position of member A relative to member B in the transverse direction Y, and does not provide a position of member A relative to member B in the longitudinal direction X or the up-down direction Z. With this expression, member A may, or may not, overlap member B in a side view of the vehicle.

The expression "member A is located rightward / leftward of member B" without reference to a looking direction provides a position of member A relative to member B in the transverse direction Y, a position of member A relative to member B in longitudinal direction X, and a position of member A relative to member B in the up-down direction Z. This expression means that member A is located more rightward / leftward than member B, with at least part of member A overlapping at least part of member B in a side view of the vehicle.

The expression "member A is located rightward / leftward of member B in a plan view of the vehicle" provides a position of member A relative to member B in the transverse direction Y, and a position of member A relative to member B in the longitudinal direction X, and does not provide a position of member A relative to member B in the up-down direction Z. This expression means that member A is located more rightward / leftward than member B, with the front end of member A located more forward than the rear end of member B, and with the rear end of member A located more rearward than the front end of member B.

The expression "member A is located rightward / leftward of member B in a front view of the vehicle" provides a position of member A relative to member B in the transverse direction Y, and a position of member A relative to member B in the up-down direction Z, and does not provide a position of member A relative to member B in the longitudinal direction X. This expression means that member A is located more rightward / leftward than member B, with the upper end of member A located higher than the lower end of member B, and the lower end of member A located lower than the upper end of member B.

The straddled vehicle 1 is a dual purpose vehicle, for example. The straddled vehicle 1 is also called a dual-sport motorcycle.

The straddled vehicle 1 has a body frame 3, a steering device 4, and a front wheel 6. The steering device 4 is rotatably supported by the body frame 3. The front wheel 6 is supported by the steering device 4. With a rotation of the steering device 4 relative to the body frame 3, the direction of the front wheel 6 changes relative to the body frame 3 to change the course of the straddled vehicle 1.

In Fig. 1, the steering device 4 is in the neutral position relative to the body frame 3. When the steering device 4 is in the neutral position, the straddled vehicle 1 travels straight forward parallel to the longitudinal direction X.

The straddled vehicle 1 has a front fender 7. The front fender 7 is located above the front wheel 6. Though not shown, at least part of the front fender 7 overlaps the front wheel 6 in a plan view of the straddled vehicle 1 (hereinafter referred to as "in the plan view of the vehicle" where appropriate). The front fender 7 is supported by the steering device 4.

The straddled vehicle 1 has an engine 8, a fuel tank 9, and a seat 10. The engine 8 is located in a position lower than the fuel tank 9 and seat 10. The fuel tank 9 is located more forward than the seat 10 in a side view of the straddled vehicle 1 (hereinafter referred to as "in the side view of the vehicle" where appropriate). At least part of the fuel tank 9 is located in a position higher than the seat 10. The engine 8, fuel tank 9, and seat 10 are supported by the body frame 3, respectively.

The straddled vehicle 1 has a pivot shaft 12, a swing arm 13, a rear axle 14, and a rear wheel 15. The pivot shaft 12 is located more rearward than the fuel tank 9 in the side view of the vehicle. The pivot shaft 12 is located in a position lower than the fuel tank 9 and seat 10. The pivot shaft 12 is supported by the body frame 3. The swing arm 13 is supported by the pivot shaft 12. Consequently, the swing arm 13 is supported by the body frame 3. The swing arm 13 is swingable about the pivot shaft 12 relative to the body frame 3. The swing arm 13 extends rearward from the pivot shaft 12. The rear axle 14 is supported by a rear portion of the swing arm 13. The rear wheel 15 is supported by the rear axle 14. Consequently, the rear wheel 15 is supported by the swing arm 13. With swinging of the swing arm 13 relative to the body frame 3, the rear axle 14 and rear wheel 15 move upward and downward relative to the body frame 3, respectively. Further, the rear wheel 15 is rotatable about the rear axle 14 relative to the swing arm 13.

The straddled vehicle 1 has a transmission mechanism not shown. The transmission mechanism transmits power generated by the engine 8 to the rear wheel 15 to rotate the rear wheel 15 about the rear axle 14.

The straddled vehicle 1 has grab bars 16 for grabbing by a fellow passenger, and tandem steps 17 for supporting the fellow passenger's feet. The fellow passenger is a person who travels with the rider on the straddled vehicle 1, but does not control the straddled vehicle 1. At least part of the grab bars 16 overlaps the seat 10 in the side view of the vehicle. The tandem steps 17 are located in positions lower than the seat 10 and grab bars 16. The tandem steps 17 are located more rearward than the pivot shaft 12 and more forward than the rear axle 14 in the side view of the vehicle. The tandem steps 17 are also called rear footrests,

The rider of the straddled vehicle 1 sits straddling the seat 10. The rider puts on a knee grip. The knee grip is a holding of part of the straddled vehicle 1 between the rider's legs. For example, the rider holds at least either the body frame 3 or the fuel tank 9 between their legs. The fellow passenger on the straddled vehicle 1 sits straddling the seat 10 behind the rider. The fellow passenger grabs the grab bars 16. The fellow passenger puts their feet on the tandem steps 17.

### 2. Body frame

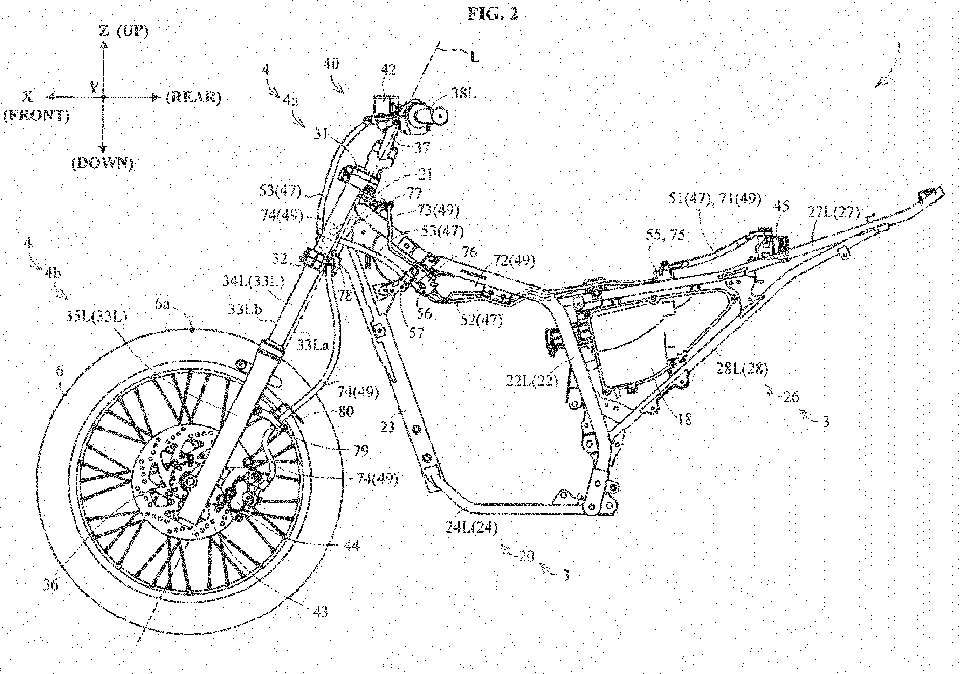

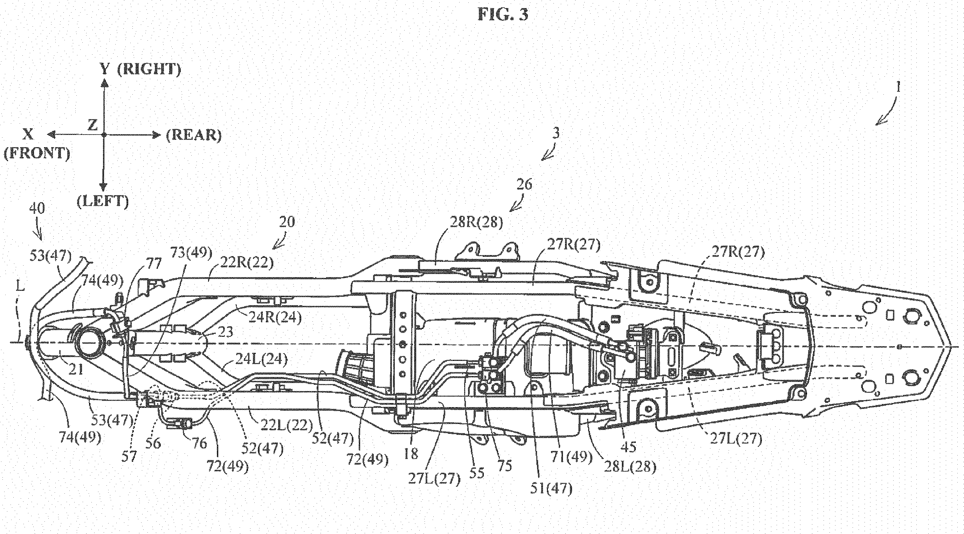

Fig. 2 is a left side view of the straddled vehicle. Fig. 3 is a plan view of the straddled vehicle. Figs. 2 and 3 omit illustration of certain members included in the straddled vehicle, respectively.

The body frame 3 has a front frame 20 and a rear frame 26. The front frame 20 is located in a front part of the body frame 3. The rear frame 26 is located in a rear part of the body frame 3. The rear frame 26 is connected to a rear part of the front frame 20.

The front frame 20 has a head tube 21. The head tube 21 is located at a front end of the front frame 20. The head tube 21 has a through-hole centering on a center axis L thereof. The center axis L is an imaginary line extending forward and downward in the side view of the vehicle.

The front frame 20 has a main frame 22. The main frame 22 has a right main frame 22R and a left main frame 22L. The left main frame 22L is connected to the head tube 21. The left main frame 22L extends rearward and downward from the head tube 21 in the side view of the vehicle. The right main frame 22R is located more rightward than the left main frame 22L. The right main frame 22R has the same construction and shape as the left main frame 22L except for being symmetric. The right main frame 22R overlaps the left main frame 22L in the side view of the vehicle.

The front frame 20 has a down frame 23. The down frame 23 is connected to the head tube 21. The down frame 23 extends rearward and downward from the head tube 21. The down frame 23 is located below the main frame 22 in the side view of the vehicle.

The front frame 20 has a lower frame 24. The lower frame 24 has a right lower frame 24R and a left lower frame 24L. The left lower frame 24L is connected to a lower part of the down frame 23. The left lower frame 24L extends rearward from the lower part of the down frame 23. The left lower frame 24L is connected to a rear part of the left main frame 22L. The right lower frame 24R is located more rightward than the left lower frame 24L. The right lower frame 24R has the same construction and shape as the left lower frame 24L except for being symmetric. The right lower frame 24R overlaps the left lower frame 24L in the side view of the vehicle.

The rear frame 26 has a seat frame 27. The seat frame 27 has a right seat frame 27R and a left seat frame 27L. The left seat frame 27L is connected to the left main frame 22L. The left seat frame 27L extends rearward from the left main frame 22L. The right seat frame 27R is located more rightward than the left seat frame 27L. The right seat frame 27R has the same construction and shape as the left seat frame 27L except for being symmetric. The right seat frame 27R overlaps the left seat frame 27L in the side view of the vehicle.

The rear frame 11 has a back stay 28. The back stay 28 has a right back stay 28R and a left back stay 28L. The left back stay 28L is located below the seat frame 27 in the side view of the vehicle. The left back stay 28L has a front part thereof connected to the left main frame 22L. The left back stay 28L extends rearward and upward from the left main frame 22L. The left back stay 28L has a rear part thereof connected to the left seat frame 27L. The right back stay 28R is located more rightward than the left back stay 28L. The right back stay 28R has the same construction and shape as the left back stay 28L except for being symmetric. The right back stay 28R overlaps the left back stay 28L in the side view of the vehicle.

The engine 8, fuel tank 9, seat 10, and pivot shaft 12 are arranged more rearward than the head tube 21 in the side view of the vehicle, respectively. The front frame 20 supports the engine 8, fuel tank 9, and pivot shaft 12. Specifically, the main frame 22, down frame 23, and lower frame 24, respectively, support the engine 8. The main frame 22 supports the fuel tank 9 and pivot shaft 12. The rear frame 26 (specifically, the seat frame 27) supports the seat 10.

The straddled vehicle 1 has an air cleaner 18. The air cleaner 18 is located more rearward than the engine 8 and fuel tank 9 in the side view of the vehicle. The air cleaner 18 is located in a position lower than the fuel tank 9 and seat 10. At least part of the air cleaner 18 is located, in the side view of the vehicle, in a region demarcated by the main frame 22, seat frame 27, and back stay 28. The air cleaner 18 is supported by at least one of the main frame 22, seat frame 27, and back stay 28.

### 3. Steering device

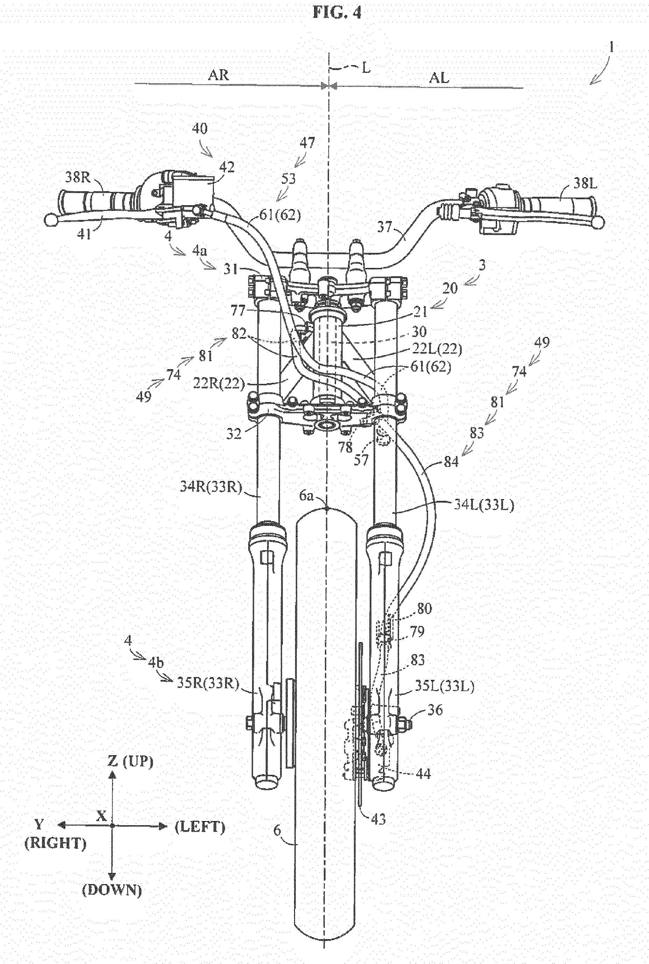

Fig. 4 is a front view of the straddled vehicle. Fig. 4 omits illustration of certain members included in the straddled vehicle. Fig. 4 shows the steering device 4 in the neutral position.

The steering device 4 has a steering shaft 30, an upper bracket 31, and an under bracket 32. The steering shaft 30 is located in the through-hole of the head tube 21. The steering shaft 30 is supported by the head tube 21 to be rotatable about the center axis L of the head tube 21. The center axis L extends in the up-down direction Z in the front view of the straddled vehicle 1 (hereinafter referred to as "in the front view of the vehicle" where appropriate). The upper bracket 31 is supported by the steering shaft 30. The upper bracket 31 is connected to an upper part of the steering shaft 30. The upper bracket 31 is located adjacent an upper end of the head tube 21. The under bracket 32 is supported by the steering shaft 30. The under bracket 32 is connected to a lower part of the steering shaft 30. The under bracket 32 is located adjacent a lower end of the head tube 21. The under bracket 32 is located in a position lower than the upper bracket 31. The under bracket 32 is located in a position higher than the front wheel 6 and front fender 7 (see Fig. 1).

The steering device 4 has a right front fork 33R and a left front fork 33L. The right front fork 33R and left front fork 33L extend in directions substantially parallel to the center axis L of the head tube 21, respectively. The right front fork 33R and left front fork 33L are supported by the upper bracket 31 and under bracket 32, respectively. Each of the right front fork 33R and left front fork 33L is extendible and contractible.

When the steering device 4 is in the neutral position, the right front fork 33R is located more rightward than the left front fork 33L in the front view of the vehicle. When the steering device 4 is not in the neutral position also, the right front fork 33R may be located more rightward than the left front fork 33L in the front view of the vehicle. That is, the above positional relationship holds at least when the steering device 4 is in the neutral position. This is the same also in the following description. When the steering device 4 is in the neutral position, the right front fork 33R is located more rightward than the head tube 21 in the front view of the vehicle. When the steering device 4 is in the neutral position, the left front fork 33L is located more leftward than the head tube 21 in the front view of the vehicle.

Reference is made to Fig. 2. When the steering device 4 is in the neutral position, the left front fork 33L overlaps the right front fork 33R in the side view of the vehicle. When the steering device 4 is in the neutral position, the left front fork 33L and right front fork 33R overlap part of the head tube 21 in the side view of the vehicle, respectively.

Reference is made to Fig. 4. The right front fork 33R has an upper right tube 34R and a lower right tube 35R. The left front fork 33L has an upper left tube 34L and a lower left tube 35L. The upper right tube 34R and upper left tube 34L are supported by the upper bracket 31 and under bracket 32, respectively. The lower right tube 35R and lower left tube 35L are arranged in positions lower than the under bracket 32, respectively. The lower right tube 35R is connected to the upper right tube 34R. The lower right tube 35R extends downward and forward from the upper right tube 34R. The lower right tube 35R is movable relative to the upper right tube 34R. Movements of the lower right tube 35R relative to the upper right tube 34R correspond to extension and contraction of the right front fork 33R. The lower left tube 35L is connected to the upper left tube 34L. The lower left tube 35L extends downward and forward from the upper left tube 34L. The lower left tube 35L is movable relative to the upper left tube 34L. Movements of the lower left tube 35L relative to the upper left tube 34L correspond to extension and contraction of the left front fork 33L.

The steering device 4 has a front axle 36. The front axle 36 is supported by the right front fork 33R and left front fork 33L. The front axle 36 is supported by the lower right tube 35R and lower left tube 35L. The front axle 36 is located in a position lower than the under bracket 32, upper right tube 34R, and upper left tube 34L. When the steering device 4 is in the neutral position, the front axle 36 extends in a direction parallel to the transverse direction Y. The front axle 36 supports the front wheel 6. The front wheel 6 is rotatable about the front axle 36 relative to the lower right tube 35R and lower left tube 35L.

The steering device 4 has a handlebar 37, a right grip 38R, and a left grip 38L. The handlebar 37 is supported by the upper bracket 31. The handlebar 37 is located in a position higher than the upper bracket 31. The right grip 38R is attached to a first end of the handlebar 37. The left grip 38L is attached to a second end of the handlebar 37. The rider of the straddled vehicle 1 grasps the right grip 38R and left grip 38L to operate the handlebar 37. In response to operation of the handlebar 37, the steering device 4 rotates about the center axis L relative to the body frame 3.

The steering shaft 30, upper bracket 31, under bracket 32, upper right tube 34R, upper left tube 34L, and handlebar 37 are fixedly connected together. There occurs no change in relative positions of the steering shaft 30, upper bracket 31, under bracket 32, upper right tube 34R, upper left tube 34L, and handlebar 37. The steering shaft 30, upper bracket 31, under bracket 32, upper right tube 34R, upper left tube 34L, and handlebar 37 will collectively be called hereinafter the "upper device 4a" where appropriate. The lower right tube 35R, lower left tube 35L, and front axle 36 will collectively be called hereinafter the "lower device 4b" where appropriate.

When the right front fork 33R and left front fork 33L are extended and contracted, the lower device 4b moves relative to the upper device 4a. The upper device 4a does not move relative to the body frame 3 due to the extension and contraction of the right front fork 33R and left front fork 33L.

### 4. Outline construction of brake system

Reference is made to Fig. 4. The straddled vehicle 1 has a brake system 40. The brake system 40 has a brake lever 41 and a master cylinder 42. The brake lever 41 and master cylinder 42 are supported by the steering device 4, respectively. The brake lever 41 and master cylinder 42 are supported by the handlebar 37, respectively. The brake lever 41 and master cylinder 42 are arranged adjacent the right grip 38R, respectively. The master cylinder 42 is immovable relative to the upper device 4a. The rider on the straddled vehicle 1 operates the brake lever 41. In response to operation of the brake lever 41, the master cylinder 42 generates a hydraulic pressure of brake fluid.

Reference is made to Figs. 1, 2, and 4. The brake system 40 has a brake disc 43 and a brake caliper 44. The brake disc 43 is fixedly connected to the front wheel 6. The brake disc 43 is rotatable with the front wheel 6 about the front axle 36. The brake caliper 44 is supported by the steering device 4. The brake caliper 44 is supported by the lower left tube 35L. The brake caliper 44 is immovable relative to the lower device 4b. The brake caliper 44 is hydraulically operable. The brake caliper 44, with the hydraulic pressure of the brake fluid, brakes the rotation of the front wheel 6 about the front axle 36. More particularly, the brake caliper 44 applies resistance (specifically, frictional force) to the brake disc 43 (i.e. the front wheel 6) for braking the rotation of the front wheel 6. That is, the brake caliper 44 brakes the front wheel 6.

Reference is made to Fig. 2. The brake system 40 has a hydraulic unit 45, primary piping 47, and secondary piping 49. The hydraulic unit 45 is supported by the body frame 3. The hydraulic unit 45 is supported by the rear frame 26 (specifically, the seat frame 27). The hydraulic unit 45 is immovable relative to the body frame 3. The primary piping 47 and secondary piping 49 are brake lines, respectively. The primary piping 47 connects the hydraulic unit 45 and master cylinder 42 to provide communication therebetween. The primary piping 47 inputs to the hydraulic unit 45 the hydraulic pressure of the brake fluid generated by the master cylinder 42. The hydraulic unit 45 regulates the hydraulic pressure of the brake fluid. Specifically, the hydraulic unit 45 regulates the hydraulic pressure of the brake fluid generated by the master cylinder 42. For example, the hydraulic unit 45 regulates the hydraulic pressure of the brake fluid to prevent a lock tendency of the front wheel 6. The secondary piping 49 connects the hydraulic unit 45 and brake caliper 44 to provide communication therebetween. The secondary piping 49 outputs the hydraulic pressure of the brake fluid regulated by the hydraulic unit 45 to the brake caliper 44. Consequently, the brake caliper 44 brakes the front wheel 6 in response to the hydraulic pressure of the brake fluid regulated by the hydraulic unit 45.

Reference is made to Figs. 2 and 3. The primary piping 47 includes pipes 51, 52 and 53. The pipes 51, 52 and 53 are connected in this order in series. The pipe 51 is connected to the hydraulic unit 45. The pipe 53 is connected to the master cylinder 42. The pipes 51 and 53 have flexibility, respectively. The pipes 51 and 53 are rubber pipes, for example. The pipe 52 does not have flexibility. The pipe 52 is a metal pipe, for example.

The brake system 40 includes a joint 55 and a joint 56. The joint 55 connects the pipe 51 and pipe 52. The joint 56 connects the pipe 52 and pipe 53. Consequently, the joint 55 and joint 56 hold the primary piping 47, respectively. The joint 55 and joint 56 are supported by the body frame 3, respectively. The joint 55 is supported by the rear frame 26 (specifically, the left seat frame 27L). The joint 56 is supported by the front frame 20 (specifically, the left main frame 22L). The joint 55 and joint 56 are immovable relative to the body frame 3, respectively.

The joint 55 has a box shape. Though not shown, the joint 55 has a first port, a second port, and a flow path. The first port connects to the pipe 51. The second port connects to the pipe 52. The flow path is formed inside the joint 55. The flow path provides communication between the first port and second port.

The joint 56 has a pipe shape. The joint 56 has a first end and a second end. The first end of the joint 56 connects to the pipe 52. The second end of the joint 56 connects to the pipe 53.

The brake system 40 has a clamp 57. The clamp 57 holds the primary piping 47. The clamp 57 is supported by the body frame 3. The clamp 57 is supported by the front frame 20 (specifically, the left main frame 22L). The clamp 57 is immovable relative to the body frame 3.

The clamp 57 has a hollow portion slightly larger than an outside diameter of the pipe 53. The clamp 57 is ring-shaped, for example. The pipe 53 is located in the hollow portion of the clamp 57. The clamp 57 is in tight contact with an outer circumferential surface of the pipe 53. Consequently, the clamp 57 holds the pipe 53.

The secondary piping 49 includes pipes 71, 72, 73 and 74. The pipes 71, 72, 73 and 74 are connected in this order in series. The pipe 71 is connected to the hydraulic unit 45. The pipe 74 is connected to the brake caliper 44. The pipes 71 and 74 have flexibility, respectively. The pipes 71 and 74 are rubber pipes, for example. The pipes 72 and 73 do not have flexibility. The pipes 72 and 73 are metal pipes, for example.

The brake system 40 includes joints 75, 76 and 77. The joint 75 connects the pipe 71 and pipe 72. The joint 76 connects the pipe 72 and pipe 73. The joint 77 connects the pipe 73 and pipe 74. Consequently, the joints 75-77 hold the secondary piping 49, respectively. The joints 75-77 are supported by the body frame 3, respectively. The joint 75 is supported by the rear frame 26 (specifically, the left seat frame 27L). The joint 76 is supported by the front frame 20 (specifically, the left main frame 22L). The joint 77 is supported by the front frame 20 (specifically, the right main frame 22R). The joints 75, 76 and 77 are immovable relative to the body frame 3, respectively. The joints 75, 76 and 77 have substantially the same construction as the joint 55.

Reference is made to Fig. 2. The brake system 40 has clamps 78 and 79. The clamps 78 and 79 hold the secondary piping 49 (specifically, the pipe 74), respectively. The clamps 78 and 79 are supported by the steering device 4, respectively. The clamps 78 and 79 are immovable relative to the steering device 4, respectively. More particularly, the clamp 78 is supported by the under bracket 32. The clamp 78 is immovable relative to the upper device 4a. The clamp 79 is supported by the lower left tube 35L. The clamp 79 is immovable relative to the lower device 4b. The clamps 78 and 79 have substantially the same construction as the clamp 57.

The brake system 40 has a guide 80. The guide 80 guides the secondary piping 49. The guide 80 is supported by the steering device 4. The guide 80 is supported by the lower left tube 35L.

The guide 80 has a hollow portion sufficiently larger than an outside diameter of the pipe 74. The guide 80 is ring-shaped, for example. The pipe 74 is located in the hollow portion of the guide 80. The guide 80 guides the pipe 74 so that the pipe 74 pass through the hollow portion of the guide 80. In other words, the guide 80 restrains the pipe 74 from coming off the hollow portion of the guide 80. As long as the pipe 74 passes through the hollow portion of the guide 80, the pipe 74 is movable relative to the steering device 4.

### 5. Detailed constructions of the primary piping and secondary piping

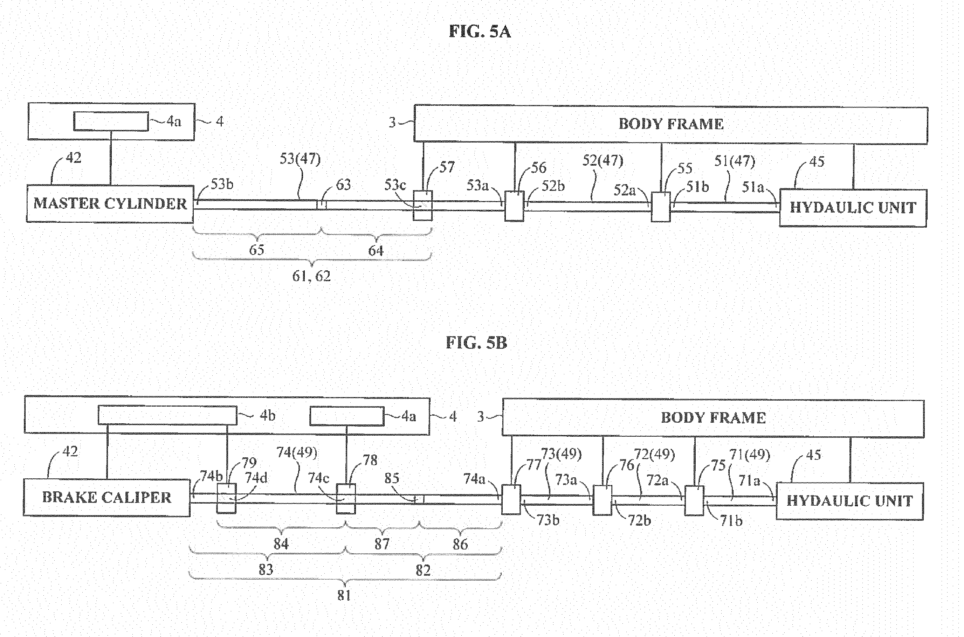

Fig. 5A is a view schematically showing the construction of the primary piping.

The primary piping 47 includes an upstream portion 61. The upstream portion 61 extends from the clamp 57 to the master cylinder 42. The clamp 57 holds the primary piping 47 to be immovable relative to the body frame 3, in a position nearest to the master cylinder 42 on a path of the primary piping 47. The clamp 57 is an example of the first holding member in this invention.

The upstream portion 61 includes a first flexible portion 62. The first flexible portion 62 extends from the clamp 57 to the master cylinder 42. That is, the first flexible portion 62 corresponds to the entire upstream portion 61. The master cylinder 42 holds the upstream portion 61 to be immovable relative to the steering device 4, in a position nearest to the clamp 57 on a path of the upstream portion 61. The first flexible portion 62 bends when the steering device 4 rotates relative to the body frame 3.

The rotation of the steering device 4 relative to the body frame 3 does not cause bending of the part excluding the upstream portion 61 of the primary piping 47. The extension and contraction of the right front fork 33R and left front fork 33L do not cause bending of the part excluding the upstream portion 61 of the primary piping 47.

The upstream portion 61 and first flexible portion 62 will be described in detail hereinafter.

The upstream portion 61 includes a first end and a second end. The second end of the upstream portion 61 is a site held by the master cylinder 42. The first end of the upstream portion 61 is a site held to be immovable relative to the body frame 3. More strictly, the first end of the upstream portion 61 is a site nearest to the second end of the upstream portion 61 on the path of the primary piping 47, of the sites of the primary piping 47 held to be immovable relative to the body frame 3.

The first flexible portion 62 includes a first end and a second end. The first end of the first flexible portion 62 is a first end of the upstream portion 61. The second end of the first flexible portion 62 is a site held to be immovable relative to the steering device 4. More strictly, the second end of the first flexible portion 62 is a site nearest to the first end of the first flexible portion 62 on the path of the upstream portion 61, of the sites of the upstream portion 61 held to be immovable relative to the steering device 4.

The pipe 51 includes a first end 5 1a connected to the hydraulic unit 45 and a second end 51b connected to the joint 55. The pipe 52 includes a first end 52a connected to the joint 55 and a second end 52b connected to the joint 56. The pipe 53 includes a first end 53a connected to the joint 56, a second end 53b connected to the master cylinder 42, and a held site 53c held by the clamp 57. The held site 53c is located on the path of the pipe 53 between the first end 53a and second end 53b.

Since the site held by the master cylinder 42 is the second end 53b, the second end of the upstream portion 61 is the second end 53b of the pipe 53. The sites of the primary piping 47 held to be immovable relative to the body frame 3 are the first ends 51a, 52a, and 53a, the second ends 51b and 52b, and the held site 53c. Of the sites of the primary piping 47 held to be immovable relative to the body frame 3, the held site 53c is the nearest to the second end of the upstream portion 61 (that is, the second end 53b) on the path of the primary piping 47. The first end of the upstream portion 61 is therefore the held site 53c of the pipe 53.

Since the first end of the upstream portion 61 is the held site 53c, the first end of the first flexible portion 62 is the held site 53c of the pipe 53. That is, the first end of the first flexible portion 62 is held by the clamp 57. The site of the upstream portion 61 held to be immovable relative to the steering device 4 is only the second end 53b. Of the sites of the upstream portion 61 held to be immovable relative to the steering device 4, the second end 53b is the nearest to the first end of the first flexible portion 62 (that is, the held site 53c) on the path of the upstream portion 61. The second end of the first flexible portion 62 is therefore the second end 53b of the pipe 53.

The second end 53b is held to be immovable relative to the upper device 4a. Consequently, bending of the first flexible portion 62 (i.e. the upstream portion 61) is not caused by the extension and contraction of the right front fork 33R and left front fork 33L. Thus, the entire primary piping 47 does not bend as a result of the extension and contraction of the right front fork 33R and left front fork 33L.

Fig. 5B is a view schematically showing the construction of the secondary piping. The secondary piping 49 includes a downstream portion 81. The downstream portion 81 extends from the joint 77 to the brake caliper 44. The joint 77 holds the secondary piping 49 to be immovable relative to the body frame 3, in a position nearest to the brake caliper 44 on a path of the secondary piping 49. The rotation of the steering device relative to the body frame 3 does not cause bending of the part excluding the downstream portion 81 of the secondary piping 49. The extension and contraction of the right front fork 33R and left front fork 33L does not cause bending of the part excluding the downstream portion 81 of the secondary piping 49. The joint 77 is an example of the second holding member in this invention.

The downstream portion 81 includes a second flexible portion 82. The second flexible portion 82 extends from the joint 77 to the clamp 78. The clamp 78 holds the downstream portion 81 to be immovable relative to the steering device 4, in a position nearest to the joint 77 on a path of the downstream portion 81. The second flexible portion 82 bends when the steering device 4 rotates relative to the body frame 3. The clamp 78 is an example of the third holding member in this invention.

The downstream portion 81 includes a most downstream portion 83. The most downstream portion 83 extends from the clamp 78 to the brake caliper 44. The most downstream portion 83 is a part substantially excluding the second flexible portion 82 of the downstream portion 81. The most downstream portion 83 does not bend due to the rotation of the steering device 4 relative to the body frame 3. Consequently, the part of the secondary piping 49 excluding the second flexible portion 82 does not bend due to the rotation of the steering device 4 relative to the body frame 3.

The most downstream portion 83 includes a third flexible portion 84. The third flexible portion 84 extends from the clamp 78 to the clamp 79. That is, the third flexible portion 84 is a part of the most downstream portion 83. The clamp 78 holds the most downstream portion 83 to be immovable relative to the upper device 4a, in a position nearest to the brake caliper 44 on a path of the most downstream portion 83. The clamp 79 holds the most downstream portion 83 to be immovable relative to the lower device 4b, in a position nearest to the clamp 78 on the path of the most downstream portion 83. The third flexible portion 84 bends when the right front fork 33R and left front fork 33L extend and contract. The third flexible portion 84 is guided by the guide 80.

The downstream portion 81, second flexible portion 82, most downstream portion 83, and third flexible portion 84 will be described in detail hereinafter.

The downstream portion 81 includes a first end and a second end. The second end of the downstream portion 81 is a site held by the brake caliper 44. The first end of the downstream portion 81 is a site held to be immovable relative to the body frame 3. More strictly, the first end of the downstream portion 81 is a site nearest to the second end of the downstream portion 81 on the path of the secondary piping 49, of the sites of the secondary piping 49 held to be immovable relative to the body frame 3.

The second flexible portion 82 includes a first end and a second end. The first end of the second flexible portion 82 is the first end of the downstream portion 81. The second end of the second flexible portion 82 is a site held to be immovable relative to the steering device 4. More strictly, the second end of the second flexible portion 82 is a site nearest to the first end of the second flexible portion 82 on the path of downstream portion 81, of the sites of the downstream portion 81 held to be immovable relative to the steering device 4.

The most downstream portion 83 has a first end and a second end. The first end of the most downstream portion 83 is the second end of the second flexible portion 82. The second end of the most downstream portion 83 is the second end of the downstream portion 81.

The third flexible portion 84 has a first end and a second end. The first end of the third flexible portion 84 is a site held to be immovable relative to the upper device 4a. More strictly, the first end of the third flexible portion 84 is a site nearest to the second end of the most downstream portion 83 on a path of the most downstream portion 83, of the sites of the most downstream portion 83 held to be immovable relative to the upper device 4a. The second end of the third flexible portion 84 is a site held to be immovable relative to the lower device 4b. More strictly, the second end of the third flexible portion 84 is a site nearest to the first end of the third flexible portion 84 on the path of the most downstream portion 83, of the sites of the most downstream portion 83 held to be immovable relative to the lower device 4b.

The pipe 71 includes a first end 71a connected to the hydraulic unit 45, and a second end 71b connected to the joint 75. The pipe 72 includes a first end 72a connected to the joint 75, and a second end 72b connected to the joint 76. The pipe 73 includes a first end 73a connected to the joint 76, and a second end 73b connected to the joint 77. The pipe 74 includes a first end 74a connected to the joint 77, a second end 74b connected to the brake caliper 44, a held site 74c held by the clamp 78, and a held site 74d held by the clamp 79. The held sites 74c and 74d are located between the first end 74a and second end 74b on a path of the pipe 74, respectively. The held site 74c is, compared with the held site 74d, close to the first end 74a on the path of piping 74.

Since the site held by the brake caliper 44 is the second end 74b, the second end of the downstream portion 81 is the second end 74b of the pipe 74. The sites of the secondary piping 49 held to be immovable relative to the body frame 3 are the first ends 71a, 72a, 73a, and 74a and the second ends 71b, 72b, and 73b. Of the sites of the secondary piping 49 held to be immovable relative to the body frame 3, the first end 74a is the nearest to the brake caliper 44 (i.e. the second end 74b) on the path of the secondary piping 49. Consequently, the first end of the downstream portion 81 is the first end 74a of the pipe 74.

Since the first end of the downstream portion 81 is the first end 74a, the first end of the second flexible portion 82 is the first end 74a. That is, the first end of the second flexible portion 82 is held by the joint 77. The sites of the downstream portion 81 held to be immovable relative to the steering device 4 are the second end 74b and held sites 74c and 74d. Of the sites of the downstream portion 81 held to be immovable relative to the steering device 4, the held site 74c is the nearest to the first end of the downstream portion 81 (i.e. the first end 74a) on the path of the downstream portion 81. Consequently, the second end of the second flexible portion 82 is the held site 74c of the pipe 74. That is, the second end of the second flexible portion 82 is held by the clamp 78.

The second end of the second flexible portion 82 (i.e. the held site 74c) is held to be immovable relative to the upper device 4a. Consequently, the second flexible portion 82 does not bend due to the extension and contraction of the right front fork 33R and left front fork 33L.

Since the second end of the second flexible portion 82 is the held site 74c, the first end of the most downstream portion 83 is the held site 74c of the pipe 74. Since the second end of the downstream portion 81 is the second end 74b, the second end of the most downstream portion 83 is the second end 74b of the pipe 74.

The site of the most downstream portion 83 held to be immovable relative to the upper device 4a is only the held site 74c. Of the sites of the most downstream portion 83 held to be immovable relative to the upper device 4a, the held site 74c is the nearest to the second end of the most downstream portion 83 (i.e. the second end 74b) on the path of the most downstream portion 83. Consequently, the first end of the third flexible portion 84 is the held site 74c of the pipe 74. The sites of the most downstream portion 83 held to be immovable relative to the lower device 4b are the held site 74d and second end 74b. Of the sites of the most downstream portion 83 held to be immovable relative to the lower device 4b, the held site 74d is the nearest to the first end of the third flexible portion 84 (i.e. the held site 74c) on the path of the most downstream portion 83. Consequently, the second end of the third flexible portion 84 is the held site 74d of the pipe 74.

The part excluding the third flexible portion 84 of the most downstream portion 83 extends from the held site 74d to the second end 74b. The held site 74d and the second end 74b are held to be immovable relative to the lower device 4b, respectively. Consequently, the part excluding the third flexible portion 84 of the most downstream portion 83 does not bend due to the extension and contraction of the right front fork 33R and left front fork 33L. Thus, the part excluding the third flexible portion 84 of the secondary piping 49 does not bend due to the extension and contraction of the right front fork 33R and left front fork 33L.

### 6. Arrangement of the brake system (1)

An arrangement of the respective elements of the brake system 40 will be described. In the description of the arrangement of the elements of the brake system 40, "clamp 57" can be read as "held site 53c". This is because the position of the clamp 57 is substantially the same as the position of the held site 53c. Similarly, in the description of the arrangement, "master cylinder 42" can be read as "second end 53b". In the description of the arrangement, "joint 77" can be read as "first end 74a". In the description of the arrangement, "clamp 78" can be read as "held site 74c". In the description of the arrangement, "clamp 79" can be read as "held site 74d". In the description of the arrangement, "brake caliper 44" can be read as "second end 74b".

Reference is made to Fig. 1. The hydraulic unit 45 overlaps the seat 10 in the side view of the vehicle. The hydraulic unit 45 is located more rearward than the pivot shaft 12 in the side view of the vehicle. The hydraulic unit 45 is located more forward than the rear axle 14 in the side view of the vehicle.

Reference is made to Fig. 2. The hydraulic unit 45 is located more rearward than the head tube 21 in the side view of the vehicle. The hydraulic unit 45 includes a part overlapping the seat frame 27, and a part located in an area above the seat frame 27 in the side view of the vehicle. Fig. 2 schematically shows in hatches the part of the hydraulic unit 45 overlapping the seat frame 27 in the side view of the vehicle.

The hydraulic unit 45 is located more rearward than the steering device 4 in the side view of the vehicle. When the steering device 4 is in the neutral position, the hydraulic unit 45 is located in a position lower than the upper bracket 31. When the steering device 4 is in the neutral position, the hydraulic unit 45 is located in a position higher than the under bracket 32.

Reference is made to Fig. 3. The hydraulic unit 45 is located leftward of the right seat frame 27R, and rightward of the left seat frame 27L in the plan view of the vehicle.

Reference is made to Fig. 2. The clamp 57 is located more forward than the hydraulic unit 45 in the side view of the vehicle. The clamp 57 is located in a position lower than the hydraulic unit 45.

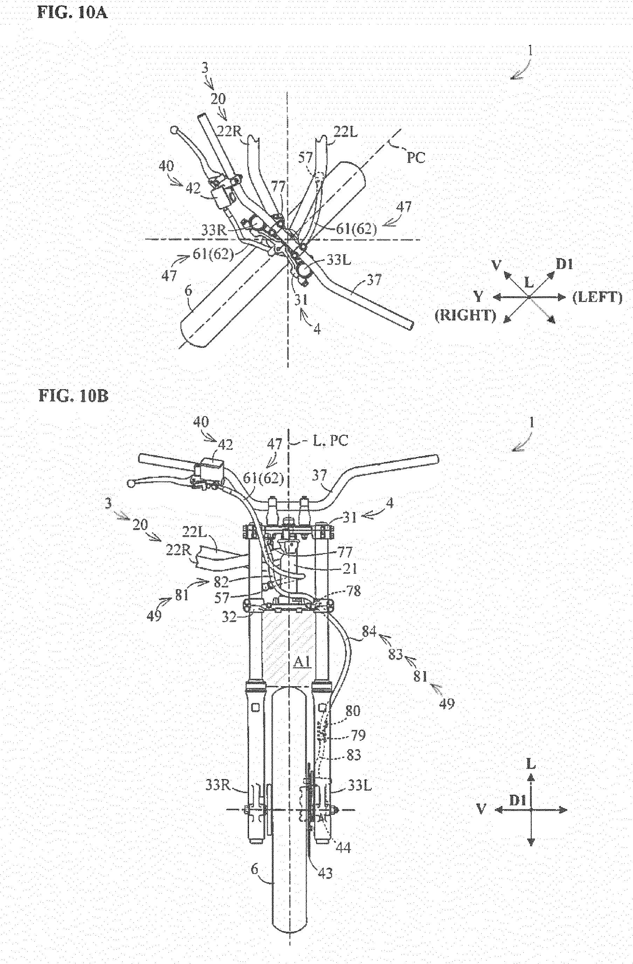

The clamp 57 is located more rearward than the head tube 21 in the side view of the vehicle. When the steering device 4 is in the neutral position, the clamp 57 is, in the side view of the vehicle, located more rearward than the upper bracket 31, under bracket 32, right front fork 33R, and left front fork 33L. The clamp 57 is located more rearward than a movable region of the left front fork 33L in the side view of the vehicle (see Figs. 10A, 11A, 15A, 15B, and 15C described hereinafter). Here, the "movable region of the left front fork 33L" is a range in which the left front fork 33L is movable with the rotation of the steering device 4 relative to the body frame 3. When the steering device 4 is in the neutral position, the clamp 57 is located in substantially the same height position as the under bracket 32.

When the steering device 4 is in the neutral position, the master cylinder 42 is located more forward than the clamp 57 in the side view of the vehicle. When the steering device 4 is in the neutral position, the master cylinder 42 is located in a position higher than the hydraulic unit 45.

The master cylinder 42 is located in a position higher than the upper bracket 31. The master cylinder 42 is located in substantially the same height position as the handlebar 37.

The joint 77 is located more forward than the clamp 57 in the side view of the vehicle. When the steering device 4 is in the neutral position, the position of the joint 77 in the longitudinal direction X is substantially equal to the position of the master cylinder 42 in the longitudinal direction X. The joint 77 is located in a position higher than the hydraulic unit 45. When the steering device 4 is in the neutral position, the joint 77 is located in a position lower than the master cylinder 42.

The joint 77 is located more rearward than the head tube 21 in the side view of the vehicle. When the steering device 4 is in the neutral position, the joint 77 is, in the side view of the vehicle, located more rearward than the upper bracket 31, under bracket 32, right front fork 33R, and left front fork 33L. When the steering device 4 is in the neutral position, the joint 77 is located in a position lower than the upper bracket 31. When the steering device 4 is in the neutral position, the joint 77 is located in a position higher than the under bracket 32.

When the steering device 4 is in the neutral position, the clamp 78 is located more forward than the master cylinder 42 and joint 77 in the side view of the vehicle. When the steering device 4 is in the neutral position, the clamp 78 is located in a position lower than the hydraulic unit 45, master cylinder 42, and joint 77. When the steering device 4 is in the neutral position, the clamp 78 is located in substantially the same height position as the clamp 57.

When the steering device 4 is in the neutral position, the clamp 79 and guide 80 are located more forward than the clamp 78 in the side view of the vehicle, respectively. When the steering device 4 is in the neutral position, the clamp 79 and guide 80 are located in positions lower than the clamp 57 and clamp 78, respectively. The guide 80 is located in a position higher than the clamp 79.

When the steering device 4 is in the neutral position, the brake disc 43 and brake caliper 44 are located more forward than the clamp 79 and guide 80 in the side view of the vehicle, respectively. When the steering device 4 is in the neutral position, the brake disc 43 and brake caliper 44 are located in positions lower than the clamp 79 and guide 80, respectively. When the steering device 4 is in the neutral position, part of the brake caliper 44 overlaps the brake disc 43 in the side view of the vehicle.

When the steering device 4 is in the neutral position, the clamp 78 overlaps the center axis L of the head tube 21 in the side view of the vehicle. When the steering device 4 is in the neutral position, the clamp 79, guide 80, and brake caliper 44 are located more rearward than the center axis L of the head tube 21 in the side view of the vehicle, respectively. When the steering device 4 is in the neutral position, the clamps 78 and 79, guide 80, and brake caliper 44 are, in the side view of the vehicle, located more rearward than a rear edge 33La of the left front fork 33L, respectively.

When the steering device 4 is in the neutral position, the clamp 78 is located in substantially the same height position as the under bracket 32. When the steering device 4 is in the neutral position, the clamp 79, guide 80, brake disc 43, and brake caliper 44 are located in positions lower than the under bracket 32, respectively. When the steering device 4 is in the neutral position, the clamp 79, guide 80, brake disc 43, and brake caliper 44 are located in positions lower than an upper end 6a of the front wheel 6, respectively. When the steering device 4 is in the neutral position, the clamp 79 and guide 80 are located in positions higher than the front axle 36, respectively. When the steering device 4 is in the neutral position, at least part of the brake disc 43 and at least part of the brake caliper 44 are located in the same height positions as the front axle 36, respectively.

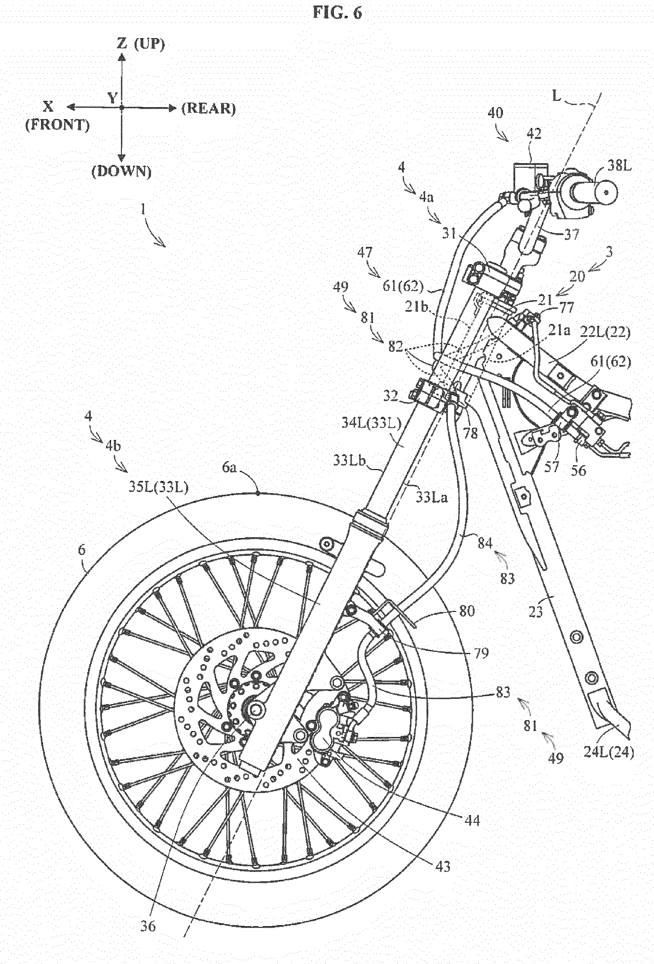

Fig. 6 is a left side view of a portion of the straddled vehicle. Fig. 6 shows the steering device 4 in the neutral position.

When the steering device 4 is in the neutral position, the upstream portion 61 (i.e. the first flexible portion 62) is located in a position described below. The upstream portion 61 is located in a position level with or higher than the clamp 57. The upstream portion 61 is located in a position level with or lower than the master cylinder 42. The upstream portion 61 is located equally forward with or more forward than the clamp 57 in the side view of the vehicle. The upstream portion 61 is curved to bulge forward in the side view of the vehicle. The upstream portion 61, in the side view of the vehicle, extends between an area more rearward than a rear edge 21a of the head tube 21 and an area more forward than a front edge 21b of the head tube 21. The upstream portion 61 crosses the rear edge 21a and front edge 21b of the head tube 21 in the side view of the vehicle. The upstream portion 61 includes a part overlapping the head tube 21 in the side view of the vehicle.

When the steering device 4 is in the neutral position, the downstream portion 81 is located in a position described below. The downstream portion 81 is located in a position equal with or lower than the joint 77. The entire secondary piping 49 is also located in a position equal with or lower than the joint 77 (see Fig. 2). The downstream portion 81 is located in a position equal with or higher than the brake caliper 44. The downstream portion 81 is located equal with or more forward than the joint 77 in the side view of the vehicle. The downstream portion 81 is located equally rearward with or more rearward than the brake caliper 44.

When the steering device 4 is in the neutral position, the second flexible portion 82 is located in a position described below. The second flexible portion 82 is located in a position equal with or lower than the joint 77. The second flexible portion 82 is located in a position equal with or higher than the clamp 78. The second flexible portion 82, in the side view of the vehicle, extends between the area more rearward than the rear edge 21a of the head tube 21 and the area more forward than the front edge 21b of the head tube 21. The second flexible portion 82 crosses the rear edge 21a and front edge 21b of the head tube 21 in the side view of the vehicle. The second flexible portion 82 crosses the rear edge 21a of the head tube 21 at one location in the side view of the vehicle. The second flexible portion 82 crosses the front edge 21b of the head tube 21 at two locations in the side view of the vehicle. The second flexible portion 82 includes a part overlapping the head tube 21 in the side view of the vehicle. The second flexible portion 82 includes a part located in an area more forward than a front edge 33Lb of the left front fork 33L.

When the steering device 4 is in the neutral position, the most downstream portion 83 is located in a position described below. The most downstream portion 83 is located in a position equal with or lower than the clamp 78. The most downstream portion 83 is located in a position equal with or higher than the brake caliper 44. The most downstream portion 83 is located more rearward than the rear edge 33La of the left front fork 33L in the side view of the vehicle.

The held site 74c held by the clamp 78 corresponds to a lower end of the second flexible portion 82, and also corresponds to an upper end of the most downstream portion 83. The most downstream portion 83 is therefore located in a position substantially lower than the second flexible portion 82.

When the steering device 4 is in the neutral position, the third flexible portion 84 is located in a position described below. The third flexible portion 84 is located in a position equal with or lower than the clamp 78. The third flexible portion 84 is located in a position equal with or higher than the clamp 79. The third flexible portion 84 is located equal with or more rearward than the clamp 79 in the side view of the vehicle. The third flexible portion 84 is curved to bulge rearward in the side view of the vehicle.

Reference is made to Fig. 4. A right area AR and a left area AL are defined as follows. The right area AR is an area more rightward than the center axis L of the head tube 21 in the front view of the vehicle. The left area AL is an area more leftward than the center axis L of the head tube 21 in the front view of the vehicle.

The clamp 57 is located in the left area AL. When the steering device 4 is in the neutral position, the clamp 57 overlaps the left front fork 33L in the front view of the vehicle.

When the steering device 4 is in the neutral position, the master cylinder 42 is located in the right area AR. When the steering device 4 is in the neutral position, the master cylinder 42 is located more rightward than the right front fork 33R in the front view of the vehicle. When the steering device 4 is in the neutral position, the master cylinder 42 is located more rightward than the clamp 57 in the front view of the vehicle.

The joint 77 is located in the right area AR. The joint 77 includes a part overlapping the head tube 21, and a part located more rightward than the head tube 21 in the front view of the vehicle (see Fig. 3 also). The joint 77 is located more rightward than the clamp 57 in the front view of the vehicle. When the steering device 4 is in the neutral position, the joint 77 is located more leftward than the right front fork 33R in the front view of the vehicle. When the steering device 4 is in the neutral position, the joint 77 is located more leftward than the master cylinder 42 in the front view of the vehicle.

When the steering device 4 is in the neutral position, the clamps 78 and 79, guide 80, brake disc 43, and brake caliper 44 are located in the left area AL, respectively. When the steering device 4 is in the neutral position, the clamp 78 overlaps the under bracket 32 and left front fork 33L in the front view of the vehicle. When the steering device 4 is in the neutral position, the clamp 78 is located in a position slightly higher than the clamp 57. When the steering device 4 is in the neutral position, the clamp 79 and guide 80 overlap the left front fork 33L in the front view of the vehicle, respectively. When the steering device 4 is in the neutral position, at least part of the brake caliper 44 overlaps the left front fork 33L in the front view of the vehicle. When the steering device 4 is in the neutral position, the clamps 78 and 79, guide 80, brake disc 43, and brake caliper 44 are located more leftward than the master cylinder 42 and joint 77 in the front view of the vehicle, respectively. When the steering device 4 is in the neutral position, the brake disc 43 and brake caliper 44 are located more leftward than the front wheel 6 in the front view of the vehicle, respectively.

When the steering device 4 is in the neutral position, the upstream portion 61 (i.e. the first flexible portion 62) is located in a position described below. The upstream portion 61 is located to range over the right area AR and left area AL. In the front view of the vehicle, the upstream portion 61 is located equally rightward with or more rightward than the clamp 57. In the front view of the vehicle, the upstream portion 61 is equally leftward with or more leftward than the master cylinder 42. The upstream portion 61 includes a part higher than the under bracket 32, a part lower than the under bracket 32, and a part overlapping the under bracket 32 in the front view of the vehicle. The part of the upstream portion 61 lower than the under bracket 32 wholly overlaps the left front fork 33L in the front view of the vehicle.

When the steering device 4 is in the neutral position, the downstream portion 81 is located in a position described below. The downstream portion 81 is located to range over the right area AR and left area AL. In the front view of the vehicle, the downstream portion 81 is equal with or more leftward than the joint 77. The downstream portion 81 is located in a position equal with or lower than the upper bracket 31. The downstream portion 81 includes a part higher than the under bracket 32, a part lower than the under bracket 32, and a part overlapping the under bracket 32 in the front view of the vehicle. The part of the downstream portion 81 lower than the under bracket 32 is wholly located equal with or more leftward than the left front fork 33L in the front view of the vehicle. In other words, the part of the downstream portion 81 lower than the under bracket 32 is, in the front view of the vehicle, wholly located in at least one of the area overlapping the left front fork 33L and the area more leftward than the left front fork 33L.

When the steering device 4 is in the neutral position, the second flexible portion 82 is located in a position described below. The second flexible portion 82 is located to range over the right area AR and left area AL. In the front view of the vehicle, the second flexible portion 82 is located equal with or more leftward than the joint 77. In the front view of the vehicle, the second flexible portion 82 is located equal with or more rightward than the clamp 78. The second flexible portion 82 is located in a position equal with or lower than the upper bracket 31, and equal with or higher than the under bracket 32. The second flexible portion 82 includes a part higher than the under bracket 32, and a part overlapping the under bracket 32 and left front fork 33L in the front view of the vehicle.

When the steering device 4 is in the neutral position, the most downstream portion 83 is located in a position described below. The most downstream portion 83 is located only in the left area AL. The most downstream portion 83 includes a part overlapping the under bracket 32 and a part lower than the under bracket 32 in the front view of the vehicle.

When the steering device 4 is in the neutral position, the third flexible portion 84 is located in a position described below. The third flexible portion 84 includes a part overlapping the under bracket 32 and a part lower than the under bracket 32 in the front view of the vehicle. The third flexible portion 84 extends to a position lower than the upper end 6a of the front wheel 6. The third flexible portion 84 is curved to bulge leftward in the front view of the vehicle. That is, the third flexible portion 84 is curved to bulge leftward in a position more leftward than the left front fork 33L in the front view of the vehicle.

When the steering device 4 is in the neutral position, the part of the most downstream portion 83 excluding the third flexible portion 84 is located in a position described below. The part of the most downstream portion 83 excluding the third flexible portion 84 is located in a position lower than the upper end 6a of the front wheel 6. The part of the most downstream portion 83 excluding the third flexible portion 84 wholly overlaps the left front fork 33L in the front view of the vehicle.

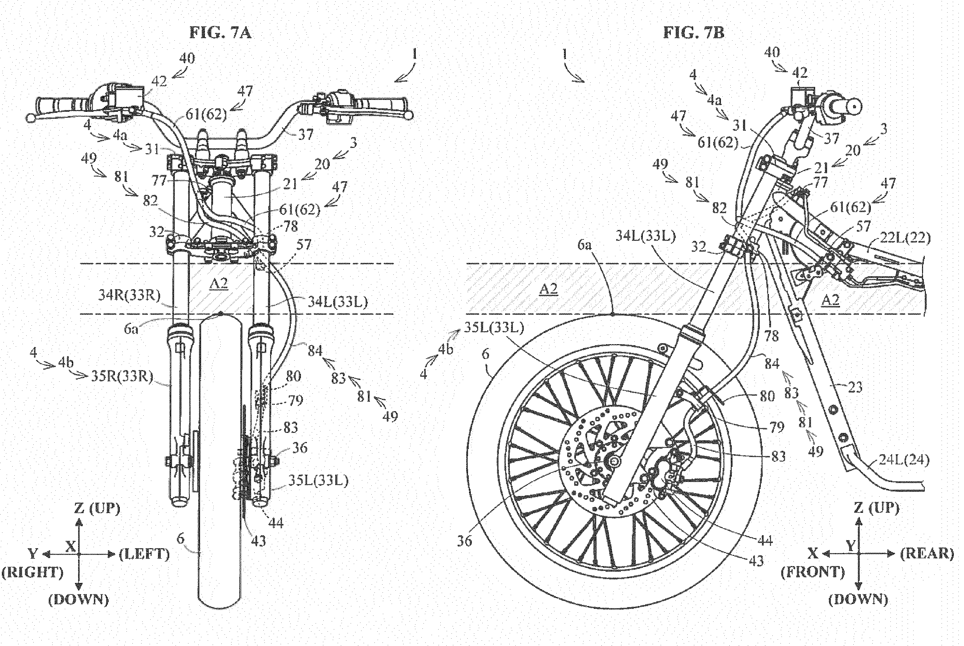

Fig. 7A is a front view of the straddled vehicle. Fig. 7B is a left side view of the straddled vehicle. Figs. 7A and 7B show the steering device 4 in the neutral position, respectively.

An area A2 is defined as follows. The area A2 is, in the front view of the vehicle, an area lower than the under bracket 32, higher than the upper end 6a of the front wheel 6, more leftward than the right front fork 33R, and more rightward than the left front fork 33L. More strictly, the area A2 is, in the front view of the vehicle, an area lower than the lower end of the under bracket 32, higher than the upper end 6a of the front wheel 6, more leftward than a left edge of the right front fork 33R, and more rightward than a right edge of the left front fork 33L. The area A2 is an example of the second area in this invention. The area A2 will hereinafter be called "second area A2" as appropriate. Figs. 7A and 7B schematically show the second area A2 in hatches, respectively. Though not shown, at least part of the front fender 7 is located in the second area A2.

When the steering device 4 is in the neutral position, the master cylinder 42 and clamp 57 are located outside the second area A2, respectively. When the steering device 4 is in the neutral position, the joint 77, clamps 78 and 79, guide 80, brake disc 43, and brake caliper 44 are located outside the second area A2, respectively.

When the steering device 4 is in the neutral position, the upstream portion 61 is located outside the second area A2. When the steering device 4 is in the neutral position, the downstream portion 81 is located outside the second area A2.

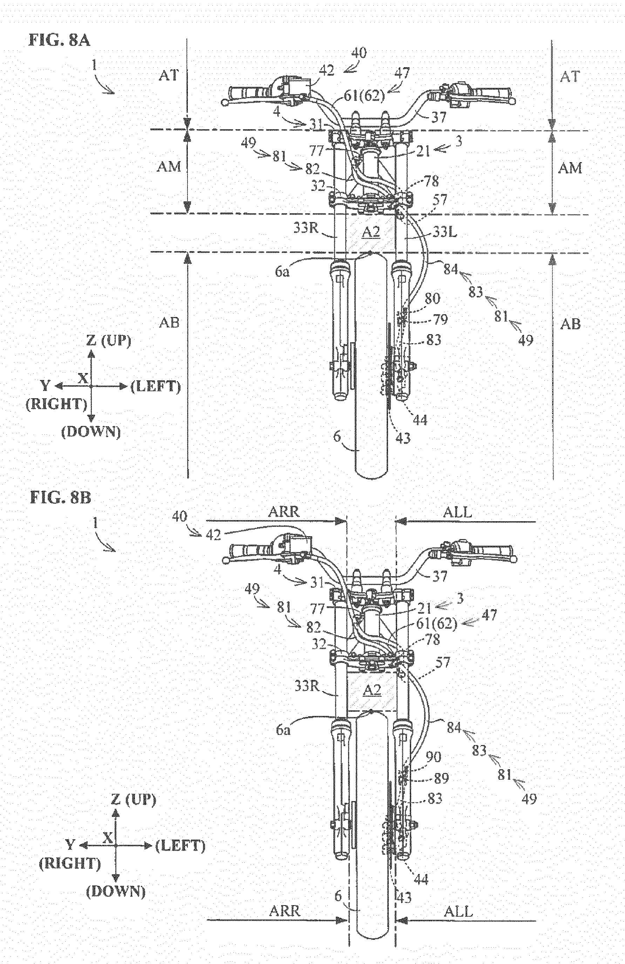

Fig. 8A is a front view of a portion of the straddled vehicle. Fig. 8A shows the steering device 4 in the neutral position.

A top area AT, a middle area AM, and a bottom area AB are defined as follows. The top area AT is an area higher than the upper bracket 31 in the front view of the vehicle. More strictly, the top area AT is an area higher than the upper end of the upper bracket 31 in the front view of the vehicle. The middle area AM is, in the front view of the vehicle, an area equal with or lower than the upper bracket 31 and equal with or higher than the under bracket 32. More strictly, the middle area AM is, in the front view of the vehicle, an area equal with or lower than the upper end of the upper bracket 31 and equal with or higher than the lower end of the under bracket 32. The middle area AM includes an area overlapping the upper bracket 31 and an area overlapping the under bracket 32 in the front view of the vehicle. The bottom area AB is an area equal with or lower than the upper end 6a of the front wheel 6 in the front view of the vehicle.

Fig. 8B is a front view of the portion of the straddled vehicle. Fig. 8B shows the steering device 4 in the neutral position.

A right outer area ARR and a left outer area ALL are defined as follows. In the front view of the vehicle, the right outer area ARR is an area equal with or more rightward than the right front fork 33R. The right outer area ARR includes an area overlapping the right front fork 33R in the front view of the vehicle. In the front view of the vehicle, the left outer area ALL is an area equal with or more leftward than the left front fork 33L. The left outer area ALL includes an area overlapping the left front fork 33L in the front view of the vehicle.

Reference is made to Figs. 8A and 8B. The top area AT, middle area AM, bottom area AB, right outer area ARR, and left outer area ALL are all located outside the second area A2. The right outer area ARR overlaps part of the top area AT, part of the middle area AM, and part of the bottom area AB. The left outer area ALL overlaps part of the top area AT, part of the middle area AM, and part of the bottom area AB.

When the steering device 4 is in the neutral position, the master cylinder 42 is located in the top area AT and right outer area ARR. When the steering device 4 is in the neutral position, the clamp 57 is located in the middle area AM and left outer area ALL.

When the steering device 4 is in the neutral position, the joint 77 is located in the middle area AM. When the steering device 4 is in the neutral position, the clamp 78 is located in the middle area AM and left outer area ALL. When the steering device 4 is in the neutral position, the clamp 79, guide 80, brake disc 43, and brake caliper 44 are located in the bottom area AB and left outer area ALL, respectively.

When the steering device 4 is in the neutral position, the upstream portion 61 is located in the top area AT, middle area AM, right outer area ARR, and left outer area ALL. When the steering device 4 is in the neutral position, the downstream portion 81 is located in the middle area AM, bottom area AB, and left outer area ALL.

When the steering device 4 is in the neutral position, the second flexible portion 82 is located in the middle area AM and left outer area ALL. When the steering device 4 is in the neutral position, the most downstream portion 83 and third flexible portion 84 are located in the middle area AM, bottom area AB, and left outer area ALL, respectively.

### 7. Arrangement of the brake system (2)

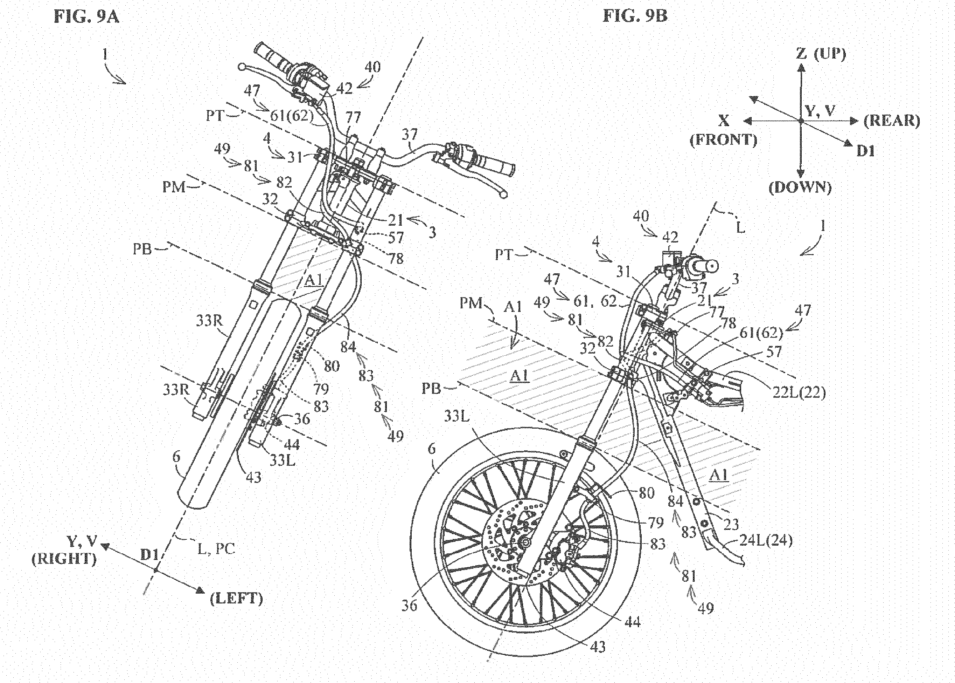

An arrangement of the respective elements of the brake system 40 will be described using the steering device 4 as reference. Fig. 9A is a perspective view of the straddled vehicle seen in a first direction D1. The first direction D1 crosses the center axis L of the head tube 21 at right angles, and crosses the front axle 36 at right angles. Fig. 9B is a left side view of the portion of the straddled vehicle. Figs. 9A and 9B show the steering device 4 in the neutral position, respectively.

A top imaginary plane PT, a middle imaginary plane PM, a bottom imaginary plane PB, and a first area A1 are defined as follows. The top imaginary plane PT is an imaginary plane perpendicular to the center axis L of the head tube 21, and in contact with an upper part of the upper bracket 31. The middle imaginary plane PM is an imaginary plane parallel to the top imaginary plane PT, and in contact with a lower part of the under bracket 32. The bottom imaginary plane PB is an imaginary plane parallel to the top imaginary plane PT, and in contact with an upper part of the front wheel 6. The first area A1 is, when the straddled vehicle 1 is seen in the first direction D1, an area demarcated by the middle imaginary plane PM, bottom imaginary plane PB, right front fork 33R, and left front fork 33L. Figs. 9A and 9B schematically show the first area A1 in hatches. Though not shown, at least part of the front fender 7 is located in the first area A1.

A direction parallel to the front axle 36 will be called the "front axle direction V". An imaginary plane which is perpendicular to the front axle direction V and includes the center axis L of the head tube 21 will be called the "center plane PC of the steering device 4". The front axle direction V and the center plane PC of the steering device 4 change relative to the body frame 3 with the rotation of the steering device 4 relative to the head tube 21, respectively. When the steering device 4 is in the neutral position, the front axle direction V is parallel to the transverse direction Y, and the transverse direction Y and the center plane PC of the steering device 4 cross each other at right angles. Of the front axle direction V, a direction toward the center plane PC of the steering device 4 will be called "inward". Of the front axle direction V, a direction away from the center plane PC of the steering device 4 will be called "outward". Unless otherwise specified, "inward" and "outward" include not only directions parallel to the front axle direction V but directions close to the front axle direction V.

The first area A1 corresponds to an area lower than the middle imaginary plane PM, higher than the bottom imaginary plane PB, more inward than the right front fork 33R, and more inward than the left front fork 33L. The rotation of the steering device 4 relative to the body frame 3 does not change the relative position between the steering device 4 and the first area A1. Similarly, the rotation of the steering device 4 relative to the body frame 3 does not change the relative position between the steering device 4, top imaginary plane PT, middle imaginary plane PM, and bottom imaginary plane PB.

The clamp 57 is located outside the first area A1. The clamp 57 is located equal with or higher than the middle imaginary plane PM. The clamp 57 is located equal with or lower than the top imaginary plane PT. The entire clamp 57 overlaps the left front fork 33L when the straddled vehicle 1 is seen in the first direction D1.

The master cylinder 42 is located outside the first area A1. The master cylinder 42 is located higher than the top imaginary plane PT. The master cylinder 42 is located more outward than the right front fork 33R when the straddled vehicle 1 is seen in the first direction D1.

The joint 77, clamps 78 and 79, guide 80, brake disc 43, and brake caliper 44 are located outside the first area A1, respectively. The joint 77, clamps 78 and 79, guide 80, brake disc 43, and brake caliper 44 are located equal with or lower than the top imaginary plane PT, respectively. The joint 77 and clamp 78 are located equal with or higher than the middle imaginary plane PM, respectively. The clamp 79, guide 80, brake disc 43, and brake caliper 44 are located equal with or lower than the bottom imaginary plane PB, respectively.

The joint 77, when the straddled vehicle 1 is seen in the first direction D1, includes a part overlapping the head tube 21, a part overlapping the upper bracket 31, and a part located more outward than the head tube 21 and more inward than the front fork 33R. The clamp 78 overlaps the under bracket 32 and left front fork 33L when the straddled vehicle 1 is seen in the first direction D1. The clamp 79 and guide 80 overlap the left front fork 33L, respectively, when the straddled vehicle 1 is seen in the first direction D1. The brake disc 43 is located more outward than the front wheel 6 and more inward than the left front fork 33L when the straddled vehicle 1 is seen in the first direction D1. At least part of the brake caliper 44 overlaps the left front fork 33L when the straddled vehicle 1 is seen in the first direction D1.

The upstream portion 61 (i.e. the first flexible portion 62) is located outside the first area A1. The upstream portion 61 is located equal with or higher than the middle imaginary plane PM. Thus, the upstream portion 61 is not located in the first area A1. That is, the entire upstream portion 61 is located outside the first area A1.

The downstream portion 81 is located outside the first area A1. The downstream portion 81 is equal with or lower than the top imaginary plane PT. The downstream portion 81 extends from a position higher than the first area A1 to a position lower than the first area A1 without passing through the first area A1. Specifically, the downstream portion 81 has a part located equal with or higher than the middle imaginary plane PM, a part located lower than the middle imaginary plane PM and higher than the bottom imaginary plane PB, and a part equal with or lower than the bottom imaginary plane PB. Here, the part of the downstream portion 81 located lower than the middle imaginary plane PM and higher than the bottom imaginary plane PB is, when the straddled vehicle 1 is seen in the first direction D1, located equally outward with or more outward than the left front fork 33L. Thus, the downstream portion 81 extends from the position higher than the first area A1 to the position lower than the first area A1, by passing through a position more outward than the first area A1. The downstream portion 81 is therefore not located in the first area A1. That is, the entire downstream portion 81 is located outside the first area A1.

The second flexible portion 82 is located equal with or higher than the middle imaginary plane PM. The most downstream portion 83 includes a part located equal with or higher than the middle imaginary plane PM, and a part located lower than the middle imaginary plane PM.

As seen from Figs. 9A and 9B, the second flexible portion 82 is located in a position substantially higher than the most downstream portion 83. The joint 77 is located in a position higher than the clamp 78. The clamp 79, guide 80, and brake caliper 44 are located in positions lower than the clamp 78, respectively.

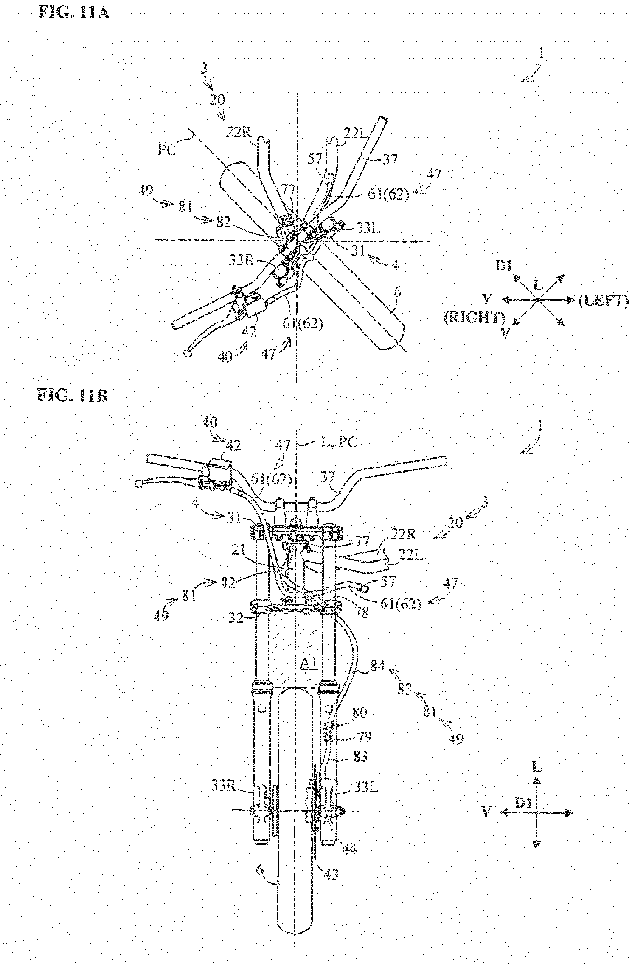

Figs. 10A and 10B show the steering device 4 in a right position. Figs. 11A and 11B show the steering device 4 in a left position. Figs. 10A and 11A are perspective views of a portion of the straddled vehicle seen in the direction of the center axis L of the head tube 21, respectively. Figs. 10B and 11B are perspective views of the straddled vehicle seen in the first direction D1, respectively.

The right position is a position of the steering device 4 having rotated rightward from neutral position relative to the head tube 21. When the steering device 4 is in the right position, the straddled vehicle 1 turns rightward and forward. The left position is a position of the steering device 4 having rotated leftward from neutral position relative to the head tube 21. When the steering device 4 is in the left position, the straddled vehicle 1 turns leftward and forward. Though not shown, when the steering device 4 is in the right position or left position, at least part of the front fender 7 is located in the first area A1.

Reference is made to Figs. 10A and 10B. When the steering device 4 is in the right position, the clamp 57 and joint 77 are located in different positions, respectively, from when the steering device 4 is in the neutral position. However, also when the steering device 4 is in the right position, the clamp 57 and joint 77 are located outside the first area A1, respectively. Also when the steering device 4 is in the right position, the clamp 57 and joint 77 are located equal with or lower than the top imaginary plane PT, and equal with or higher than the middle imaginary plane PM, respectively. When the steering device 4 is in the right position, the clamp 57 is, when the straddled vehicle 1 is seen in the first direction D1, located more outward than the head tube 21 and more inward than the right front fork 33R.

When the steering device 4 is in the right position, the master cylinder 42, clamps 78 and 79, guide 80, brake disc 43, and brake caliper 44, respectively, are located in the same positions as when the steering device 4 is in the neutral position. Consequently, also when the steering device 4 is in the right position, the master cylinder 42, clamps 78 and 79, guide 80, brake disc 43, and brake caliper 44 are located outside the first area A1, respectively.

When the steering device 4 is in the right position, the upstream portion 61 and second flexible portion 82 are located in different positions, respectively, from when the steering device 4 is in the neutral position. However, also when the steering device 4 is in the right position, the upstream portion 61 and second flexible portion 82 are located outside the first area A1, respectively. Also when the steering device 4 is in the right position, the upstream portion 61 and second flexible portion 82 are located equal with or higher than the middle imaginary plane PM, respectively.

When the steering device 4 is in the right position, the most downstream portion 83 is located in the same position as when the steering device 4 is in the neutral position. Consequently, also when the steering device 4 is in the right position, the downstream portion 81 is located outside the first area A1.

As seen from Fig. 10B, also when the steering device 4 is in the right position, the second flexible portion 82 is located in a position substantially higher than the most downstream portion 83. Also when the steering device 4 is in the right position, the joint 77 is located in a position higher than the clamp 78. Also when the steering device 4 is in the right position, the clamp 79, guide 80, and brake caliper 44 are located in positions lower than the clamp 78, respectively.

Reference is made to Figs. 11A and 11B. When the steering device 4 is in the left position, the clamp 57 and joint 77 are located in different positions, respectively, from when the steering device 4 is in the neutral position. However, also when the steering device 4 is in the left position, the clamp 57 and joint 77 are located outside the first area A1, respectively. Also when the steering device 4 is in the left position, the clamp 57 and joint 77 are located equal with or lower than the top imaginary plane PT, and equal with or higher than the middle imaginary plane PM, respectively. When the steering device 4 is in the left position, the clamp 57 is, when the straddled vehicle 1 is seen in the first direction D1, located more outward than the right left fork 33L.

When the steering device 4 is in the left position, the master cylinder 42, clamps 78 and 79, guide 80, brake disc 43, and brake caliper 44, respectively, are located in the same positions as when the steering device 4 is in the neutral position. Consequently, also when the steering device 4 is in the left position, the master cylinder 42, clamps 78 and 79, guide 80, brake disc 43, and brake caliper 44 are located outside the first area A1, respectively.

When the steering device 4 is in the left position, the upstream portion 61 and second flexible portion 82 are located in different positions, respectively, from when the steering device 4 is in the neutral position. However, also when the steering device 4 is in the left position, the upstream portion 61 and second flexible portion 82 are located outside the first area A1, respectively. Also when the steering device 4 is in the left position, the upstream portion 61 and second flexible portion 82 are located equal with or higher than the middle imaginary plane PM, respectively.

When the steering device 4 is in the left position, the most downstream portion 83 is located in the same position as when the steering device 4 is in the neutral position. Consequently, also when the steering device 4 is in the left position, the downstream portion 81 is located outside the first area A1.

As seen from Fig. 11B, also when the steering device 4 is in the left position, the second flexible portion 82 is located in a position substantially higher than the most downstream portion 83. Also when the steering device 4 is in the left position, the joint 77 is located in a position higher than the clamp 78. Also when the steering device 4 is in the left position, the clamp 79, guide 80, and brake caliper 44 are located in positions lower than the clamp 78, respectively.

Thus, whether the steering device 4 is in the neutral position or not, the clamp 57, master cylinder 42, joint 77, clamps 78 and 79, guide 80, and brake caliper 44 are not located in the first area A1, respectively. That is, regardless of the position of the steering device 4 relative to the body frame 3, the clamp 57, master cylinder 42, joint 77, clamps 78 and 79, guide 80, and brake caliper 44 are located outside the first area A1, respectively. Similarly, regardless of the position of the steering device 4 relative to the body frame 3, the upstream portion 61 and downstream portion 81 are located outside the first area A1, respectively.

Reference is made to Figs. 9A, 9B, 10A, 10B, 11A, and 11B. With the rotation of the steering device 4 relative to the body frame 3, the master cylinder 42 moves relative to the clamp 57. With the rotation of the steering device 4 relative to the body frame 3, the first flexible portion 62 bends in a position outside the first area A1. Specifically, with the rotation of the steering device 4 relative to the body frame 3, the first flexible portion 62 bends in a position equal with or higher than the middle imaginary plane PM. With the rotation of the steering device 4 relative to the body frame 3, the clamp 78 moves relative to the joint 77. With the rotation of the steering device 4 relative to the body frame 3, the second flexible portion 82 bends in a position outside the first area A1. Specifically, with the rotation of the steering device 4 relative to the body frame 3, the second flexible portion 82 bends in a position equal with or lower than the top imaginary plane PT and equal with or higher than the middle imaginary plane PM. The rotation of the steering device 4 relative to the body frame 3 does not cause movement of the clamp 79 and brake caliper 44 relative to the clamp 78. The rotation of the steering device 4 relative to the body frame 3 does not therefore bend the most downstream portion 83 and third flexible portion 84, respectively.

Though not shown, even when the right front fork 33R and left front fork 33L extend and contract, the third flexible portion 84 is located outside the first area A1. Specifically, when the right front fork 33R and left front fork 33L extend and contract, the clamp 79 moves relative to the clamp 78. The third flexible portion 84 therefore bends due to the extension and contraction of the right front fork 33R and left front fork 33L. However, the clamps 78 and 79 are, when the straddled vehicle 1 is seen in the first direction D1, located in positions overlapping the left front fork 33L, respectively. Further, the third flexible portion 84 is, when the straddled vehicle 1 is seen in the first direction D1, located equal with or more outward than the left front fork 33L, and is curved to bulge outward of the left front fork 33L. For these reasons, the third flexible portion 84 bends in a position outside the first area A1. Consequently, even when the right front fork 33R and left front fork 33L extend and contract, the third flexible portion 84 does not move into the first area A1.

Reference is made to Figs. 7A, 7B, 8A, and 8B. Further, it is preferable that the third flexible portion 84 is located outside the second area A2 even at the time of extension and contraction of the right front fork 33R and left front fork 33L. The clamps 78 and 79 are located in the left outer area ALL, respectively. Further, the third flexible portion 84 is located in the left outer area ALL, and is curved to bulge leftward in the front view of the vehicle (see Fig. 8B). For these reasons, the third flexible portion 84 bends in a position outside the second area A2. Thus, even at the time of extension and contraction of the right front fork 33R and left front fork 33L, the third flexible portion 84 can conveniently be prevented from moving into the second area A2.

Incidentally, the extension and contraction of the right front fork 33R and left front fork 33L do not cause movement of the master cylinder 42 relative to the clamp 57. Consequently, the first flexible portion 62 does not bend due to the extension and contraction of the right front fork 33R and left front fork 33L. Similarly, the extension and contraction of the right front fork 33R and left front fork 33L do not cause movement of the clamp 78 relative to the joint 77. Consequently, the second flexible portion 82 does not bend due to the extension and contraction of the right front fork 33R and left front fork 33L. The extension and contraction of the right front fork 33R and left front fork 33L do not cause movement of the clamp 79 relative to the brake caliper 44. Consequently, the part excluding the third flexible portion 84 of the most downstream portion 83 does not bend due the extension and contraction of the right front fork 33R and left front fork 33L.

### 8. Arrangement of the brake system (3)

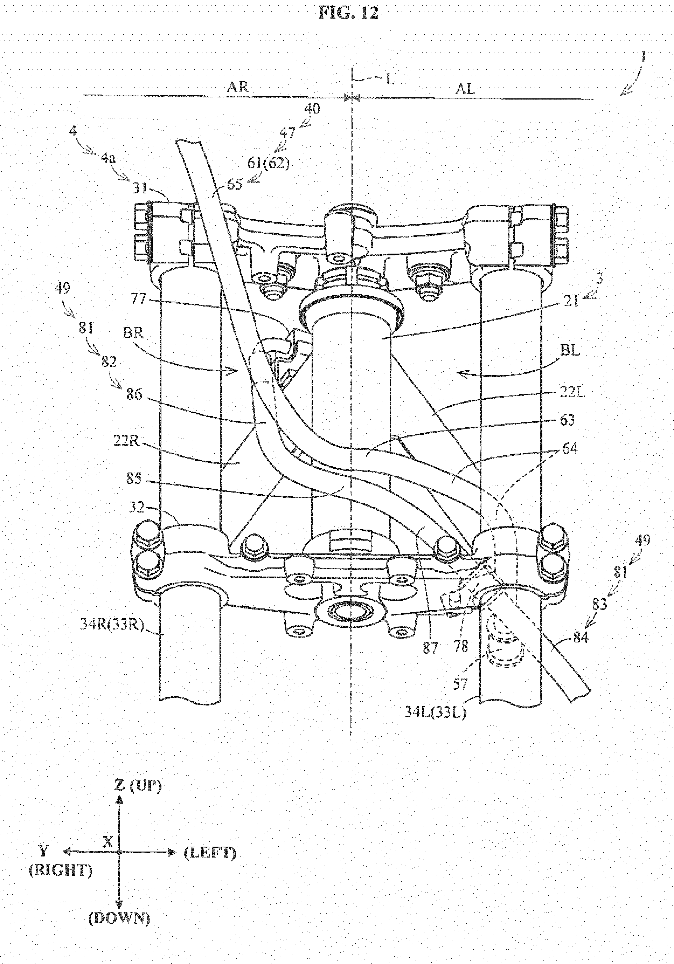

Fig. 12 is a front view of a portion of the straddled vehicle. Fig. 12 shows the steering device 4 in the neutral position.

A right opening BR and a left opening BL are defined as follows. The right opening BR is an opening demarcated by the head tube 21, right front fork 33R, upper bracket 31, and under bracket 32. The left opening BL is an opening demarcated by the head tube 21, left front fork 33L, upper bracket 31, and under bracket 32. More strictly, the right opening BR, in the front view of the vehicle, is an area more rightward than a right edge of the head tube 21, more leftward than a left edge of the right front fork 33R, lower than a lower edge of the upper bracket 31, and higher than an upper edge of the under bracket 32. The left opening BL, in the front view of the vehicle, is an area more leftward than a left edge of the head tube 21, more rightward than a right edge of the left front fork 33L, lower than the lower edge of the upper bracket 31, and higher than the upper edge of the under bracket 32. The right opening BR is an example of the opening in the right area in this invention. The left opening BL is an example of the opening in the left area AL in this invention.

A path of the upstream portion 61 will be described. The upstream portion 61 (i.e. the first flexible portion 62) extends forward from the clamp 57. The upstream portion 61 passes through the left opening BL. By passing through the left opening BL, the upstream portion 61 extends from an area more rearward than the rear edge 21a of the head tube 21 to an area more forward than the front edge 21b of the head tube 21. After passing through the left opening BL, the upstream portion 61 extends upward and rightward. And the upstream portion 61 reaches the master cylinder 42.

A path of the downstream portion 81 will be described. The second flexible portion 82 extends forward from the joint 77. The second flexible portion 82 passes through the right opening BR. By passing through the right opening BR, the second flexible portion 82 extends from the area more rearward than the rear edge 21a of the head tube 21 to the area more forward than the front edge 21b of the head tube 21. After passing through the right opening BR, the second flexible portion 82 extends leftward and reaches a position more leftward than the head tube 21. Further the second flexible portion 82 extends rearward and passes through the left opening BL. By passing through the left opening BL, the second flexible portion 82 extends from the area more forward than the front edge 21b of the head tube 21 to the area more rearward than the rear edge 33La of the left front fork 33L. After passing through the left opening BL, the second flexible portion 82 is held by the clamp 78. The third flexible portion 84 extends downward from the clamp 78. The third flexible portion 84 passes through the guide 80 and is held by the clamp 79. The most downstream portion 83 extends further downward from the clamp 79. And the most downstream portion 83 reaches the brake caliper 44.

The first flexible portion 62 and second flexible portion 82 will be described in detail hereinafter.

The first flexible portion 62 includes a first front overlapping portion 63 located more forward than the head tube 21, which first front overlapping portion 63 overlaps the head tube 21 in the front view of the vehicle. The second flexible portion 82 includes a second front overlapping portion 85 located more forward than the head tube 21, which second front overlapping portion 85 overlaps the head tube 21 in the front view of the vehicle. The first front overlapping portion 63 of the first flexible portion 62 and the second front overlapping portion 85 of the second flexible portion 82 overlap lower parts of the head tube 21 in the front view of the vehicle, respectively.

The first front overlapping portion 63 of the first flexible portion 62 does not overlap the second front overlapping portion 85 of the second flexible portion 82 in the front view of the vehicle. The first front overlapping portion 63 of the first flexible portion 62 does not cross the second front overlapping portion 85 of the second flexible portion 82 in the front view of the vehicle. The first front overlapping portion 63 of the first flexible portion 62 is located in a position higher than the second front overlapping portion 85 of the second flexible portion 82.

The first front overlapping portion 63 of the first flexible portion 62 and the second front overlapping portion 85 of the second flexible portion 82 extend in nearly horizontal directions in the front view of the vehicle, respectively. More strictly, the first front overlapping portion 63 of the first flexible portion 62 and the second front overlapping portion 85 of the second flexible portion 82 extend rightward and upward in the front view of the vehicle, respectively. Thus, the first front overlapping portion 63 of the first flexible portion 62 extends in a similar direction to the second front overlapping portion 85 of the second flexible portion 82 in the front view of the vehicle.

Reference is made to Figs. 5A, 5B, and 12. The first flexible portion 62 includes a first portion 64 extending from the first end (i.e. the held site 53c) of the first flexible portion 62 to the first front overlapping portion 63, and a second portion 65 extending from the first front overlapping portion 63 to the second end (i.e. the first end 53b) of the first flexible portion 62. The second flexible portion 82 includes a first portion 86 extending from the first end (i.e. the first end 74a) of the second flexible portion 82 to the second front overlapping portion 85, and a second portion 87 extending from the second front overlapping portion 85 to the second end (i.e. the held site 74c) of the second flexible portion 82.

Reference is made to Fig. 12. The first portion 64 of the first flexible portion 62 is located in the left area AL. The second portion 65 of the first flexible portion 62 is located in the right area AR. The first portion 86 of the second flexible portion 82 is located in the right area AR. The second portion 87 of the second flexible portion 82 is located in the left area AL.

The first portion 64 of the first flexible portion 62 passes through the left opening BL. The second portion 65 of the first flexible portion 62 passes through neither the right opening BR nor the left opening BL. The first portion 86 of the second flexible portion 82 passes through the right opening BR. The second portion 87 of the second flexible portion 82 passes through the left opening BL.

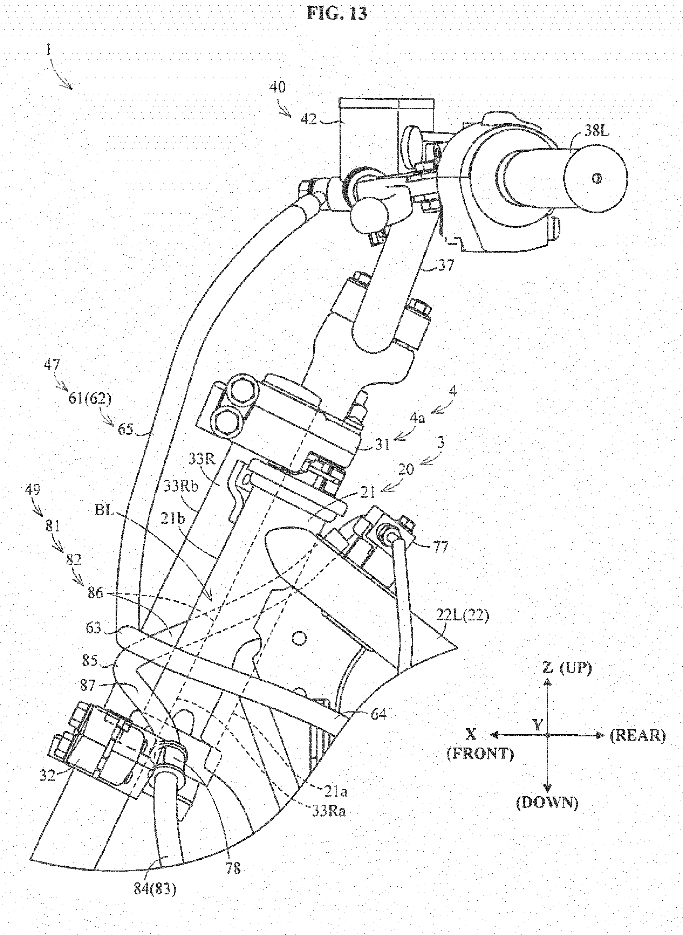

Fig. 13 is a left side view of a portion of the straddled vehicle. Fig. 13 omits illustration of the left front fork 33L. Fig. 13 shows the steering device 4 in the neutral position.

The first portion 64 of the first flexible portion 62 passes through the left opening BL to extend over the area more rearward than the rear edge 21a of the head tube 21 and the area more forward than the front edge 21b of the head tube 21. The first portion 64 of the first flexible portion 62 crosses the rear edge 21a and front edge 21b of the head tube 21 in the side view of the vehicle. The first portion 64 of the first flexible portion 62 includes a part overlapping the head tube 21 in the side view of the vehicle.

When the steering device 4 is in the neutral position, the second portion 65 of the first flexible portion 62 is located in the area more forward than the front edge 21b of the head tube 21 in the side view of the vehicle. When the steering device 4 is in the neutral position, the second portion 65 of the first flexible portion 62 is located in an area more forward than a front edge 33Rb of the right front fork 33R in the side view of the vehicle.

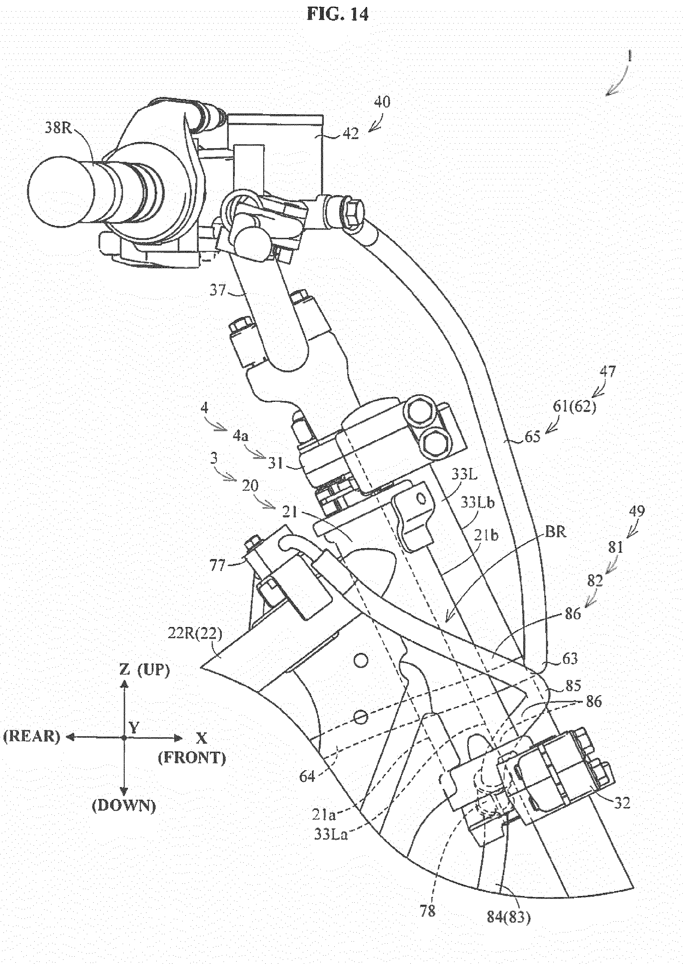

Fig. 14 is a right side view of a portion of the straddled vehicle. Fig. 14 omits illustration of the right front fork 33R. Fig. 14 shows the steering device 4 in the neutral position.

When the steering device 4 is in the neutral position, the second portion 65 of the first flexible portion 62 is located more forward than the front edge 33Lb of the left front fork 33L in the side view of the vehicle.

The first portion 86 of the second flexible portion 82 passes through the right opening BR to extend over the area more rearward than the rear edge 21a of the head tube 21 and the area more forward than the front edge 21b of the head tube 21. The first portion 86 of the second flexible portion 82 crosses the rear edge 21a and front edge 21b of the head tube 21 in the side view of the vehicle. The first portion 86 of the second flexible portion 82 includes a part overlapping the head tube 21 in the side view of the vehicle.

Reference is made to Fig. 13. The second portion 87 of the second flexible portion 82 crosses the front edge 21b of the head tube 21 in the side view of the vehicle. The second portion 87 of the second flexible portion 82 includes a part overlapping the head tube 21 in the side view of the vehicle. Further, the second portion 87 of the second flexible portion 82 crosses the rear edge 33Ra of the right front fork 33R and the rear edge 33La of the left front fork 33L in the side view of the vehicle (see also Fig. 6). Consequently, when the steering device 4 is in the neutral position, the second portion 87 of the second flexible portion 82 passes through the left opening BL to extend over the area more forward than the front edge 21b of the head tube 21 and the area more rearward than the rear edge 33La of the left front fork 33L.

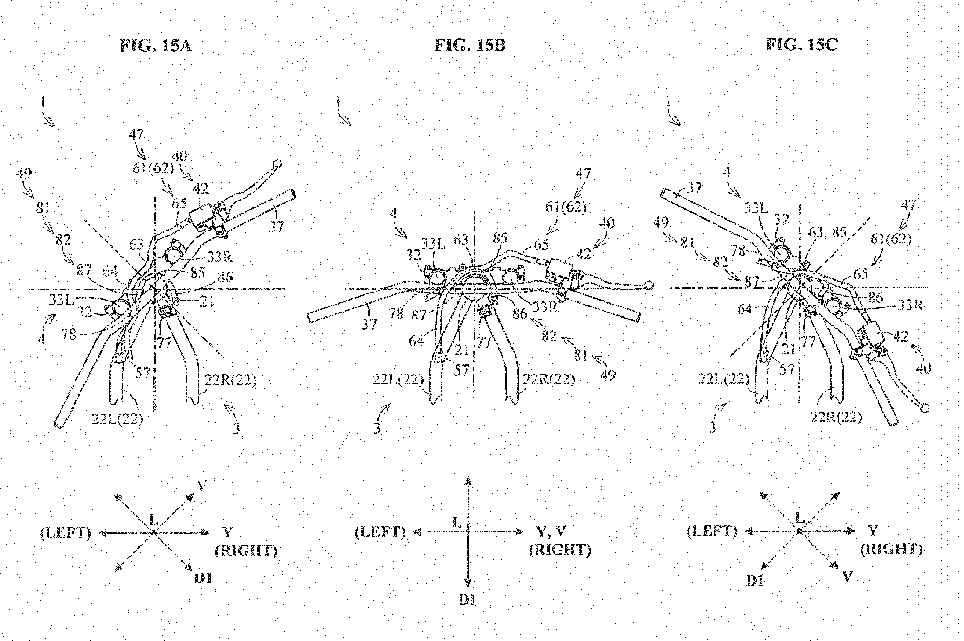

Figs. 15A, 15B, and 15C are each a perspective view of the straddled vehicle seen in the direction of the center axis L of the head tube 21. Figs. 15A, 15B, and 15C each omit illustration of the upper bracket 31. Fig. 15B shows the steering device 4 in the neutral position. Fig. 15A shows the steering device 4 in the left position. Fig. 15C shows the steering device 4 in the right position.

Reference is made to Figs. 15B and 15C. When the steering device 4 is in the right position, compared with the time the steering device 4 is in the neutral position, the first flexible portion 62 (particularly the second portion 65 of the first flexible portion 62) is located rearward. As is clear from this, the first flexible portion 62 moves rearward with a rightward rotation of the steering device 4 relative to the head tube 21. In other words, when the steering device 4 is in the right position, compared with the time the steering device 4 in the neutral position, a space between the first flexible portion 62 and head tube 21 is narrow. As is clear from this, the space between the first flexible portion 62 and head tube 21 becomes small with the rightward rotation of the steering device 4 relative to the head tube 21.

The second flexible portion 82 (particularly the second portion 86 of the second flexible portion 82) moves forward with the rightward rotation of the steering device 4 relative to the head tube 21. In other words, the space between the second flexible portion 82 and head tube 21 becomes large with the rightward rotation of the steering device 4 relative to the head tube 21.

Thus, the first flexible portion 62 and second flexible portion 82 move in opposite directions to each other with the rightward rotation of the steering device 4 relative to the head tube 21.

Reference is made to Figs. 15A and 15B. The first flexible portion 62 (particularly the second portion 65 of the first flexible portion 62) moves forward with a leftward rotation of the steering device 4 relative to the head tube 21. The second flexible portion 82 (particularly the second portion 86 of the second flexible portion 82) moves rearward with the leftward rotation of the steering device 4 relative to the head tube 21. Thus, the first flexible portion 62 and second flexible portion 82 move in opposite directions to each other with the leftward rotation of the steering device 4 relative to the head tube 21.

The site of the first flexible portion 62 which becomes the first front overlapping portion 63 when the steering device 4 is in the neutral position does not need to be the same as the site of the first flexible portion 62 which becomes the first front overlapping portion 63 when the steering device 4 is in the right position. That is, the site of the first flexible portion 62 which becomes the first front overlapping portion 63 may shift with the rotation of the steering device 4 relative to the body frame 3. Similarly, the site of the second flexible portion 82 which becomes the second front overlapping portion 85 may shift with the rotation of the steering device 4 relative to the body frame 3.

### 9. Advantageous effects

The straddled vehicle 1 according to the first embodiment provides the following effects.

The upstream portion 61 and downstream portion 81 are located outside the first area A1, respectively. This can conveniently inhibit at least one of the upstream portion 61 and downstream portion 81 from imposing restrictions on members other than the primary piping 47 and secondary piping 49 (hereinafter called "the other members"). In particular, the restrictions on the other members (e.g. the front fender) located in the first area A1 can be inhibited conveniently. This can conveniently enhance the degree of freedom for arrangement and shapes of the other members located in the first area A1. For example, the degree of freedom for arrangement and shape of the front fender 7 can be improved conveniently. Further, a design formed in the first area A1 can be improved conveniently.

The downstream portion 81 is located equal with or lower than the top imaginary plane PT. Particularly, therefore, the restrictions imposed by the downstream portion 81 on the other members (e.g. the handlebar 37 and meters not shown) located higher than the top imaginary plane PT can be inhibited conveniently. This can conveniently enhance the degree of freedom for arrangement and shapes of the other members located higher than the top imaginary plane PT. For example, the degree of freedom for arrangement and shape of the handlebar 37 can be improved conveniently. Further, a design formed in the area higher than the top imaginary plane PT can be improved conveniently. It is further possible to conveniently avoid lowering of visibility forward of the straddled vehicle 1 due to the downstream portion 81. The rider of the straddled vehicle 1 can therefore appropriately see what is ahead.

The second flexible portion 82 bends when the steering device 4 rotates relative to the body frame 3, and the third flexible portion 84 bends when the right front fork 33R and left front fork 33L extend and contract. That is, the part of the downstream portion 81 which bends when the steering device 4 rotates relative to the body frame 3 is different from the part of the downstream portion 81 which bends when the right front fork 33R and left front fork 33L extend and contract. This can conveniently inhibit the second flexible portion 82 from bending in a complex way, and can conveniently inhibit the second flexible portion 82 from bending to a large extent. Consequently, the restrictions imposed by the second flexible portion 82 on the other members located adjacent the second flexible portion 82 can be inhibited conveniently. Further, the second flexible portion 82 can conveniently be inhibited from interfering with the other members (e.g. the body frame 3 and steering device 4). Similarly, the third flexible portion 84 can conveniently be inhibited from bending in a complex way, and the third flexible portion 84 can conveniently be inhibited from bending to a large extent. Consequently, the restrictions imposed by the third flexible portion 84 on the other members located adjacent the third flexible portion 84 can be inhibited conveniently. Further, the third flexible portion 84 can conveniently be inhibited from interfering with the other members (e.g. the body frame 3 and steering device 4).

According to the straddled vehicle 1, as described above, the primary piping 47 and secondary piping 49 can be arranged appropriately while inhibiting the restrictions imposed on the other members.

The upstream portion 61 and downstream portion 81 are located outside the first area A1, respectively, regardless of the position of the steering device 4 relative to the body frame 3. This can further inhibit restrictions imposed on the other members.

The downstream portion 81 is located equal with or lower than the top imaginary plane PT regardless of the position of the steering device 4 relative to the body frame 3. This can further inhibit restrictions imposed on the other members located higher than the top imaginary plane PT.

The upstream portion 61 is located equal with or higher than the middle imaginary plane PM. Consequently, the upstream portion 61 can conveniently be located outside the first area A1. For example, even when the upstream portion 61 bends in a direction perpendicular to the center axis L of the head tube 21, there is no possibility of the upstream portion 61 entering the first area A1.

The upstream portion 61 is located equal with or higher than the middle imaginary plane PM regardless of the position of the steering device 4 relative to the body frame 3. Consequently, the upstream portion 61 can more conveniently be located outside the first area A1.

The second flexible portion 82 is located equal with or higher than the middle imaginary plane PM. The second flexible portion 82 can therefore conveniently be located outside the first area A1. For example, even when the second flexible portion 82 bends in a direction perpendicular to the center axis L of the head tube 21, there is no possibility of the second flexible portion 82 entering the first area A1.

The second flexible portion 82 is located equal with or higher than the middle imaginary plane PM regardless of the position of the steering device 4 relative to the body frame 3. Consequently, the second flexible portion 82 can more conveniently be located outside the first area A1.

The master cylinder 42 and clamp 57 are located outside the first area A1, respectively. The upstream portion 61 can therefore conveniently be located outside the first area A1.

The master cylinder 42 and clamp 57 are located outside the first area A1, respectively, regardless of the position of the steering device 4 relative to the body frame 3. Consequently, the upstream portion 61 can more conveniently be located outside the first area A1.

The joint 77, clamps 78 and 79, and brake caliper 44 are located outside the first area A1, respectively. The downstream portion 81 can therefore conveniently be located outside the first area A1.

The joint 77, clamps 78 and 79, and brake caliper 44 are located outside the first area A1, respectively, regardless of the position of the steering device 4 relative to the body frame 3. Consequently, the downstream portion 81 can more conveniently be located outside the first area A1.

The guide 80 is located outside the first area A1. The downstream portion 81 can therefore more conveniently be located outside the first area A1.

The guide 80 is located outside the first area A1 regardless of the position of the steering device 4 relative to the body frame 3. Consequently, the downstream portion 81 can more conveniently be located outside the first area A1.

The guide 80 guides the third flexible portion 84. Therefore, even when the third flexible portion 84 bends, the third flexible portion 84 can conveniently be prevented from entering the first area A1.

The joint 77 and clamps 78 and 79 are located equal with or lower than the top imaginary plane PT, respectively. Further, the brake caliper 44 is located lower than the bottom imaginary plane PB. The downstream portion 81 can therefore conveniently be located equal with or lower than the top imaginary plane PT.

The joint 77 and clamps 78 and 79 are located equal with or lower than the top imaginary plane PT, respectively, regardless of the position of the steering device 4 relative to the body frame 3. Further, the brake caliper 44 is located lower than the bottom imaginary plane PB regardless of the position of the steering device 4 relative to the body frame 3. The downstream portion 81 can therefore conveniently be located equal with or lower than the top imaginary plane PT.

The master cylinder 42 is located higher than the top imaginary plane PT. Further, the clamp 57 is located equal with or higher than the middle imaginary plane PM. The upstream portion 61 can therefore conveniently be located equal with or higher than the middle imaginary plane PM.

The master cylinder 42 is located higher than the top imaginary plane PT regardless of the position of the steering device 4 relative to the body frame 3. Further, the clamp 57 is located equal with or higher than the middle imaginary plane PM regardless of the position of the steering device 4 relative to the body frame 3. The upstream portion 61 can therefore more conveniently be located equal with or higher than the middle imaginary plane PM.

The joint 77 and clamp 78 are located equal with or higher than the middle imaginary plane PM, respectively. Consequently, the second flexible portion 82 can conveniently be located equal with or higher than the middle imaginary plane PM.

The joint 77 and clamp 78 are located equal with or higher than the middle imaginary plane PM, respectively, regardless of the position of the steering device 4 relative to the body frame 3. The second flexible portion 82 can therefore more conveniently be located equal with or higher than the middle imaginary plane PM.

When the steering device 4 is in the neutral position, the upstream portion 61 and downstream portion 81 are located outside the second area A2, respectively. This can conveniently inhibit the restrictions imposed on the other members by at least one of the upstream portion 61 and downstream portion 81. In particular, it can conveniently inhibit the restrictions imposed on the other members (e.g. the front fender 7) located in the second area A2. This can conveniently enhance the degree of freedom for arrangement and shapes of the other members located in the second area A2. For example, the degree of freedom for arrangement and shape of the front fender 7 can be improved conveniently. Further, a design formed in the second area A2 can be improved conveniently.

When the steering device 4 is in the neutral position, the master cylinder 42 and clamp 57 are located outside the second area A2, respectively. Consequently, when the steering device 4 is in the neutral position, the upstream portion 61 can conveniently be located outside the second area A2.

When the steering device 4 is in the neutral position, the joint 77, clamps 78 and 79, and brake caliper 44 are located outside the second area A2, respectively. Consequently, when the steering device 4 is in the neutral position, the downstream portion 81 can conveniently be located outside the second area A2.

When the steering device 4 is in the neutral position, the guide 80 is located outside the second area A2. Consequently, when the steering device 4 is in the neutral position, the downstream portion 81 (more particularly, the third flexible portion 84) can more conveniently be located outside the second area A2.

When the steering device 4 is in the neutral position, the upstream portion 61 is located in the top area AT, middle area AM, right outer area ARR, and left outer area ALL. Consequently, when the steering device 4 is in the neutral position, the upstream portion 61 can conveniently be located outside the second area A2.

When the steering device 4 is in the neutral position, the downstream portion 81 is located in the middle area AM, bottom area AB, and left outer area ALL. Consequently, when the steering device 4 is in the neutral position, the downstream portion 81 can conveniently be located outside the second area A2.

The downstream portion 81 is not located in the top area AT. Particularly, therefore, the restrictions imposed by the downstream portion 81 on the other members (e.g. the handlebar 37 and meters not shown) located in the top area AT can be inhibited conveniently. This can conveniently enhance the degree of freedom for arrangement and shapes of the other members located in the top area AT. Further, a design formed in the top area AT can be improved conveniently. It is further possible to conveniently avoid lowering of visibility forward of the straddled vehicle 1 due to the downstream portion 81.

When the steering device 4 is in the neutral position, the master cylinder 42 is located in the top area AT and right outer area ARR, and the clamp 57 is located in the middle area AB and left outer area ALL. Consequently, when the steering device 4 is in the neutral position, the upstream portion 61 can conveniently be located in the top area AT, middle area AM, right outer area ARR, and left outer area ALL.

When the steering device 4 is in the neutral position, the joint 77 and clamp 78 are located in the middle area AM and left outer area ALL, respectively, and the brake caliper 44 is located in the bottom area AB and left outer area ALL. Consequently, when the steering device 4 is in the neutral position, the downstream portion 81 can conveniently be located in the middle area AM, bottom area AB, and left outer area ALL.

The second flexible portion 82 is located equal with or higher than the clamp 78, and the most downstream portion 83 is located equal with or lower than the clamp 78. That is, the second flexible portion 82 is located in a position substantially higher than the most downstream portion 83. This can effectively prevent restrictions imposed on the same other members by both the second flexible portion 82 and most downstream portion 83. Thus, the restrictions imposed by the downstream portion 81 on the other members located adjacent the downstream portion 81 can be inhibited effectively.

The second flexible portion 82 is located equal with or higher than the clamp 78 regardless of the position of the steering device 4 relative to the body frame 3. The most downstream portion 83 is located equal with or lower than the clamp 78 regardless of the position of the steering device 4 relative to the body frame 3. That is, the second flexible portion 82 is located in a position substantially higher than the most downstream portion 83 regardless of the position of the steering device 4 relative to the body frame 3. Thus, the restrictions imposed by the downstream portion 81 on the other members located adjacent the downstream portion 81 can be inhibited with increased effect.

The joint 77 is located in a position higher than the clamp 78. The second flexible portion 82 can therefore conveniently be located in a position equal with or higher than the clamp 78. Further, the brake caliper 44 is located in a position lower than the clamp 78. The most downstream portion 83 can therefore conveniently be located in a position equal with or lower than the clamp 78. Consequently, the second flexible portion 82 can conveniently be located in a position substantially higher than the most downstream portion 83.

The joint 77 is located in a position higher than the clamp 78 regardless of the position of the steering device 4 relative to the body frame 3. Further, the brake caliper 44 is located in a position lower than the clamp 78 regardless of the position of the steering device 4 relative to the body frame 3. Consequently, the second flexible portion 82 can more conveniently be located in a position substantially higher than the most downstream portion 83.

When the steering device 4 is in the neutral position, the master cylinder 42 is located in the right area AR, and the clamp 57 is located in the left area AL. Further, the first flexible portion 62 includes the first front overlapping portion 63. Consequently, the first flexible portion 62 can be moved rearward with the rightward rotation of the steering device 4 relative to the head tube 21. The first flexible portion 62 can be moved forward with the leftward rotation of the steering device 4 relative to the head tube 21.

When the steering device 4 is in the neutral position, the joint 77 is located in the right area AR, and the clamp 78 is located in the left area AL. Further, the second flexible portion 82 includes the second front overlapping portion 85. Consequently, the second flexible portion 82 can be moved forward with the rightward rotation of the steering device 4 relative to the head tube 21. The second flexible portion 82 can be moved rearward with the leftward rotation of the steering device 4 relative to the head tube 21.

As a result of these, the first flexible portion 62 and second flexible portion 82 move in mutually different directions with right and left rotations of the steering device 4 relative to the body frame 3. Consequently, whichever of the right direction and left direction the steering device 4 may rotate relative to the body frame 3, the first flexible portion 62 and second flexible portion 82 can conveniently be prevented from interfering with each other.

When the steering device 4 is in the neutral position, both the clamp 78 and brake caliper 44 are located in the left area AL. The most downstream portion 83 can more conveniently be located outside the first area A1. Further, the most downstream portion 83 can more conveniently be located outside the second area A2. Moreover, the most downstream portion 83 can be shortened conveniently.

When the steering device 4 is in the neutral position, both the clamps 78 and 79 are located in the left area AL. The third flexible portion 84 can therefore more conveniently be located outside the first area A1. Further, the third flexible portion 84 can more conveniently be located outside the second area A2. Moreover, the third flexible portion 84 can be shortened conveniently.

When the steering device 4 is in the neutral position, the guide 80 is located in the left area AL. The third flexible portion 84 can therefore more conveniently be located outside the first area A1. Further, the third flexible portion 84 can more conveniently be located outside the second area A2.

When the steering device 4 is in the neutral position, the first front overlapping portion 63 of the first flexible portion 62 does not overlap the second front overlapping portion 85 of the second flexible portion 82 in the front view of the vehicle. This can conveniently prevent the first front overlapping portion 63 of the first flexible portion 62 and the second front overlapping portion 85 of the second flexible portion 82 from interfering with each other.

When the steering device 4 is in the neutral position, the master cylinder 42 is located in the right area AR, the clamp 57 is located in the left area AL, and the master cylinder 42 is located in a position higher than the clamp 57. Consequently, the first front overlapping portion 63 of the first flexible portion 62 can conveniently be located to extend rightward and upward in the front view of the vehicle. The joint 77 is located in the right area AR, the clamp 78 is located in the left area AL, and the joint 77 is located in a position higher than the clamp 78. The second front overlapping portion 85 of the second flexible portion 82 can therefore conveniently be located to extend rightward and upward in the front view of the vehicle. As a result of these, the first front overlapping portion 63 of the first flexible portion 62 and the second front overlapping portion 85 of the second flexible portion 82 both extend in similar directions in the front view of the vehicle. Consequently, when the steering device 4 is in the neutral position, the first front overlapping portion 63 of the first flexible portion 62 and the second front overlapping portion 85 of the second flexible portion 82 are conveniently prevented from overlapping each other in the front view of the vehicle. Further, an installation space for the first front overlapping portion 63 of the first flexible portion 62 and the second front overlapping portion 85 of the second flexible portion 82 can be made small.

When the steering device 4 is in the neutral position, the clamp 57 is located in the left area AL. Further the first portion 64 of the first flexible portion 62 passes through the left opening BL. The first portion 64 of the first flexible portion 62 can therefore be shortened conveniently.

When the steering device 4 is in the neutral position, the joint 77 is located in the right area AR. Further, the first portion 86 of the second flexible portion 82 passes through the right opening BR. The first portion 86 of the second flexible portion 82 can therefore be shortened conveniently.

When the steering device 4 is in the neutral position, the clamp 79 is located in the left area AL. Further, the second portion 87 of the second flexible portion 82 passes through the left opening BL. The second portion 87 of the second flexible portion 82 can therefore be shortened conveniently.

When the steering device 4 is in the neutral position, the most downstream portion 83 is located more rearward than the rear edge 33La of the left front fork 33L in the side view of the vehicle. Consequently, a design formed in the area more forward than the rear edge 33La of the left front fork 33L in the side view of the vehicle can be improved conveniently.

When the steering device 4 is in the neutral position, the clamps 78 and 79, guide 80, and brake caliper 44 are, in the side view of the vehicle, located more rearward than the rear edge 33La of the left front fork 33L, respectively. Consequently, a design formed in the area more forward than the rear edge 33La of the left front fork 33L in the side view of the vehicle can be improved more conveniently. The most downstream portion 83 can conveniently be located more rearward than the rear edge 33La of the left front fork 33L in the side view of the vehicle.

When the steering device 4 is in the neutral position, the clamps 78 and 79 and guide 80 are, in the side view of the vehicle, located more rearward than the rear edge 33La of the left front fork 33L, respectively. When the steering device 4 is in the neutral position, the clamps 78 and 79 and guide 80 overlap the left front fork 33L in the front view of the vehicle, respectively. The clamps 78 and 79 and guide 80 are therefore not visible in the front view of the vehicle, respectively. The brake caliper 44 is, in the side view of the vehicle, located more rearward than the rear edge 33La of the left front fork 33L. Further, at least part of the brake caliper 44 overlaps the left front fork 33L in the front view of the vehicle. At least part of the brake caliper 44 is therefore not visible in the front view of the vehicle. Consequently, a design formed in the area equal with or more forward than the rear edge 33La of the left front fork 33L in the side view of the vehicle can be improved more conveniently.

The joint 77 is supported by the body frame 3, and the clamp 78 is supported by the upper device 4a. Consequently, the first end (i.e. the first end 74a) of the second flexible portion 82 is held to be immovable by the body frame 3, and the second end (i.e. the held site 74c) of the second flexible portion 82 is held to be immovable by the upper device 4a. The second flexible portion 82 can therefore conveniently be prevented from bending due to the extension and contraction of the right front fork 33R and left front fork 33L.

The clamp 78 is supported by the upper device 4a, and the clamp 79 is supported by the lower device 4b. Consequently, the first end (i.e. the held site 74c) of the third flexible portion 84 is held to be immovable by the upper device 4a, and the second end (i.e. the held site 74d) of the third flexible portion 84 is held to be immovable by the lower device 4b. The third flexible portion 84 can therefore conveniently be prevented from bending due to the rotation of the steering device 4 relative to the body frame 3.

The clamp 57 is supported by the body frame 3, and the master cylinder 42 is supported by the upper device 4a. Consequently, the first end (i.e. the held site 53c) of the first flexible portion 62 is held to be immovable relative to the body frame 3, and the second end (i.e. the second end 53b) of the first flexible portion 62 is held to be immovable relative to the upper device 4a. The first flexible portion 62 can therefore conveniently be prevented from bending due to the extension and contraction of the right front fork 33R and left front fork 33L.

### [Second Embodiment]

A straddled vehicle 1 according to a second embodiment is different from the straddled vehicle 1 in the first embodiment in the construction of the brake system 40. Components identical to those of the first embodiment are shown with the same signs, and will not particularly be described. Components of the second embodiment different from those of the first embodiment will be, describe hereinafter.

### 1. Construction of brake system

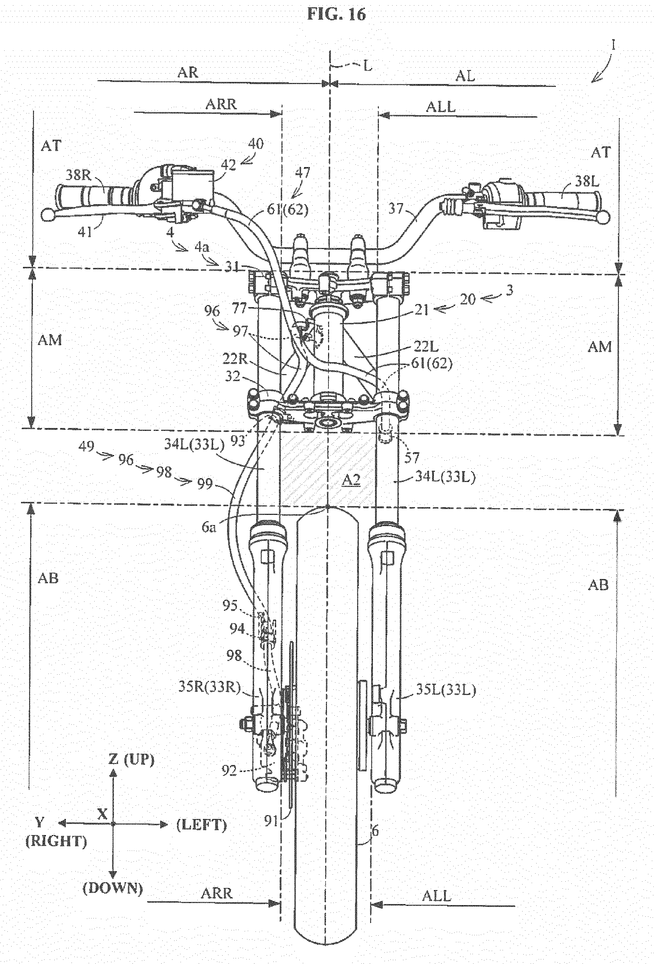

Fig. 16 is a front view of a portion of a straddled vehicle in the second embodiment. Fig. 16 omits illustration of part of the members included in the straddled vehicle. Fig. 16 shows the steering device 4 in the neutral position. The brake system 40 has a brake disc 91, a brake caliper 92, clamps 93 and 94, and a guide 95. When the steering device 4 is in the neutral position, the brake disc 91, brake caliper 92, clamps 93 and 94, and guide 95 are located in the right area AR, respectively. The secondary piping 49 includes a downstream portion 96. When the steering device 4 is in the neutral position, the downstream portion 96 is located in the right area AR. Each of the elements 91-96 will be described hereinafter.

The brake disc 91 is fixedly connected to the front wheel 6. The brake caliper 92 is supported by the lower right tube 35R. The brake caliper 92 is immovable relative to the lower device 4b. The brake disc 91 and brake caliper 92 have constructions and functions similar to the brake disc 43 and brake caliper 44 in the first embodiment.

The clamps 93 and 94 and guide 95 are supported by the steering device 4, respectively. The clamps 93 and 94 and guide 95 are immovable relative to the steering device 4, respectively. More particularly, the clamp 93 is supported by the under bracket 32. The clamp 93 is immovable relative to the upper device 4a. The clamp 94 is supported by the lower right tube 35R. The clamp 94 is immovable relative to the lower device 4b. The guide 95 is supported by the lower right tube 35R. The clamps 93 and 94 and guide 95 have constructions and functions similar to the clamps 78 and 79 and guide 80 in the first embodiment, respectively.

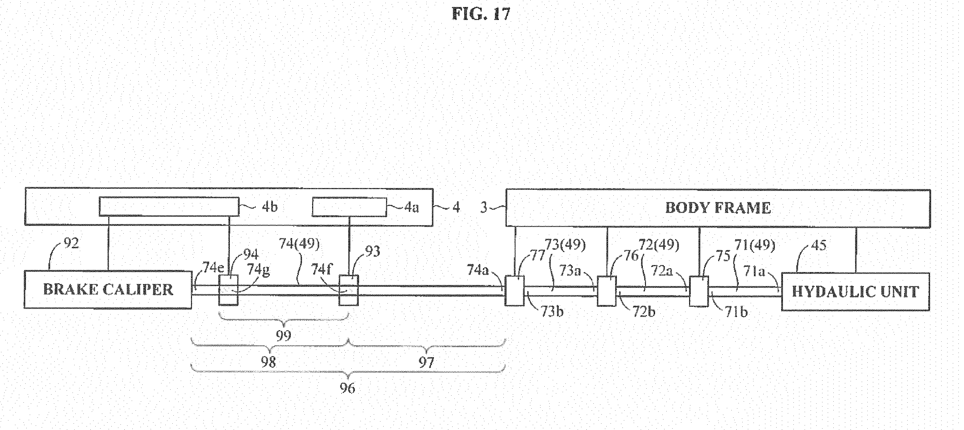

Fig. 17 is a schematic view of secondary piping. The downstream portion 96 extends from the joint 77 to the brake caliper 92. The downstream portion 96 includes a second flexible portion 97 and a most downstream portion 98. The second flexible portion 97 extends from the joint 77 to the clamp 93. The most downstream portion 98 extends from the clamp 93 to the brake caliper 92. The most downstream portion 98 includes a third flexible portion 99. The third flexible portion 99 extends from the clamp 93 to the clamp 94. The third flexible portion 99 is guided by the guide 95. The clamp 93 is an example of the third holding member in this invention.

The pipe 74 includes the first end 74a connected to the joint 77, a second end 74e connected to the brake caliper 92, a held site 74f held by the clamp 93, and a held site 74g held by the clamp 94. The first end 74a is held to be immovable relative to the body frame 3. The first end 74a corresponds to the first end of the downstream portion 96 (i.e. the first end of the second flexible portion 97). The second end 74e is held to be immovable relative to the lower device 4b. The second end 74e corresponds to the second end of the downstream portion 96 (i.e. the second end of the most downstream portion 98). The held site 74f is held to be immovable relative to the upper device 4a. The held site 74f corresponds to the second end of the second flexible portion 97, the first end of the most downstream portion 98, and the first end of the third flexible portion 99. The held site 74g is held to be immovable relative to the lower device 4b. The held site 74g corresponds to the second end of the third flexible portion 99.

The second flexible portion 97 bends due to the rotation of the steering device 4 relative to the body frame 3. The portion of the secondary piping 49 excluding the second flexible portion 97 does not bend due to the rotation of the steering device 4 relative to the body frame 3. The third flexible portion 99 bends due to the extension and contraction of the right front fork 33R and left front fork 33L. The portion of the secondary piping 49 excluding the third flexible portion 99 does not bend due to the extension and contraction of the right front fork 33R and left front fork 33L.

The first end of the downstream portion 96 is the first end 74a of the pipe 74. The second end of the downstream portion 96 is the second end 74e of the pipe 74. The first end of the second flexible portion 97 is the first end 74a of the pipe 74. That is, the first end of the second flexible portion 97 is held by the joint 77. The second end of the second flexible portion 97 is the held site 74f of the pipe 74. That is, the second end of the second flexible portion 82 is held by the clamp 93. The first end of the most downstream portion 98 is the held site 74f of the pipe 74. The second end of the most downstream portion 98 is the second end 74e of the pipe 74. The first end of the third flexible portion 99 is the held site 74f of the pipe 74. The second end of the third flexible portion 99 is the held site 74g of the pipe 74.

The second flexible portion 97 does not include the second front overlapping portion 85 described in the first embodiment. The second flexible portion 97 does not include the first portion 86 or the second portion 87 described in the first embodiment.

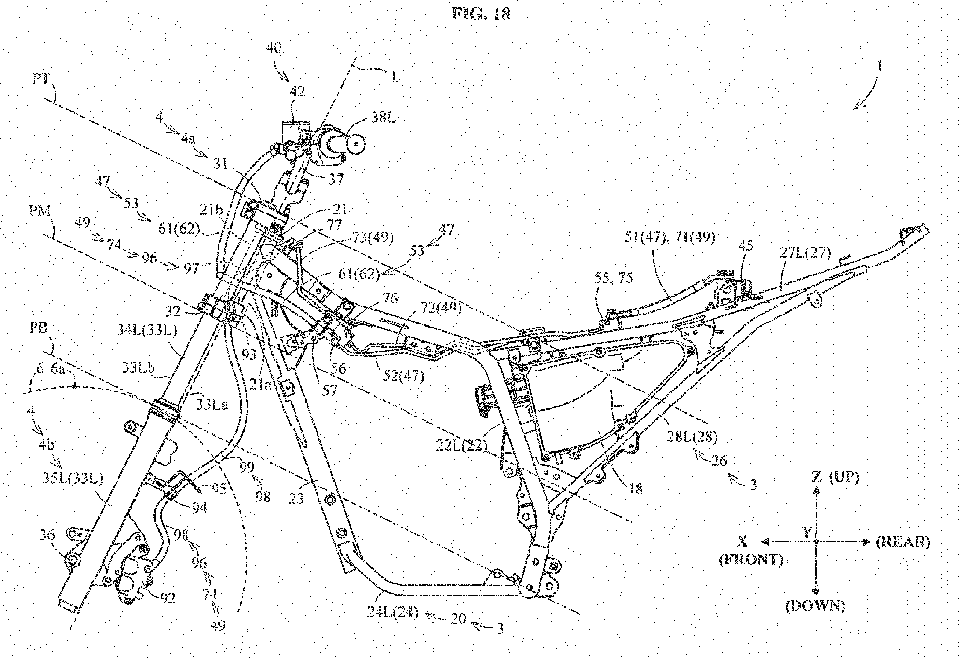

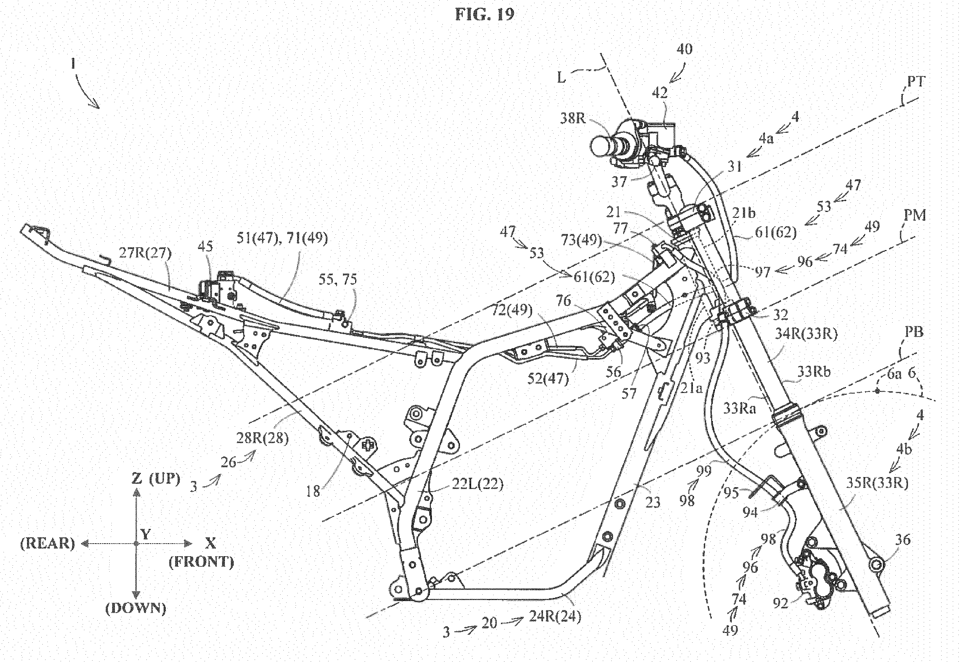

Fig. 18 is a left side view of a portion of the straddled vehicle. Fig. 19 is a right side view of the portion of the straddled vehicle. Figs. 18 and 19 omit illustration of part of the members included in the straddled vehicle. Figs. 18 and 19 each show the steering device 4 in the neutral position.

An arrangement of the respective elements of the brake system 40 will be described. In the description of the arrangement of the elements of the brake system 40, "clamp 57" can be read as "held site 53c". This is because the position of the clamp 57 is substantially the same as the position of the held site 53c. Similarly, in the description of the arrangement, "master cylinder 42" can be read as "second end 53b", In the description of the arrangement, "joint 77" can be read as "first end 74a". In the description of the arrangement, "clamp 93" can be read as "held site 74f". In the description of the arrangement, "clamp 94" can be read as "held site 74g". In the description of the arrangement, "brake caliper 92" can be read as "second end 74e".

When the steering device 4 is in the neutral position, the clamp 93 is, in the side view of the vehicle, located more forward than the hydraulic unit 45, clamp 57, master cylinder 42, and joint 77. When the steering device 4 is in the neutral position, the clamp 93 is located in a position lower than the hydraulic unit 45, master cylinder 42, and joint 77. When the steering device 4 is in the neutral position, the clamp 93 is located in substantially the same height position as the clamp 57.

When the steering device 4 is in the neutral position, the clamp 94 and guide 95 are located more forward than the clamp 93 in the side view of the vehicle, respectively. When the steering device 4 is in the neutral position, the clamp 94 and guide 95 are located in positions lower than the clamp 57 and clamp 93, respectively. The guide 95 is located in a position higher than the clamp 94.

When the steering device 4 is in the neutral position, the brake disc 91 and brake caliper 92 are located more forward than the clamp 94 and guide 95 in the side view of the vehicle, respectively. When the steering device 4 is in the neutral position, the brake disc 91 and brake caliper 92 are located in positions lower than the clamp 94 and guide 95, respectively. When the steering device 4 is in the neutral position, part of the brake caliper 92 overlaps the brake disc 91 in the side view of the vehicle.

When the steering device 4 is in the neutral position, the clamp 93 overlaps the center axis L of the head tube 21 in the side view of the vehicle. When the steering device 4 is in the neutral position, the clamp 94, guide 95, and brake caliper 92 are located more rearward than the center axis L of the head tube 21 in the side view of the vehicle, respectively. When the steering device 4 is in the neutral position, the clamps 93 and 94, guide 95, and brake caliper 92 are, in the side view of the vehicle, located more rearward than the rear edge 33Ra of the right front fork 33R and the rear edge 33La of the left front fork 33L, respectively.

When the steering device 4 is in the neutral position, the clamp 93 is located in substantially the same height position as the under bracket 32. When the steering device 4 is in the neutral position, the clamp 94, guide 95, brake disc 91, and brake caliper 92 are located in positions lower than the under bracket 32, respectively. When the steering device 4 is in the neutral position, the clamp 94, guide 95, brake disc 91, and brake caliper 92 are located in positions lower than the upper end 6a of the front wheel 6, respectively. When the steering device 4 is in the neutral position, the clamp 79 and guide 80 are located in positions higher than the front axle 36, respectively. When the steering device 4 is in the neutral position, at least part of the brake discs 91 and at least part of the brake caliper 92 are located in the same height positions as the front axle 36, respectively.

When the steering device 4 is in the neutral position, the downstream portion 96 is located in a position described below. The downstream portion 96 is located equal with or lower than the joint 77. The downstream portion 96 is located equal with or higher than the brake caliper 92. The downstream portion 96 is located equal with or more forward than the joint 77 in the side view of the vehicle. The downstream portion 96 is located equal with or more rearward than the brake caliper 92 in the side view of the vehicle.

When the steering device 4 is in the neutral position, the second flexible portion 97 is located in a position described below. The second flexible portion 97 is located in a position equal with or lower than the joint 77. The second flexible portion 97 is located in a position equal with or higher than the clamp 93. The second flexible portion 97, in the side view of the vehicle, extends over an area more rearward than the rear edge 21a of the head tube 21 and an area overlapping the head tube 21. The second flexible portion 97 crosses the rear edge 21a of the head tube 21 in the side view of the vehicle. The second flexible portion 97 includes a part overlapping the head tube 21 in the side view of the vehicle. The second flexible portion 97 is, in the front view of the vehicle, located in an area more rearward than the front edge 33Rb of the right front fork 33R and the front edge 33Lb of the left front fork 33L.

When the steering device 4 is in the neutral position, the most downstream portion 98 is located in a position described below. The most downstream portion 98 is located in a position equal with or lower than the clamp 93. The most downstream portion 98 is located in a position equal with or higher than the brake caliper 92. The most downstream portion 98 is, in the side view of the vehicle, located more rearward than the rear edge 33Ra of the right front fork 33R and the rear edge 33La of the left front fork 33L.

Here, the held site 74f held by the clamp 93 corresponds to the lower end of the second flexible portion 97, and corresponds to the upper end of the most downstream portion 98. The most downstream portion 98 is therefore located in a position substantially lower than the second flexible portion 97.

When the steering device 4 is in the neutral position, the third flexible portion 99 is located in a position described below. The third flexible portion 99 is located in a position equal with or lower than the clamp 93. The third flexible portion 99 is located in a position equal with or higher than the clamp 94. The third flexible portion 99 is located equal with or more rearward than the clamp 94 in the side view of the vehicle. The third flexible portion 99 is curved to bulge rearward in the side view of the vehicle.

Reference is made to Fig. 16. When the steering device 4 is in the neutral position, the brake disc 91, brake caliper 92, clamps 93 and 94, and guide 95 are located in the right area AR, respectively. When the steering device 4 is in the neutral position, the clamp 93 overlaps the under bracket 32 and right front fork 33R in the front view of the vehicle. When the steering device 4 is in the neutral position, the clamp 93 is located in a position slightly higher than clamp 57. When the steering device 4 is in the neutral position, the clamp 94 and guide 95 overlap the right front fork 33R in the front view of the vehicle, respectively. When the steering device 4 is in the neutral position, at least part of the brake caliper 92 overlaps the right front fork 33R in the front view of the vehicle. When the steering device 4 is in the neutral position, the brake disc 91, brake caliper 92, clamps 93 and 94, and guide 95 are located more leftward than the master cylinder 42 in the front view of the vehicle, respectively. When the steering device 4 is in the neutral position, the brake disc 91, brake caliper 92, clamps 93 and 94, and guide 95 are located more rightward than the clamp 57 and joint 77 in the front view of the vehicle, respectively. When the steering device 4 is in the neutral position, the brake disc 91 and brake caliper 92 are located more rightward than the front wheel 6 in the front view of the vehicle, respectively.

When the steering device 4 is in the neutral position, the downstream portion 96 is located in a position described below. The downstream portion 96 is located only in the right area AR. That is, the second flexible portion 97, most downstream portion 98, and third flexible portion 99 are located only in the right area AR, respectively. In the front view of the vehicle, the downstream portion 96 is located equal with or more rightward than the joint 77. The downstream portion 96 is located in a position equal with or lower than the upper bracket 31. The downstream portion 96 includes a part higher than the under bracket 32, a part lower than the under bracket 32, and a part overlapping the under bracket 32 in the front view of the vehicle. The entire part of the downstream portion 96 lower than the under bracket 32 is, in the front view of the vehicle, located equal with or more rightward than the right front fork 33R. In other words, the entire part of the downstream portion 96 lower than the under bracket 32 is, in the front view of the vehicle, located in either an area overlapping the right front fork 33R or an area more rightward than the right front fork 33R.

When the steering device 4 is in the neutral position, the second flexible portion 97 is located in a position described below. The second flexible portion 97 is located equal with or more rightward than the joint 77 in the front view of the vehicle. The second flexible portion 97 is located equal with or more leftward than the clamp 93 in the front view of the vehicle. The second flexible portion 97 is located in a position equal with or lower than the upper bracket 31 and equal with or higher than the under bracket 32. The second flexible portion 97 includes a part higher than the under bracket 32 and a part overlapping the under bracket 32 in the front view of the vehicle.

When the steering device 4 is in the neutral position, the most downstream portion 98 is located in a position described below. The third flexible portion 99 includes a part overlapping the under bracket 32 and a part lower than the under bracket 32 in the front view of the vehicle. The third flexible portion 99 extends to a position lower than the upper end 6a of the front wheel 6. The third flexible portion 99 is curved to bulge rightward in the front view of the vehicle. That is, in the front view of the vehicle, the third flexible portion 99 is curved to bulge rightward in a position more rightward than the right front fork 33R. The part of the most downstream portion 98 excluding the third flexible portion 99 is located in a position lower than the upper end 6a of the front wheel 6. The part of the most downstream portion 98 excluding the third flexible portion 99 overlaps the right front fork 33R in the front view of the vehicle altogether.

The brake disc 91, brake caliper 92, clamps 93 and 94, and guide 95 are located outside the second area A2, respectively. When the steering device 4 is in the neutral position, the clamp 93 is located in the middle area AM and right outer area ARR. When the steering device 4 is in the neutral position, the brake disc 91, brake caliper 92, clamp 94, and guide 95 are located in the bottom area AB and right outer area ARR, respectively.

When the steering device 4 is in the neutral position, the downstream portion 81 is located outside the second area A2. When the steering device 4 is in the neutral position, the downstream portion 81 is located in the middle area AM, bottom area AB, and right outer area ARR. When the steering device 4 is in the neutral position, the upstream portion 61 is also located outside the second area A2.

As noted hereinbefore, the second flexible portion 97 does not include a site corresponding to the second front overlapping portion 85 described in the first embodiment. That is, the second flexible portion 97 does not include a part located more forward than the head tube 21 and overlapping the head tube 21 in the front view of the vehicle. The second flexible portion 97 passes through neither the right opening BR nor the left opening BL.

Reference is made to Figs. 18 and 19. The brake disc 91, brake caliper 92, clamps 93 and 94, and guide 95 are located equal with or lower than the top imaginary plane PT, respectively. The clamp 93 is located equal with or higher than the middle imaginary plane PM. The brake disc 91, brake caliper 92, clamp 94, and guide 95 are located equal with or lower than the bottom imaginary plane PB, respectively.

The downstream portion 96 is located equal with or lower than the top imaginary plane PT. The second flexible portion 97 is located equal with or higher than the middle imaginary plane PM. The most downstream portion 98 includes a part located equal with or higher than the middle imaginary plane PM, and a part located lower than the middle imaginary plane PM.

Though not shown, the brake disc 91, brake caliper 92, clamps 93 and 94, and guide 95 are located outside the first area A1, respectively. The downstream portion 96 is located outside the first area A1. The downstream portion 96 extends from a position higher than the first area A1 to a position lower than the first area A1 without passing through the first area A1. When the steering device 4 is in the neutral position, the upstream portion 61 is also located outside the first area A1.

### 2. Advantageous effects

The straddled vehicle 1 according to the second embodiment provides effects similar to those of the first embodiment.

For example, the upstream portion 61 and downstream portion 81 are located outside the first area A1, respectively. This can conveniently inhibit at least one of the upstream portion 61 and downstream portion 81 from imposing restrictions on the other members.

The downstream portion 96 is located equal with or lower than the top imaginary plane PT. Particularly, therefore, the restrictions imposed by the downstream portion 96 on the other members located higher than the top imaginary plane PT can be inhibited conveniently.

The second flexible portion 97 bends when the steering device 4 rotates relative to the body frame 3, and the third flexible portion 99 bends when the right front fork 33R and left front fork 33L extend and contract. This can conveniently inhibit the second flexible portion 97 from bending in a complex way, and can conveniently inhibit the second flexible portion 97 from bending to a large extent. Consequently, the restrictions imposed by the second flexible portion 97 on the other members located adjacent the second flexible portion 97 can be inhibited conveniently. Similarly, the third flexible portion 99 can conveniently be inhibited from bending in a complex way, and the third flexible portion 99 can conveniently be inhibited from bending to large extent. Consequently, the restrictions imposed by the third flexible portion 99 on the other members located adjacent the third flexible portion 99 can be inhibited conveniently.

According to the straddled vehicle 1 in the second embodiment also, as described above, the primary piping 47 and secondary piping 49 can be arranged appropriately while inhibiting the restrictions imposed on the other members.

The straddled vehicle 1 in the second embodiment further provides effects different from those of the first embodiment.

When the steering device 4 is in the neutral position, the second flexible portion 97 is located in the right area AR. The second flexible portion 97 therefore mainly bends in the right area AR. On the other hand, the first flexible portion 62 mainly bends in the area more forward than the head tube 21. Thus, bending of the first flexible portion 62 mainly occurs in the area more forward than the head tube 21, and bending of the second flexible portion 97 mainly occurs in the right area AR. This can conveniently prevent the first flexible portion 62 and second flexible portion 97 from interfering with each other.

The brake caliper 92, clamps 93 and 94, and guide 95 are all located in the right area AR. The most downstream portion 98 can therefore more conveniently be located outside the first area A 1. Further, the most downstream portion 98 can more conveniently be located outside the second area A2. Moreover, the most downstream portion 98 can be shortened conveniently.

The first portion 64 of the first flexible portion 62 is located in the left area AL. On the other hand, when the steering device 4 is in the neutral position, the second flexible portion 97 is located in the right area AR. This can more conveniently prevent the first portion 64 of the first flexible portion 62 from interfering with the second flexible portion 97.

When the steering device 4 is in the neutral position, the second portion 65 of the first flexible portion 62 is located more forward than the front edge 21 b of the head tube 21 in the side view of the vehicle. On the other hand, when the steering device 4 is in the neutral position, the second flexible portion 97 is, in the side view of the vehicle, located more rearward than the front edge 33Rb of the right front fork 33R and the front edge 33Lb of the left front fork 33L. This can more conveniently prevent the second portion 65 of the first flexible portion 62 from interfering with the second flexible portion 97.

As described above, the entire first flexible portion 62 can more conveniently be prevented from interfering with the second flexible portion 97.

The second flexible portion 97 passes through neither the right opening BR nor the left opening BL. The second flexible portion 97 can therefore be shortened conveniently.

When the steering device 4 is in the neutral position, the most downstream portion 98 is, in the side view of the vehicle, located more rearward than the rear edge 33Ra of the right front fork 33R and the rear edge 33La of the left front fork 33L. Consequently, designs formed in the area more forward than the rear edge 33Ra of the right front fork 33R and in the area more forward than the rear edge 33La of the left front fork 33L can be improved conveniently.

When the steering device 4 is in the neutral position, the brake caliper 92, clamps 93 and 94, and guide 95 are, in the side view of the vehicle, located more rearward than the rear edge 33Ra of the right front fork 33R and the rear edge 33La of the left front fork 33L, respectively. Consequently, designs formed in the area more forward than the rear edge 33Ra of the right front fork 33R and in the area more forward than the rear edge 33La of the left front fork 33L can conveniently be improved. Further, the most downstream portion 98 can conveniently be located more rearward than the rear edge 33Ra of the right front fork 33R and the rear edge 33La of the left front fork 33L in the side view of the vehicle.

When the steering device 4 is in the neutral position, the clamps 93 and 94 and guide 95 are, in the side view of the vehicle, located more rearward than the rear edge 33Ra of the right front fork 33R, respectively. When the steering device 4 is in the neutral position, the clamps 93 and 94 and guide 95 overlap the right front fork 33R in the front view of the vehicle, respectively. The clamps 93 and 94 and guide 95 are therefore not visible in the front view of the vehicle, respectively. The brake caliper 94 is, in the side view of the vehicle, located more rearward than the rear edge 33Ra of the right front fork 33R. Further, at least part of the brake caliper 92 overlaps the right front fork 33R in the front view of the vehicle. At least part of the brake caliper 92 is therefore not visible in the front view of the vehicle. Consequently, a design formed in the area equal with or more forward than the rear edge 33Ra of the right front fork 33R in the side view of the vehicle can be improved more conveniently.

This invention is not limited to the foregoing embodiments, but may be modified as follows:

(1) In the foregoing first and second embodiments, the upstream portion 61 (i.e. the first flexible portion 62) is located equal with or higher than the middle imaginary plane PM. However, this invention is not limited to this. For example, the upstream portion 61 may include a part located in an area (however, excepting the first area A1) lower than the middle imaginary plane PM.
(2) The foregoing first and second embodiments have described arrangements of the upstream portion 61, downstream portions 81 and 96, second flexible portions 82 and 97, most downstream portions 83 and 98, and third flexible portions 84 and 99. However, this invention is not limited to this. When the steering device 4 is in the neutral position, the upstream portion 61 may be located in at least one of the top area AT, middle area AM, right outer area ARR, and left outer area ALL. When the steering device 4 is in the neutral position, the downstream portion 81 or 96 may be located in at least one of the middle area AM, bottom area AB, right outer area ARR, and left outer area ALL. When the steering device 4 is in the neutral position, the second flexible portion 82 or 97 may be located in at least one of the middle area AM, right outer area ARR, and left outer area ALL. When the steering device 4 is in the neutral position, the most downstream portion 83 or 98 and the third flexible portion 84 or 99 may be located in at least one of the middle area AM, bottom area AB, right outer area ARR, and left outer area ALL, respectively.
(3) The foregoing first and second embodiments have described arrangements of the upstream portion 61, downstream portions 81 and 96, second flexible portions 82 and 97, most downstream portions 83 and 98, and third flexible portions 84 and 99. However, this invention is not limited to this. For example, the upstream portion 61 may be located in at least one of the right area AR and left area AL. For example, the downstream portion 81 or 96, second flexible portion 82 or 97, most downstream portion 83 or 98, and third flexible portion 84 or 99 may be located in at least one of the right area AR and left area AL, respectively.
(4) In the foregoing first embodiment, the first front overlapping portion 63 of the first flexible portion 62 and the second front overlapping portion 85 of the second flexible portion 82 extend rightward and upward in the front view of the vehicle, respectively. However, this invention is not limited to this. For example, the first front overlapping portion 63 of the first flexible portion 62 may extend rightward and downward in the front view of the vehicle. For example, the first front overlapping portion 63 of the first flexible portion 62 may extend substantially horizontally in the front view of the vehicle. For example, the second front overlapping portion 85 of the second flexible portion 82 may extend rightward and downward in the front view of the vehicle. For example, the second front overlapping portion 85 of the second flexible portion 82 may extend substantially horizontally in the front view of the vehicle. For example, the first front overlapping portion 63 of the first flexible portion 62 does not need to extend in a similar direction to the second front overlapping portion 85 of the second flexible portion 82 in the front view of the vehicle. For example, the first front overlapping portion 63 of the first flexible portion 62 may extend in a widely different direction from the second front overlapping portion 85 of the second flexible portion 82 in the front view of the vehicle.
(5) In the foregoing first and second embodiments, the second flexible portion 82 is located in a position substantially higher than the most downstream portion 83. However, this invention is not limited to this. For example, the most downstream portion 83 may include a part located in a position higher than the second end (e.g. the held site 74c) of the second flexible portion 82.
(6) In the foregoing second embodiment, when the steering device 4 is in the neutral position, the second flexible portion 97 is, in the side view of the vehicle, located more rearward than the front edge 33Rb of the right front fork 33R and the front edge 33Lb of the left front fork 33L. However, this invention is not limited to this. When the steering device 4 is in the neutral position, the second flexible portion 97 may be, in the side view of the vehicle, located more rearward than at least one of the front edge 21b of the head tube 21, the front edge 33Rb of the right front fork 33R, and the front edge 33Lb of the left front fork 33L. This modified embodiment can also conveniently prevent the second portion 65 of the first flexible portion 62 from interfering with the second flexible portion 97.
(7) In the foregoing first and second embodiments, the upstream portion 61 is a part of the primary piping 47, but this invention is not limited to this. For example, the upstream portion 61 may be the whole of the primary piping 47. For example, the joint 55, joint 56, and clamp 57 may be omitted. The upstream portion 61 may extend from the hydraulic unit 45 to the master cylinder 42. The first end of the upstream portion 61 may be the site (e.g. the first end 51a of the pipe 51) held by the hydraulic unit 45.
(8) In the foregoing first and second embodiments, the first flexible portion 62 is the whole of the upstream portion 61. The invention is not limited to this. For example, the first flexible portion 62 may be a part of the upstream portion 61. For example, the brake system 40 may have a fourth holding member besides the master cylinder 42. The fourth holding member is supported by the steering device 4, and holds the upstream portion 61. The site of the upstream portion 61 held by the fourth holding member is located on the path of the upstream portion 61 between the first end (e.g. the held site 53c) and the second end (e.g. the second end 53b) of the upstream portion 61. The site of the upstream portion 61 held by the fourth holding member is immovable relative to the steering device 4. The upstream portion 61 extends from the clamp 57 to the master cylinder 42. The first flexible portion 62 extends from the clamp 57 to the fourth holding member. That is, the first flexible portion 62 is a part of the upstream portion 61. The second end of the first flexible portion 62 is the site held by the fourth holding member. Here, the fourth holding member, preferably, is supported by the upper device 4a. The site of the upstream portion 61 held by the fourth holding member, preferably, is immovable relative to the upper device 4a.
(9) In the foregoing first and second embodiments, the downstream portion 81 or 96 is a part of the secondary piping 49. The invention is not limited to this. For example, the downstream portion 81 may be the whole of the secondary piping 49. For example, the joints 75, 76, and 77 may be omitted. The downstream portion 81 may extend from the hydraulic unit 45 to the brake caliper 44. The first end of the downstream portion 81 may be a site (e.g. the first end 7 1a of the pipe 71) held by the hydraulic unit 45. The downstream portion 96 may be changed likewise.
(10) In the foregoing first embodiment, the first end of the third flexible portion 84 (i.e. the held site 74c of the pipe 74) is the same as the second end of the second flexible portion 82. In the foregoing second embodiment, the first end of the third flexible portion 99 (i.e. the held site 74f of the pipe 74) is the same as the second end of the second flexible portion 97. However, this invention is not limited to this. For example, the first end of the third flexible portion 84 may be different from the second end of the second flexible portion 82. For example, the brake system 40 may have a fifth holding member besides the clamp 78. The fifth holding member is supported by the upper device 4a, and holds the most downstream portion 83. The site of the most downstream portion 83 held by the fifth holding member is located on the path of the most downstream portion 83 between the first end (e.g. the held site 74c) and the second end (e.g. the second end 74b) of the most downstream portion 83. The site of the most downstream portion 83 held by the fifth holding member is immovable relative to the upper device 4a. The third flexible portion 84 extends from the fifth holding member to the clamp 79. The first end of the third flexible portion 84 is the site held by the fifth holding member. The second end of the second flexible portion 97 is the held site 74c of the pipe 74. That is, the first end of the third flexible portion 84 is different from the second end of the second flexible portion 82. Similarly, the first end of the third flexible portion 99 may be different from the second end of the second flexible portion 97.
(11) In the foregoing first and second embodiments, the second end of the third flexible portion 84 or 99 is held to be immovable relative to the lower device 4b. The invention is not limited to this. For example, the second end of the third flexible portion 84 or 99 may be held to be immovable relative to at least one of the lower right tube 35R, lower left tube 35L and front axle 36.
(12) In the foregoing first embodiment, the third flexible portion 84 is a part of the most downstream portion 83. The invention is not limited to this. In the foregoing second embodiment, the third flexible portion 99 is a part of the most downstream portion 97. The invention is not limited to this. For example, the third flexible portion 84 may be the whole of the most downstream portion 83. For example, the clamp 79 may be omitted. In this modified embodiment, the second end of the third flexible portion 84 is the same as the second end of the most downstream portion 83 (e.g. the second end 74b of the pipe 74). The third flexible portion 84 extends from the clamp 78 to the brake caliper 44. The most downstream portion 83 also extends from the clamp 78 to the brake caliper 44. That is, the third flexible portion 84 is the whole of the most downstream portion 83. Similarly, the third flexible portion 99 may be the whole of the most downstream portion 98.
(13) In the foregoing first and second embodiments, the number of pipes (51-53) included in the primary piping 47 is three. The invention is not limited to this. For example, the number of pipes included in the primary piping 47 may be one, two, four or more. In the foregoing first and second embodiments, the number of pipes (71-74) included in the secondary piping 49 is four. The invention is not limited to this. For example, the number of pipes included in the secondary piping 49 may be one, two, three, five or more.
(14) In the foregoing first and second embodiments, the pipes 51-53 and 71-74 have been described. The invention is not limited to this. For example, the pipes 51 and 71 may have no flexibility, respectively. For example, the pipes 51 and 71 may be metal pipes, respectively. For example, the pipes 52, 72, and 73 may have flexibility, respectively. For example, the pipes 52, 72, and 73 may be rubber pipes, respectively.
(15) In the foregoing first and second embodiments, the height position of the clamp 57 has been described. The invention is not limited to this. For example, when the steering device 4 is in the neutral position, the clamp 57 may be located in a position lower than the under bracket 32. Specifically, when the steering device 4 is in the neutral position, the entire clamp 57 may be located in a position lower than the lower end of the under bracket 32. For example, when the steering device 4 is in the neutral position, at least part of the clamp 57 may be located in the same height position as the under bracket 32. Specifically, when the steering device 4 is in the neutral position, the clamp 57 may include a first portion located in a position equal with or higher than the lower end of the under bracket 32 and equal with or lower than the upper end of the under bracket 32. Here, the first portion of the clamp 57 may be the whole of clamp 57 or may be a part of the clamp 57. When the steering device 4 is in the neutral position, the clamp 57 may, in addition to the first portion of the clamp 57, include at least one of a part located in a position lower than the lower end of the under bracket 32 and a part located in a position higher than the upper end of the under bracket 32. For example, when the steering device 4 is in the neutral position, the clamp 57 may be located in a position higher than the under bracket 32. Specifically, when the steering device 4 is in the neutral position, the entire clamp 57 may be located in a position higher than the upper end of the under bracket 32. For example, when the steering device 4 is in the neutral position, the clamp 57 may be located in a position higher than the upper bracket 31.
(16) In the foregoing first and second embodiments, the height positions of the joint 77 and clamps 78 and 93 have been described. The invention is not limited to this. For example, when the steering device 4 is in the neutral position, the joint 77 may be located in a position lower than the under bracket 32. For example, when the steering device 4 is in the neutral position, at least part of the joint 77 may be located in the same height position as the under bracket 32. For example, when the steering device 4 is in the neutral position, the joint 77 may be located in a position higher than the under bracket 32. For example, when the steering device 4 is in the neutral position, the joint 77 may be located in a position equal with or lower than the upper bracket 31. Similarly, the arrangement of the clamps 78 and 93 may be changed as appropriate.
(17) The foregoing first embodiment has described a relationship between the height positions of the clamp 57, joint 77, and clamp 78. The foregoing second embodiment has described a relationship between the height positions of the clamp 57, joint 77, and clamp 93. The invention is not limited to this. For example, the clamp 57 may be located in a position higher than the joint 77, or may be located in a position lower than the joint 77. For example, the clamp 57 may be located in a position higher than the clamp 78, or may be located in a position lower than the clamp 78. The joint 77 is located in a position higher than the clamp 78. Similarly, the relationship between the height positions of the clamp 57, joint 77, and clamp 93 may be changed.
(18) The foregoing first and second embodiments have described arrangements of the clamp 57, joint 77, and clamps 78 and 93 in the front view. The invention is not limited to this. For example, when the steering device 4 is in the neutral position, the clamp 57 may, in the front view of the vehicle, overlap at least one of the head tube 21, right front fork 33R, left front fork 33L, upper bracket 31 and under bracket 32. For example, when the steering device 4 is in the neutral position, the clamp 57 does not need to overlap the head tube 21, right front fork 33R, left front fork 33L, upper bracket 31, or under bracket 32 in the front view of the vehicle. For example, when the steering device 4 is in the neutral position, the clamp 57 may be located more leftward than the right front fork 33R and more rightward than the left front fork 33L in the front view of the vehicle. For example, when the steering device 4 is in the neutral position, the clamp 57 may be located more rightward than the right front fork 33R and may be located more leftward than the left front fork 33L in the front view of the vehicle. Similarly, the arrangement of the joint 77 and clamps 78 and 93 may be changed as appropriate.
(19) In the foregoing first and second embodiments, the clamp 57 is located in the left area AL and the master cylinder 42 is located in the right area AR. This invention is not limited to this. For example, the clamp 57 may be located in the right area AR, and the master cylinder 42 in the left area AL. For example, both the clamp 57 and master cylinder 42 may be located in either the right area AR or the left area AL.
(20) In the foregoing first embodiment, the joint 77 is located in the right area AR, and the clamp 78 in the left area AL. In the foregoing second embodiment, both the joint 77 and clamp 93 are located in the right area AR. The invention is not limited to this. For example, the joint 77 may be located in the left area AL, and the clamp 78 in the right area AR. For example, both the joint 77 and clamp 78 may be located in either the right area AR or the left area AL. Similarly, the arrangement of the joint 77 and clamp 93 may be changed as appropriate.
(21) In the foregoing first embodiment, the clamps 78 and 79, guide 80, brake disc 43, and brake caliper 44 are all located in the left area AL. In the foregoing second embodiment, the clamps 78 and 79, guide 95, brake disc 91, and brake caliper 92 are all located in the right area AR. The invention is not limited to this. At least one of the clamps 78 and 79, guide 80, brake disc 43, and brake caliper 44 may be located in the right area AR, and the rest in the left area AL. At least one of the clamps 78 and 79, guide 95, brake disc 91, and brake caliper 92 may be located in the right area AR, and the rest in the left area AL.
(22) In the foregoing first embodiment, the master cylinder 42 and joint 77 are located in the right area AR, and the clamps 57 and 78 and brake caliper 44 in the left area AL. The invention is not limited to this. For example, the master cylinder 42 and joint 77 may be located in the left area AL, and the clamps 57 and 78 and brake caliper 44 in the right area AR.
(23) In the foregoing second embodiment, the master cylinder 42, joint 77, clamp 93, brake caliper 92, and second flexible portion 97 are located in the right area AR, and the clamp 57 and the first portion 64 of the first flexible portion 62 in the left area AL. The invention is not limited to this. For example, the master cylinder 42, joint 77, clamp 93, brake caliper 92, and second flexible portion 97 may be located in the left area AL, and the clamp 57 and the first portion 64 of the first flexible portion 62 in the right area AR.
(24) The foregoing first and second embodiments have described an arrangement of the clamp 57 and master cylinder 42. The invention is not limited to this. For example, when the steering device 4 is in the neutral position, the clamp 57 may be located in at least one of the top area AT, middle area AM, right outer area ARR, and left outer area ALL. For example, when the steering device 4 is in the neutral position, the master cylinder 42 may be located in at least one of the top area AT, right outer area ARR, and left outer area ALL.
(25) The foregoing first and second embodiments have described arrangements of the joint 55, clamps 78, 79, 93, and 94, guides 80 and 95, brake discs 43 and 91, and brake calipers 44 and 92. The invention is not limited to this. For example, when the steering device 4 is in the neutral position, the joint 77 and clamp 78 or 93 may be located in at least one of the middle area AM, right outer area ARR, and left outer area ALL, respectively. For example, when the steering device 4 is in the neutral position, the clamp 79 or 94, guide 80 or 95, brake disc 43 or 91, and brake caliper 44 or 92 may be located in at least one of the bottom area AB, right outer area ARR, and left outer area ALL, respectively.
(26) In the foregoing first and second embodiments, the clamp 57 is an example of the first holding member. The invention is not limited to this. The first holding member may be a member different from the clamp 57. The first holding member may have a construction different from the clamp 57. For example, the clamp 57 may be omitted, and the joint 56 may function as the first holding member. For example, the joint 56 and clamp 57 may be omitted, and the joint 55 may function as the first holding member. For example, the joint 55, joint 56, and clamp 57 may be omitted, and the hydraulic unit 45 may function as the first holding member.
(27) In the foregoing first and second embodiments, the number of brake disc 43 or 91 is one and the number of brake caliper 44 or 92 is one. The invention is not limited to this. For example, the number of brake disc 43 may be two. For example, the number of brake caliper 44 may be two. When, for example, the steering device 4 is in the neutral position, one of the brake discs 43 and one of the brake calipers 44 may be located in the right area AR, and the other brake disc 43 and the other brake caliper 44 in the left area AL. Similarly, the brake disc 91 and brake caliper 92 may be changed.
(28) In the foregoing first and second embodiments, the hydraulic unit 45 may regulate the hydraulic pressure of the brake fluid for braking the rear wheel 15. Or the hydraulic unit 45 does not need to regulate the hydraulic pressure of the brake fluid for braking the rear wheel 15.

Where the hydraulic unit 45 regulates the hydraulic pressure of the brake fluid for braking the rear wheel 15. the brake system 40 may have a rear brake caliper and secondary piping, not shown, for the rear wheel 15. Further, the brake system 40 may have a rear brake disc not shown. The rear brake disc is fixedly connected to the rear wheel 15. The rear brake disc rotates with the rear wheel 15 about the rear axle 14. The rear brake caliper is supported by the swing arm 13. The rear brake caliper is immovable relative to the swing arm 13. The rear brake caliper is hydraulically operable. The rear brake caliper, with the hydraulic pressure of the brake fluid, brakes the rotation of the rear wheel 15 about the rear axle 14. More particularly, the rear brake caliper applies resistance (specifically, frictional force) to the rear brake disc (i.e. the rear wheel 15) for braking the rotation of the rear wheel 15. That is, the rear brake caliper brakes the rear wheel 15.

The hydraulic unit 45 regulates the hydraulic pressure of the brake fluid for the rear wheel 15. For example, the hydraulic unit 45 regulates the hydraulic pressure of the brake fluid to prevent the lock tendency of the rear wheel 15. The secondary piping for the rear wheel 15 connects the hydraulic unit 45 and rear brake caliper to provide communication therebetween. The secondary piping for the rear wheel 15 outputs the hydraulic pressure of the brake fluid regulated by the hydraulic unit 45 to the rear brake caliper. The rear brake caliper brakes the rear wheel 15 in response to the hydraulic pressure of the brake fluid regulated by the hydraulic unit 45.

Further, the brake system 40 may have an input device for the rear wheel 15, a master cylinder for the rear wheel 15, and primary piping for the rear wheel 15. The rider on the straddled vehicle 1 operates the input device for the rear wheel 15. The input device for the rear wheel 15 is a brake lever or brake pedal, for example. In response to operation of the input device for the rear wheel 15, the master cylinder for the rear wheel 15 generates the hydraulic pressure of the brake fluid. The primary piping for the rear wheel 15 connects the master cylinder for the rear wheel 15 and the hydraulic unit 45. The primary piping for the rear wheel 15 inputs to the hydraulic unit 45 the hydraulic pressure of the brake fluid generated by the master cylinder for the rear wheel 15. The hydraulic unit 45 regulates the hydraulic pressure of the brake fluid. Specifically, the hydraulic unit 45 regulates the hydraulic pressure of the brake fluid generated by the master cylinder for the rear wheel 15.

(29) In the foregoing first and second embodiments, the hydraulic unit 45 is supported by the seat frame 27. The clamp 57 is supported by the left main frame 22L. The joint 77 is supported by the right main frame 22R. However, the invention is not limited to this. For example, the hydraulic unit 45 may be supported by at least any one of the elements 20-24 and 26-28 included in the body frame 3. Similarly, each of the clamp 57 and joint 77 may be supported by at least any one of the elements 20-24 and 26-28 included in the body frame 3.

(30) In the foregoing first and second embodiments, the master cylinder 42 is supported by the handlebar 37. The clamp 78 or 93 is supported by the under bracket 32. The clamp 79, guide 80, and brake caliper 44 are supported by the lower left tube 35L. The clamp 94, guide 95, and brake caliper 92 are supported by the lower right tube 35R. However, the invention is not limited to this. For example, the master cylinder 42, clamps 78, 79, 93 and 94, guides 80 and 95, and brake calipers 44 and 92 may be supported by at least any one of the elements included in the steering device 4, respectively. Here, it is preferable that the master cylinder 42 and clamp 78 or 93 are supported by at least any one of the elements included in the upper device 4a, respectively. It is preferable that the clamp 79 or 94, guide 80 or 95, and brake caliper 44 or 92 are supported by at least any one of the elements included in the lower device 4b.

(31) In the foregoing first and second embodiments, the clamps 79 and 94, guides 80 and 95, and brake calipers 44 and 92 are immovable relative to the lower device 4b. The invention is not limited to this. For example, the clamps 79 and 94, guides 80 and 95, and brake calipers 44 and 92 may be immovable relative to at least any one of the elements included in the lower device 4b, respectively.

(32) In the foregoing first and second embodiments, the front fender 7 is located in a position lower than the under bracket 32. The invention is not limited to this. For example, at least part of the front fender 7 may be located in a position higher than the lower end of the under bracket 32. For example, the front fender 7 may include a part located in a position lower than the lower end of the under bracket 32, and a part located in a position higher than the lower end of the under bracket 32.

(33) In the foregoing first and second embodiments, the straddled vehicle 1 has been illustrated as an example of dual purpose vehicles. The invention is not limited to this. The straddled vehicle 1 may be changed to vehicles of other types, such as the off-road type, street type, sport type or a vehicle for irregular grounds (ALL-TERRAIN VEHICLE). For example, the straddled vehicle 1 may be changed to a vehicle other than the scooter type.

(34) In the foregoing first and second embodiments, the number of front wheel 6 is one. The invention is not limited to this. The number of front wheel 6 may be changed to two. In the foregoing first and second embodiments, the number of rear wheel 15 is one. The invention is not limited to this. The number of rear wheel 15 may be changed to two.

(35) In the foregoing first and second embodiments, the engine (internal combustion engine) 8 has been illustrated as power source. The invention is not limited to this. For example, the straddled vehicle 1 may have an electric motor as power source.

(36) The foregoing first and second embodiments, and each of the modified embodiments described in paragraphs (1) to (35) above may be further varied as appropriate by replacing or combining their constructions with the constructions of the other modified embodiments.

## Claims

1. A straddled vehicle (1) comprising:
a body frame (3);
a steering device (4) rotatably supported by the body frame (3);
a front wheel (6) supported by the steering device (4);
a master cylinder (42) supported by the steering device (4);
a brake caliper (44, 92) supported by the steering device (4);
a hydraulic unit (45) supported by the body frame (3);
primary piping (47) connecting the master cylinder (42) and the hydraulic unit (45);
secondary piping (49) connecting the hydraulic unit (45) and the brake caliper (44, 92);
a first holding member (57) supported by the body frame (3) and holding the primary piping (47);
a second holding member (77) supported by the body frame (3) and holding the secondary piping (49); and
a third holding member (78, 93) supported by the steering device (4) and holding the secondary piping (49);
wherein
the body frame (3) includes a head tube (21);
the steering device (4) includes:
a steering shaft (30) supported by the head tube (21) to be rotatable about a center axis (L) of the head tube (21);
an upper bracket (31) supported by the steering shaft (30);
an under bracket (32) supported by the steering shaft (30) and located in a position lower than the upper bracket (31);
an extendible and contractible right front fork (33R) supported by the upper bracket (31) and the under bracket (32);
an extendible and contractible left front fork (33L) supported by the upper bracket (31) and the under bracket (32); and
a front axle (36) supported by the right front fork (33R) and the left front fork (33L) for supporting the front wheel (6);
the hydraulic unit (45) is located more rearward than the head tube (21) in a side view of the vehicle;
the first holding member (57) is located more rearward than the head tube (21) in the side view of the vehicle;
the second holding member (77) is located more rearward than the head tube (21) in the side view of the vehicle;
the primary piping (47) includes an upstream portion (61) extending from the first holding member (57) to the master cylinder (42);
the upstream portion (61) includes a first flexible portion (62) which is a whole or a part of the upstream portion (61);
the first flexible portion (62) includes a first end (53c) held by the first holding member (57);
the first flexible portion (62) is configured to bend when the steering device (4) rotates relative to the body frame (3);
the secondary piping (49) includes a downstream portion (81, 96) extending from the second holding member (77) to the brake caliper (44, 92);
the downstream portion (81, 96) includes:
a second flexible portion (82, 97) extending from the second holding member (77) to the third holding member (78, 93); and
a most downstream portion (83, 98) extending from the third holding member (78, 93) to the brake caliper (44, 92);
the second flexible portion (82, 97) is configured to bend when the steering device (4) rotates relative to the body frame (3);
the most downstream portion (83, 98) includes a third flexible portion (84, 99) which is a whole or a part of the most downstream portion (83, 98);
the third flexible portion (84, 99) is configured to bend when the right front fork (33R) and the left front fork (33L) extend and contract;
a top imaginary plane (PT) is set to an imaginary plane perpendicular to the center axis (L) of the head tube (21) and in contact with an upper part of the upper bracket (31);
a middle imaginary plane (PM) is set to an imaginary plane parallel to the top imaginary plane (PT) and in contact with a lower part of the under bracket (32);
a bottom imaginary plane (PB) is set to an imaginary plane parallel to the top imaginary plane (PT) and in contact with an upper part of the front wheel (6);
a first area (A1) is set to an area demarcated by the middle imaginary plane (PM), the bottom imaginary plane (PB), the right front fork (33R), and the left front fork (33L), when the straddled vehicle (1) is seen in a first direction (D1) which crosses the center axis (L) of the head tube (21) at right angles, and crosses the front axle (36) at right angles;
the upstream portion (61) is located outside the first area (A1);
the downstream portion (81, 96) is located outside the first area (A1);
the brake caliper (44, 92) is located in a position lower than the third holding member (78, 93); **characterized in that**
the entire downstream portion (81, 96) is located equal with or lower than the top imaginary plane (PT); and
the second holding member (77) is located in a position higher than the third holding member (78, 93).

2. The straddled vehicle (1) according to claim 1, wherein the upstream portion (61) is located equal with or higher than the middle imaginary plane (PM).

3. The straddled vehicle (1) according to claim 1 or 2, wherein the second flexible portion (82, 97) is located equal with or higher than the middle imaginary plane (PM).

4. The straddled vehicle (1) according to any one of claims 1 to 3, wherein:
the master cylinder (42) is located outside the first area (A1);
the first holding member (57) is located outside the first area (A1);
the second holding member (77) is located outside the first area (A1);
the third holding member (78, 93) is located outside the first area (A1);
the brake caliper (44, 92) is located outside the first area (A1);
the second holding member (77) is located equal with or lower than the top imaginary plane (PT);
the third holding member (78, 93) is located equal with or lower than the top imaginary plane (PT); and
the brake caliper (44, 92) is located equal with or lower than the bottom imaginary plane (PB).

5. The straddled vehicle (1) according to any one of claims 1 to 4, wherein:
the master cylinder (42) is located higher than the top imaginary plane (PT);
the first holding member (57) is located equal with or higher than the middle imaginary plane (PM);
the second holding member (77) is located equal with or higher than the middle imaginary plane (PM); and
the third holding member (78, 93) is located equal with or higher than the middle imaginary plane (PM).

6. The straddled vehicle (1) according to any one of claims 1 to 5, wherein:
a second area (A2) is set to an area which is, in a front view of the vehicle, lower than the under bracket (32), higher than an upper end of the front wheel (6), more leftward than the right front fork (33R), and more rightward than the left front fork (33L);
when the steering device (4) is in a neutral position relative to the body frame (3), the upstream portion (61) is located outside the second area (A2); and
when the steering device (4) is in the neutral position, the downstream portion (81, 96) is located outside the second area (A2).

7. The straddled vehicle (1) according to claim 6, wherein:
when the steering device (4) is in the neutral position, the master cylinder (42) is located outside the second area (A2);
when the steering device (4) is in the neutral position, the first holding member (57) is located outside the second area (A2);
when the steering device (4) is in the neutral position, the second holding member (77) is located outside the second area (A2);
when the steering device (4) is in the neutral position, the third holding member (78, 93) is located outside the second area (A2); and
when the steering device (4) is in the neutral position, the brake caliper (44, 92) is located outside the second area (A2).

8. The straddled vehicle (1) according to claim 6 or 7, wherein:
a top area (AT) is set to an area higher than the upper bracket (31) in the front view of the vehicle; a middle area (AM) is set to an area equal with or lower than the upper bracket (31) and equal with or higher than the under bracket (32) in the front view of the vehicle;
a bottom area (AB) is set to an area equal with or lower than the upper end of the front wheel (6) in the front view of the vehicle;
a right outer area (ARR) is set to an area equal with or more rightward than the right front fork (33R) in the front view of the vehicle;
a left outer area (ALL) is set to an area equal with or more leftward than the left front fork (33L) in the front view of the vehicle;
when the steering device (4) is in the neutral position, the upstream portion (61) is located in at least one of the top area (AT), the middle area (AM), the right outer area (ARR), and the left outer area (ALL); and
when the steering device (4) is in the neutral position, the downstream portion (81, 96) is located in at least one of the middle area (AM), the bottom area (AB), the right outer area (ARR), and the left outer area (ALL).

9. The straddled vehicle (1) according to claim 8, wherein:
when the steering device (4) is in the neutral position, the master cylinder (42) is located in at least one of the top area (AT), the right outer area (ARR), and the left outer area (ALL);
when the steering device (4) is in the neutral position, the first holding member (57) is located in at least one of the middle area (AM), the right outer area (ARR), and the left outer area (ALL);
when the steering device (4) is in the neutral position, the second holding member (77) is located in at least one of the middle area (AM), the right outer area (ARR), and the left outer area (ALL);
when the steering device (4) is in the neutral position, the third holding member (78, 93) is located in at least one of the middle area (AM), the right outer area (ARR), and the left outer area (ALL); and
when the steering device (4) is in the neutral position, the brake caliper (44, 92) is located in at least one of the bottom area (AB), the right outer area (ARR), and the left outer area (ALL).

10. The straddled vehicle (1) according to any one of claims 1 to 9, wherein:
the second flexible portion (82, 97) is located in a position equal with or higher than the third holding member (78, 93); and
the most downstream portion (83, 98) is located in a position equal with or lower than the third holding member (78, 93).

11. The straddled vehicle (1) according to any one of claims 1 to 10, wherein:
a right area (AR) is set to an area more rightward than the center axis (L) of the head tube (21) in the front view of the vehicle;
a left area (AL) is set to an area more leftward than the center axis (L) of the head tube (21) in the front view of the vehicle;
when the steering device (4) is in the neutral position relative to the body frame (3), the master cylinder (42) is located in one of the right area (AR) and the left area (AL);
the first holding member (57) is located in the other of the right area (AR) and the left area (AL);
the first flexible portion (62) includes a first front overlapping portion (63) located more forward than the head tube (21), the first front overlapping portion (63) overlapping the head tube (21) in the front view of the vehicle; the second holding member (77) is located in the one of the right area (AR) and the left area (AL);
when the steering device (4) is in the neutral position, the third holding member (78, 93) is located in the other of the right area (AR) and the left area (AL);
the second flexible portion (82, 97) includes a second front overlapping portion (85) located more forward than the head tube (21), the second front overlapping portion (85) overlapping the head tube (21) in the front view of the vehicle; and
when the steering device (4) is in the neutral position, the brake caliper (44, 92) is located in the other of the right area (AR) and the left area (AL).

12. The straddled vehicle (1) according to claim 11, wherein, when the steering device (4) is in the neutral position, the first front overlapping portion (63) of the first flexible portion (62) does not overlap the second front overlapping portion (85) of the second flexible portion (82, 97) in the front view of the vehicle.

13. The straddled vehicle (1) according to any one of claims 1 to 10, wherein:
a right area (AR) is set to an area more rightward than the center axis (L) of the head tube (21) in the front view of the vehicle;
a left area (AL) is set to an area more leftward than the center axis (L) of the head tube (21) in the front view of the vehicle;
when the steering device (4) is in the neutral position relative to the body frame (3), the master cylinder (42) is located in one of the right area (AR) and the left area (AL);
the first holding member (57) is located in the other of the right area (AR) and the left area (AL);
the first flexible portion (62) includes a first front overlapping portion (63) located more forward than the head tube (21), the first front overlapping portion (63) overlapping the head tube (21) in the front view of the vehicle;
the second holding member (77) is located in the one of the right area (AR) and the left area (AL);
when the steering device (4) is in the neutral position, the third holding member (78, 93) is located in the one of the right area (AR) and the left area (AL);
when the steering device (4) is in the neutral position, the second flexible portion (82, 97) is located in the one of the right area (AR) and the left area (AL); and
when the steering device (4) is in the neutral position, the brake caliper (44, 92) is located in the one of the right area (AR) and the left area (AL).

14. The straddled vehicle (1) according to claim 13, wherein:
the first flexible portion (62) includes a second end (53b) held to be immovable relative to the steering device (4);
the first flexible portion (62) includes:
a first portion (64) extending from the first end (53c) of the first flexible portion (62) to the first front overlapping portion (63) of the first flexible portion (62); and
a second portion (65) extending from the first front overlapping portion (63) of the first flexible portion (62) to the second end (53b) of the first flexible portion (62);
the first portion (64) of the first flexible portion (62) is located in the other of the right area (AR) and the left area (AL);
when the steering device (4) is in the neutral position, the second portion (65) of the first flexible portion (62) is located more forward than a front edge (21b) of the head tube (21) in the side view of the vehicle; and
when the steering device (4) is in the neutral position, the second flexible portion (82, 97) is, in the side view of the vehicle, located more rearward than at least one of the front edge (21 b) of the head tube (21), a front edge (33Rb) of the right front fork (33R), and a front edge (33Lb) of the left front fork (33L).

## Patentansprüche

1. Ein gespreiztes Fahrzeug (1), umfassend:
einen Körperrahmen (3);
eine Lenkeinrichtung (4), die drehbar von dem Körperrahmen (3) gelagert wird;
ein Vorderrad (6), das von der Lenkeinrichtung (4) gelagert wird;
einen Masterzylinder (42), der von der Lenkeinrichtung (4) gestützt wird;
einen Bremssattel (44, 92), der von der Lenkeinrichtung (4) gestützt wird;
eine Hydraulikeinheit (45), die vom Körperrahmen (3) gestützt wird;
eine Primärleitung (47), die den Masterzylinder (42) und die Hydraulikeinheit (45) verbindet;
eine Sekundärleitung (49), die die Hydraulikeinheit (45) und den Bremssattel (44, 92) verbindet;
ein erstes Halteelement (57), das von dem Körperrahmen (3) gestützt wird und die Primärleitung (47) hält;
ein zweites Halteelement (77), das von dem Körperrahmen (3) gestützt wird und die Sekundärleitung (49) hält; und
ein drittes Halteelement (78, 93), das von der Lenkeinrichtung (4) gestützt wird und die Sekundärleitung (49) hält;
wobei
der Körperrahmen (3) ein Kopfrohr (21) aufweist;
die Lenkeinrichtung (4) enthält:
eine Lenkwelle (30), die von dem Kopfrohr (21) gelagert wird, um um eine Mittelachse (L) des Kopfrohrs (21) drehbar zu sein;
eine obere Halterung (31), die von der Lenkwelle (30) gestützt wird;
eine untere Halterung (32), die von der Lenkwelle (30) gestützt wird und in einer Position unterhalb der oberen Halterung (31) gelegen ist;
eine ausziehbare und zusammenziehbare rechte Vordergabel (33R), die von der oberen Halterung (31) und der unteren Halterung (32) gestützt wird;
eine ausziehbare und zusammenziehbare linke Vordergabel (33L), die von der oberen Halterung (31) und der unteren Halterung (32) gestützt wird; und
eine Vorderachse (36), die von der rechten Vordergabel (33R) und der linken Vordergabel (33L) gelagert wird, um das Vorderrad (6) zu lagern;
die Hydraulikeinheit (45) in einer Seitenansicht des Fahrzeugs weiter hinten als das Kopfrohr (21) gelegen ist;
das erste Halteelement (57) in der Seitenansicht des Fahrzeugs weiter hinten gelegen ist als das Kopfrohr (21);
das zweite Halteelement (77) in der Seitenansicht des Fahrzeugs weiter hinten gelegen ist als das Kopfrohr (21);
die Primärleitung (47) einen stromaufwärts gelegenen Abschnitt (61) aufweist, der sich von dem ersten Halteelement (57) zu dem Masterzylinder (42) erstreckt;
der stromaufwärts gelegene Abschnitt (61) einen ersten flexiblen Abschnitt (62) aufweist, der ein Ganzes oder ein Teil des stromaufwärts gelegenen Abschnitts (61) ist;
der erste flexible Abschnitt (62) ein erstes Ende (53c) enthält, das von dem ersten Halteelement (57) gehalten wird;
der erste flexible Abschnitt (62) so konfiguriert ist, dass er sich biegt, wenn sich die Lenkeinrichtung (4) relativ zu dem Körperrahmen (3) dreht;
die Sekundärleitung (49) einen stromabwärts gelegenen Abschnitt (81, 96) enthält, der sich von dem zweiten Halteelement (77) zu dem Bremssattel (44, 92) erstreckt;
der stromabwärts gelegene Abschnitt (81, 96) enthält:
einen zweiten flexiblen Abschnitt (82, 97), der sich von dem zweiten Halteelement (77) zu dem dritten Halteelement (78, 93) erstreckt; und
einen am weitesten stromabwärts gelegenen Abschnitt (83, 98), der sich von dem dritten Halteelement (78, 93) zu dem Bremssattel (44, 92) erstreckt;
der zweite flexible Abschnitt (82, 97) so konfiguriert ist, dass er sich biegt, wenn sich die Lenkeinrichtung (4) relativ zu dem Körperrahmen (3) dreht;
der am weitesten stromabwärts gelegene Abschnitt (83, 98) einen dritten flexiblen Abschnitt (84, 99) enthält, der ein Ganzes oder ein Teil des am weitesten stromabwärts gelegenen Abschnitts (83, 98) ist;
der dritte flexible Abschnitt (84, 99) so konfiguriert ist, dass er sich biegt, wenn die rechte Vordergabel (33R) und die linke Vordergabel (33L) sich ausziehen und zusammenziehen;
eine obere imaginäre Ebene (PT) auf eine imaginäre Ebene senkrecht zur Mittelachse (L) des Kopfrohrs (21) und in Kontakt mit einem oberen Teil der oberen Halterung (31) gesetzt ist;
eine mittlere imaginäre Ebene (PM) auf eine imaginäre Ebene parallel zur oberen imaginären Ebene (PT) und in Kontakt mit einem unteren Teil der unteren Halterung (32) gesetzt ist;
eine untere imaginäre Ebene (PB) auf eine imaginäre Ebene parallel zur oberen imaginären Ebene (PT) und in Kontakt mit einem oberen Teil des Vorderrads (6) gesetzt ist;
ein erster Bereich (A1) auf einen Bereich gesetzt ist, der durch die mittlere imaginäre Ebene (PM), die untere imaginäre Ebene (PB), die rechte Vordergabel (33R) und die linke Vordergabel (33L) abgegrenzt ist, wenn das gespreizte Fahrzeug (1) in einer ersten Richtung (D1) gesehen wird, die die Mittelachse (L) des Kopfrohrs (21) im rechten Winkel kreuzt und die Vorderachse (36) im rechten Winkel kreuzt;
der stromaufwärts gelegene Abschnitt (61) außerhalb des ersten Bereichs (A1) gelegen ist;
der stromabwärts gelegene Abschnitt (81, 96) außerhalb des ersten Bereichs (A1) gelegen ist;
der Bremssattel (44, 92) in einer Position niedriger als das dritte Halteelement (78, 93) gelegen ist; **dadurch gekennzeichnet, dass**
der gesamte stromabwärts gelegene Abschnitt (81, 96) gleich oder niedriger als die obere imaginäre Ebene (PT) gelegen ist; und
das zweite Halteelement (77) in einer Position höher als das dritte Halteelement (78, 93) gelegen ist.

2. Das gespreizte Fahrzeug (1) nach Anspruch 1, wobei der stromaufwärts gelegene Abschnitt (61) gleich oder höher als die mittlere imaginäre Ebene (PM) gelegen ist.

3. Das gespreizte Fahrzeug (1) nach Anspruch 1 oder 2, wobei der zweite flexible Abschnitt (82, 97) gleich oder höher als die mittlere imaginäre Ebene (PM) gelegen ist.

4. Das gespreizte Fahrzeug (1) nach einem der Ansprüche 1 bis 3, wobei:
der Masterzylinder (42) außerhalb des ersten Bereichs (A1) gelegen ist;
das erste Halteelement (57) außerhalb des ersten Bereichs (A1) gelegen ist;
das zweite Halteelement (77) außerhalb des ersten Bereichs (A1) gelegen ist;
das dritte Halteelement (78, 93) außerhalb des ersten Bereichs (A1) gelegen ist;
der Bremssattel (44, 92) außerhalb des ersten Bereichs (A1) gelegen ist;
das zweite Halteelement (77) gleich oder niedriger als die obere imaginäre Ebene (PT) gelegen ist;
das dritte Halteelement (78, 93) gleich oder niedriger als die obere imaginäre Ebene (PT) gelegen ist; und
der Bremssattel (44, 92) gleich oder tiefer als die untere imaginäre Ebene (PB) gelegen ist.

5. Das gespreizte Fahrzeug (1) nach einem der Ansprüche 1 bis 4, wobei:
der Masterzylinder (42) höher gelegen ist als die obere imaginäre Ebene (PT);
das erste Halteelement (57) gleich oder höher als die mittlere imaginäre Ebene (PM) gelegen ist;
das zweite Halteelement (77) gleich oder höher als die mittlere imaginäre Ebene (PM) gelegen ist; und
das dritte Halteelement (78, 93) gleich oder höher als die mittlere imaginäre Ebene (PM) gelegen ist.

6. Das gespreizte Fahrzeug (1) nach einem der Ansprüche 1 bis 5, wobei:
ein zweiter Bereich (A2) auf einen Bereich gesetzt ist, der in einer Vorderansicht des Fahrzeugs niedriger als die untere Halterung (32), höher als ein oberes Ende des Vorderrads (6), weiter links als die rechte Vordergabel (33R) und weiter rechts als die linke Vordergabel (33L) liegt;
wenn sich die Lenkeinrichtung (4) in einer neutralen Position relativ zum Körperrahmen (3) befindet, ist der stromaufwärts gelegene Abschnitt (61) außerhalb des zweiten Bereichs (A2) gelegen; und
wenn sich die Lenkrichtung (4) in der neutralen Position befindet, ist der stromabwärts gelegene Abschnitt (81, 96) außerhalb des zweiten Bereichs (A2) gelegen.

7. Das gespreizte Fahrzeug (1) nach Anspruch 6, wobei:
wenn sich die Lenkeinrichtung (4) in der neutralen Position befindet, der Masterzylinder (42) außerhalb des zweiten Bereichs (A2) gelegen ist;
wenn sich die Lenkeinrichtung (4) in der neutralen Position befindet, das erste Halteelement (57) außerhalb des zweiten Bereichs (A2) gelegen ist;
wenn sich die Lenkeinrichtung (4) in der neutralen Position befindet, das zweite Halteelement (77) außerhalb des zweiten Bereichs (A2) gelegen ist;
wenn sich die Lenkeinrichtung (4) in der neutralen Position befindet, das dritte Halteelement (78, 93) außerhalb des zweiten Bereichs (A2) gelegen ist; und
wenn sich die Lenkeinrichtung (4) in der Neutralstellung befindet, der Bremssattel (44, 92) außerhalb des zweiten Bereichs (A2) gelegen ist.

8. Das gespreizte Fahrzeug (1) nach Anspruch 6 oder 7, wobei:
ein oberer Bereich (AT) auf einen Bereich gesetzt ist, der in der Vorderansicht des Fahrzeugs höher als die obere Halterung (31) ist; ein mittlerer Bereich (AM) auf einen Bereich gesetzt ist, der gleich oder niedriger als die obere Halterung (31) und gleich oder höher als die untere Halterung (32) in der Vorderansicht des Fahrzeugs ist;
ein unterer Bereich (AB) ist auf einen Bereich gesetzt, der gleich oder niedriger ist als das obere Ende des Vorderrads (6) in der Vorderansicht des Fahrzeugs;
ein rechter äußerer Bereich (ARR) auf einen Bereich gesetzt ist, der gleich oder weiter rechts ist als die rechte Vordergabel (33R) in der Vorderansicht des Fahrzeugs;
ein linker äußerer Bereich (ALL) auf einen Bereich gesetzt ist, der gleich oder weiter links als die linke Vordergabel (33L) in der Vorderansicht des Fahrzeugs ist;
wenn sich die Lenkeinrichtung (4) in der neutralen Position befindet, der stromaufwärts gelegene Abschnitt (61) in mindestens einem von dem oberen Bereich (AT), dem mittleren Bereich (AM), dem rechten äußeren Bereich (ARR) und dem linken äußeren Bereich (ALL) gelegen ist; und
wenn sich die Lenkeinrichtung (4) in der neutralen Position befindet, der stromabwärts gelegene Abschnitt (81, 96) in mindestens einem von dem mittleren Bereich (AM), dem unteren Bereich (AB), dem rechten äußeren Bereich (ARR) und dem linken äußeren Bereich (ALL) gelegen ist.

9. Das gespreizte Fahrzeug (1) nach Anspruch 8, wobei:
wenn sich die Lenkeinrichtung (4) in der neutralen Position befindet, der Masterzylinder (42) in mindestens einem von dem oberen Bereich (AT), dem rechten äußeren Bereich (ARR) und dem linken äußeren Bereich (ALL) gelegen ist;
wenn sich die Lenkeinrichtung (4) in der neutralen Position befindet, das erste Halteelement (57) in mindestens einem von dem mittleren Bereich (AM), dem rechten äußeren Bereich (ARR) und dem linken äußeren Bereich (ALL) gelegen ist;
wenn sich die Lenkeinrichtung (4) in der neutralen Position befindet, das zweite Halteelement (77) in mindestens einem von dem mittleren Bereich (AM), dem rechten äußeren Bereich (ARR) und dem linken äußeren Bereich (ALL);
wenn sich die Lenkeinrichtung (4) in der neutralen Position befindet, das dritte Halteelement (78, 93) in mindestens einem von dem mittleren Bereich (AM), dem rechten äußeren Bereich (ARR) und dem linken äußeren Bereich (ALL) gelegen ist; und
wenn sich die Lenkeinrichtung (4) in der neutralen Position befindet, der Bremssattel (44, 92) in mindestens einem von dem unteren Bereich (AB), dem rechten äußeren Bereich (ARR) und dem linken äußeren Bereich (ALL) gelegen ist.

10. Das gespreizte Fahrzeug (1) nach einem der Ansprüche 1 bis 9, wobei:
der zweite flexible Abschnitt (82, 97) in einer Position gelegen ist, die gleich oder höher als das dritte Halteelement (78, 93) ist; und
der am weitesten stromabwärts gelegene Abschnitt (83, 98) in einer Position gelegen ist, die gleich oder niedriger als das dritte Halteelement (78, 93) ist.

11. Das gespreizte Fahrzeug (1) nach einem der Ansprüche 1 bis 10, wobei:
ein rechter Bereich (AR) auf einen Bereich gesetzt ist, der weiter rechts ist als die Mittelachse (L) des Kopfrohrs (21) in der Vorderansicht des Fahrzeugs;
ein linker Bereich (AL) auf einen Bereich gesetzt ist, der in der Vorderansicht des Fahrzeugs weiter links ist als die Mittelachse (L) des Kopfrohrs (21);
wenn sich die Lenkeinrichtung (4) in der neutralen Position relativ zu dem Körperrahmen (3) befindet, der Masterzylinder (42) in einem von dem rechten Bereich (AR) und dem linken Bereich (AL) gelegen ist;
das erste Halteelement (57) in dem anderen von dem rechten Bereich (AR) und dem linken Bereich (AL) gelegen ist;
der erste flexible Abschnitt (62) einen ersten vorderen Überlappungsabschnitt (63) enthält, der weiter vorne als das Kopfrohr (21) gelegen ist, wobei der erste vordere Überlappungsabschnitt (63) das Kopfrohr (21) in der Vorderansicht des Fahrzeugs überlappt; das zweite Halteelement (77) in dem einen von dem rechten Bereich (AR) und dem linken Bereich (AL) gelegen ist;
wenn sich die Lenkeinrichtung (4) in der neutralen Position befindet, das dritte Halteelement (78, 93) in dem anderen von dem rechten Bereich (AR) und dem linken Bereich (AL) gelegen ist;
der zweite flexible Abschnitt (82, 97) einen zweiten vorderen Überlappungsabschnitt (85) enthält, der weiter vorne als das Kopfrohr (21) gelegen ist, wobei der zweite vordere Überlappungsabschnitt (85) das Kopfrohr (21) in der Vorderansicht des Fahrzeugs überlappt; und
wenn sich die Lenkeinrichtung (4) in der neutralen Position befindet, der Bremssattel (44, 92) in dem anderen von dem rechten Bereich (AR) und dem linken Bereich (AL) gelegen ist.

12. Das gespreizte Fahrzeug (1) nach Anspruch 11, wobei, wenn sich die Lenkeinrichtung (4) in der neutralen Position befindet, der erste vordere Überlappungsabschnitt (63) des ersten flexiblen Abschnitts (62) den zweiten vorderen Überlappungsabschnitt (85) des zweiten flexiblen Abschnitts (82, 97) in der Vorderansicht des Fahrzeugs nicht überlappt.

13. Das gespreizte Fahrzeug (1) nach einem der Ansprüche 1 bis 10, wobei:
ein rechter Bereich (AR) auf einen Bereich gesetzt ist, der in der Vorderansicht des Fahrzeugs weiter rechts ist als die Mittelachse (L) des Kopfrohrs (21);
ein linker Bereich (AL) auf einen Bereich gesetzt ist, der in der Vorderansicht des Fahrzeugs weiter links ist als die Mittelachse (L) des Kopfrohrs (21);
wenn sich die Lenkeinrichtung (4) in der neutralen Position relativ zu dem Körperrahmen (3) befindet, der Masterzylinder (42) in einem von dem rechten Bereich (AR) und dem linken Bereich (AL) gelegen ist;
das erste Halteelement (57) in dem anderen von dem rechten Bereich (AR) und dem linken Bereich (AL) gelegen ist;
der erste flexible Abschnitt (62) einen ersten vorderen Überlappungsabschnitt (63) aufweist, der weiter vorne als das Kopfrohr (21) gelegen ist, wobei der erste vordere Überlappungsabschnitt (63) das Kopfrohr (21) in der Vorderansicht des Fahrzeugs überlappt;
das zweite Halteelement (77) in dem einen von dem rechten Bereich (AR) und dem linken Bereich (AL) gelegen ist;
wenn sich die Lenkeinrichtung (4) in der neutralen Position befindet, das dritte Halteelement (78, 93) in dem einen von dem rechten Bereich (AR) und dem linken Bereich (AL) gelegen ist;
wenn sich die Lenkeinrichtung (4) in der neutralen Position befindet, der zweite flexible Abschnitt (82, 97) in dem einen von dem rechten Bereich (AR) und dem linken Bereich (AL) gelegen ist; und
wenn sich die Lenkeinrichtung (4) in der neutralen Position befindet, der Bremssattel (44, 92) in dem einen von dem rechten Bereich (AR) und dem linken Bereich (AL) gelegen ist.

14. Das gespreizte Fahrzeug (1) nach Anspruch 13, wobei:
der erste flexible Abschnitt (62) ein zweites Ende (53b) enthält, das relativ zu der Lenkeinrichtung (4) unbeweglich gehalten wird;
der erste flexible Abschnitt (62) enthält:
einen ersten Abschnitt (64), der sich von dem ersten Ende (53c) des ersten flexiblen Abschnitts (62) zu dem ersten vorderen Überlappungsabschnitt (63) des ersten flexiblen Abschnitts (62) erstreckt; und
einen zweiten Abschnitt (65), der sich von dem ersten vorderen Überlappungsabschnitt (63) des ersten flexiblen Abschnitts (62) zu dem zweiten Ende (53b) des ersten flexiblen Abschnitts (62) erstreckt;
der erste Abschnitt (64) des ersten flexiblen Abschnitts (62) in dem anderen von dem rechten Bereich (AR) und dem linken Bereich (AL) gelegen ist;
wenn sich die Lenkeinrichtung (4) in der neutralen Position befindet, der zweite Abschnitt (65) des ersten flexiblen Abschnitts (62) in der Seitenansicht des Fahrzeugs weiter vorne als eine Vorderkante (21b) des Kopfrohrs (21) gelegen ist; und
wenn sich die Lenkeinrichtung (4) in der neutralen Position befindet, der zweite flexible Abschnitt (82, 97) in der Seitenansicht des Fahrzeugs weiter hinten gelegen als mindestens eine von der Vorderkante (21b) des Kopfrohrs (21), einer Vorderkante (33Rb) der rechten Vordergabel (33R) und einer Vorderkante (33Lb) der linken Vordergabel (33L).

## Revendications

1. Véhicule à enfourcher (1) comprenant :
un cadre (3) ;
un dispositif de direction (4) soutenu en rotation par le cadre (3) ;
une roue avant (6) soutenue par le dispositif de direction (4) ;
un maître-cylindre (42) soutenu par le dispositif de direction (4) ;
un étrier de frein (44, 92) soutenu par le dispositif de direction (4) ;
une unité hydraulique (45) soutenue par le cadre (3) ;
un tubage principal (47) connectant le maître-cylindre (42) et l'unité hydraulique (45) ;
un tubage secondaire (49) connectant l'unité hydraulique (45) et l'étrier de frein (44, 92) ;
un premier élément de maintien (57) soutenu par le cadre (3) et maintenant le tubage principal (47) ;
un deuxième élément de maintien (77) soutenu par le cadre (3) et maintenant le tubage secondaire (49) ; et
un troisième élément de maintien (78, 93) soutenu par le dispositif de direction (4) et maintenant le tubage secondaire (49) ;
dans lequel
le cadre (3) inclut un tube de direction (21) ;
le dispositif de direction (4) inclut :
une colonne de direction (30) soutenue par le tube de direction (21) pour être mobile en rotation autour d'un axe central (L) du tube de direction (21) ;
une fixation supérieure (31) soutenue par la colonne de direction (30) ;
une fixation inférieure (32) soutenue par la colonne de direction (30) et installée dans une position inférieure à la fixation supérieure (31) ;
une fourche avant droite extensible et rétractable (33R) soutenue par la fixation supérieure (31) et la fixation inférieure (32) ;
une fourche avant gauche extensible et rétractable (33L) soutenue par la fixation supérieure (31) et la fixation inférieure (32) ; et
un essieu avant (36) soutenu par la fourche droite avant (33R) et la fourche gauche avant (33L) pour soutenir la roue avant (6) ;
l'unité hydraulique (45) est située plus en arrière que le tube de direction (21) dans une vue latérale du véhicule ;
le premier élément de maintien (57) est située plus en arrière que le tube de direction (21) dans la vue latérale du véhicule ;
le deuxième élément de maintien (77) est situé plus en arrière que le tube de direction (21) dans la vue latérale du véhicule ;
le tubage principal (47) inclut une partie amont (61) s'étendant du premier élément de maintien (57) vers le maître-cylindre (42) ;
la partie amont (61) inclut une première partie flexible (62) qui constitue un tout ou une partie de la partie amont (61) ;
la première partie flexible (62) inclut une première extrémité (53c) maintenue par le premier élément de maintien (57) ;
la première partie flexible (62) est configurée pour se courber lorsque le dispositif de direction (4) tourne par rapport au cadre (3) ;
le tubage secondaire (49) inclut une partie aval (81, 96) s'étendant du deuxième élément de maintien (77) vers l'étrier de frein (44, 92) ;
la partie aval (81, 96) inclut :
une deuxième partie flexible (82, 97) s'étendant du deuxième élément de maintien (77) au troisième élément de maintien (78, 93) ; et
une partie la plus en aval ((83, 98) s'étendant du troisième élément de maintien (78, 93) vers l'étrier de frein (44, 92) ;
la deuxième partie flexible (82, 97) est configurée pour se courber lorsque le dispositif de direction (4) tourne par rapport au cadre (3) ;
la troisième partie la plus en aval (83, 98) inclut une troisième partie flexible (84, 99) qui constitue un tout ou une partie de la partie la plus en aval (83, 98) ;
la troisième partie flexible (84, 99) est configurée pour se courber lorsque la fourche droite avant (33R) et la fourche gauche avant (33L) s'étendent et se rétractent ;
un plan imaginaire supérieur (PT) est défini sur un plan imaginaire perpendiculaire à l'axe central (L) du tube de direction (21) et en contact avec une partie supérieure de la fixation supérieure (31) ;
un plan imaginaire médian (PM) est défini sur un plan imaginaire parallèle au plan imaginaire supérieur (PT) et en contact avec une partie inférieure de la fixation inférieure (32) ;
un plan imaginaire inférieur (PB) est défini sur un plan imaginaire parallèle au plan imaginaire supérieur (PT) et en contact avec une partie supérieure de la roue avant (6) ;
une première zone (A1) est définie sur une zone démarquée par le plan imaginaire médian (PM), le plan imaginaire inférieur (PB), la fourche droite avant (33R) et la fourche gauche avant (33L), lorsque le véhicule à enfourcher (1) est visualisé dans une première direction (D1) qui coupe l'axe central (L) du tube de direction (21) à angles droit, et coupe l'essieu avant (36) à angles droits ;
la partie amont (61) est située hors de la première zone (A1) ;
la partie aval (81, 96) est située hors de la première zone (A1) ;
l'étrier de frein (44, 92) est situé dans une position plus basse que le troisième élément de maintien (78, 93) ; **caractérisé en ce que**
la partie aval entière (81, 96) est située au-dessous ou
au niveau du plan imaginaire supérieur (PT) ; et
le deuxième élément de maintien (77) est situé dans une position plus haute que le troisième élément de maintien (78, 93).

2. Le véhicule à enfourcher (1) selon la revendication 1, dans lequel la partie amont (61) est située au-dessus ou au niveau du plan imaginaire médian (PM).

3. Le véhicule à enfourcher (1) selon la revendication 1 ou 2, dans lequel la deuxième partie flexible (82, 97) est située au-dessus ou au niveau du plan imaginaire médian (PM).

4. Le véhicule à enfourcher (1) selon l'une quelconque des revendications 1 à 3, dans lequel :
le maître-cylindre (42) est situé hors de la première zone (A1) ;
le premier élément de maintien (57) est située hors de la première zone (A1) ;
le deuxième élément de maintien (77) est situé hors de la première zone (A1) ;
le troisième élément de maintien (78, 93) est situé hors de la première zone (A1) ;
l'étrier de frein (44, 92) est situé hors de la première zone (A1) ;
le deuxième élément de maintien (77) est située au-dessous ou au niveau du plan imaginaire supérieur (PT) ;
le troisième élément de maintien (78, 93) est située au-dessous ou au niveau du plan imaginaire supérieur (PT) ; et
l'étrier de frein (44, 92) est située au-dessous ou au niveau du plan imaginaire inférieur (PB).

5. Le véhicule à enfourcher (1) selon l'une quelconque des revendications 1 à 4, dans lequel :
le maître-cylindre (42) est situé au-dessus ou au niveau du plan imaginaire supérieur (PT) ;
le premier élément de maintien (57) est situé au-dessus ou au niveau du plan imaginaire médian (PM) ;
le deuxième élément de maintien (77) est situé au-dessus ou au niveau du plan imaginaire supérieur (PM) ; et
le troisième élément de maintien (78, 93) est situé au-dessus ou au niveau du plan imaginaire supérieur (PM).

6. Le véhicule à enfourcher (1) selon l'une quelconque des revendications 1 à 5, dans lequel :
une deuxième zone (A2) est définie sur une zone qui est, dans une vue avant du véhicule, plus basse que la fixation inférieure (32), plus haute que l'extrémité supérieure de la roue avant (6), plus à gauche que la fourche droite avant (33R) et plus à droite que la fourche gauche avant (33L) ;
lorsque le dispositif de direction (4) est dans une position neutre par rapport au cadre (3), la partie amont (61) est située hors de la deuxième zone (A2) ; et
lorsque le dispositif de direction (4) est dans la position neutre, la partie aval (81, 96) est située hors de la deuxième zone (A2).

7. Le véhicule à enfourcher (1) selon la revendication 6, dans lequel :
lorsque le dispositif de direction (4) est dans la position neutre, le maître-cylindre (42) est situé hors de la deuxième zone (A2) ;
lorsque le dispositif de direction (4) est dans la position neutre, le premier élément de maintien (57) est situé hors de la deuxième zone (A2) ;
lorsque le dispositif de direction (4) est dans une position neutre, le deuxième élément de maintien (77) est situé hors de la deuxième zone (A2) ;
lorsque le dispositif de direction (4) est dans la position neutre, le troisième élément de maintien (78, 93) est situé hors de la deuxième zone (A2) ; et
lorsque le dispositif de direction (4) est dans une position neutre, l'étrier de frein (44, 92) est situé hors de la deuxième zone (A2).

8. Le véhicule à enfourcher (1) selon la revendication 6 ou 7, dans lequel :
une zone supérieure (AT) est définie sur une zone plus haute que la fixation supérieure (31) dans la vue avant du véhicule ; une zone médiane (AM) est définie sur une zone au-dessous ou au niveau de la fixation supérieure (31) et au-dessus ou au niveau de la fixation inférieure (32) dans la vue avant du véhicule ;
une zone inférieure (AB) est définie sur une zone au-dessous ou au niveau de l'extrémité supérieure de la roue avant (6) dans la vue avant du véhicule ;
une zone droite extérieure (ARR) est définie sur une zone plus à droite ou au niveau de la fourche droite avant (33R) dans la vue avant du véhicule ;
une zone gauche extérieure (ALL) est définie sur une zone plus à gauche ou au niveau de la fourche gauche avant (33L) dans la vue avant du véhicule ;
lorsque le dispositif de direction (4) est dans la position neutre, la partie amont (61) est située dans au moins une de la zone supérieure (AT), la zone médiane (AM), la zone droite extérieure (ARR) et la zone gauche extérieure (ALL) ; et
lorsque le dispositif de direction (4) est dans la position neutre, la partie aval (81, 96) est située dans au moins une de la zone médiane (AM), la zone inférieure (AB), la zone droite extérieure (ARR) et la zone gauche extérieure (ALL).

9. Le véhicule à enfourcher (1) selon la revendication 8, dans lequel :
lorsque le dispositif de direction (4) est dans la position neutre, le maître-cylindre (42) est situé dans au moins une de la zone supérieure (AT), la zone droite extérieure (ARR) et la zone gauche extérieure (ALL) ;
lorsque le dispositif de direction (4) est dans la position neutre, le premier élément de maintien (57) est situé dans au moins une la zone médiane (AM), la zone droite extérieure (ARR) et la zone gauche extérieure (ALL) ;
lorsque le dispositif de direction (4) est dans la position neutre, le deuxième élément de maintien (77) est situé dans au moins une de la zone médiane (AM), la zone droite extérieure (ARR) et la zone gauche extérieure (ALL) ;
lorsque le dispositif de direction (4) est dans la position neutre, le troisième élément de maintien (78, 93) est situé dans au moins une de la zone médiane (AM), la zone droite extérieure (ARR) et la zone gauche extérieure (ALL) ; et
lorsque le dispositif de direction (4) est dans la position neutre, l'étrier de frein (44, 92) est situé dans au moins une de la zone inférieure (AB), la zone droite extérieure (ARR) et la zone gauche extérieure (ALL).

10. Le véhicule à enfourcher (1) selon l'une quelconque des revendications 1 à 9, dans lequel :
la deuxième partie flexible (82, 97) est située dans une position au-dessus ou au niveau du troisième élément de maintien (78, 93) ; et
la partie la plus en aval (83, 98) est située dans une position au-dessous ou au niveau du troisième élément de maintien (78, 93).

11. Le véhicule à enfourcher (1) selon l'une quelconque des revendications 1 à 10, dans lequel :
une zone droite (AR) est définie sur une zone plus à droite ou au niveau de l'extrémité supérieure de l'axe central (L) du tube de direction (21) dans la vue avant du véhicule ;
une zone gauche (AL) est définie sur une zone plus à gauche ou au niveau de l'axe central (L) du tube de direction (21) dans la vue avant du véhicule ;
lorsque le dispositif de direction (4) est dans la position neutre par rapport au cadre (3), le maître-cylindre (42) est situé dans une de la zone droite (AR) et de la zone gauche (AL) ;
le premier élément de maintien (57) est situé dans l'autre de la zone droite (AR) et de la zone gauche (AL) ;
la première partie flexible (62) inclut une première partie de chevauchement avant (63) située plus en avant que le tube de direction (21), la première partie de chevauchement avant (63) chevauchant le tube de direction (21) dans la vue avant du véhicule ; le deuxième élément de maintien (77) est situé dans l'une de la zone droite (AR) et de la zone gauche (AL) ;
lorsque le dispositif de direction (4) est dans la position neutre, le troisième élément de maintien (78, 93) est situé dans l'autre de la zone droite (AR) et de la zone gauche (AL) ;
la deuxième partie flexible (82,97) inclut une deuxième partie de chevauchement avant (85) située plus en avant que le tube de direction (21), la deuxième partie de chevauchement avant (85) chevauchant le tube de direction (21) dans la vue avant du véhicule ; et
lorsque le dispositif de direction (4) est dans la position neutre, l'étrier de frein (44, 92) est situé dans l'autre de la zone droite (AR) et de la zone gauche (AL) .

12. Le véhicule à enfourcher (1) selon la revendication 11, dans lequel, lorsque le dispositif de direction (4) est dans la position neutre, la première partie de chevauchement avant (63) de la première partie flexible (62) ne chevauche pas la deuxième partie de chevauchement avant (85) de la deuxième partie flexible (82, 97) dans la vue avant de véhicule.

13. Le véhicule à enfourcher (1) selon l'une quelconque des revendications 1 à 10, dans lequel :
une zone droite (AR) est définie sur une zone plus à droite que l'axe central (L) du tube de direction (21) dans la vue avant du véhicule ;
une zone gauche (AL) est définie sur une zone plus à gauche que l'axe central (L) du tube de direction (21) dans la vue avant du véhicule ;
lorsque le dispositif de direction (4) est dans la position neutre par rapport au cadre (3), le maître-cylindre (42) est situé dans une de la zone droite (AR) et de la zone gauche (AL) ;
le premier élément de maintien (57) est situé dans l'autre de la zone droite (AR) et de la zone gauche (AL) ;
la première partie flexible (62) inclut une première partie de chevauchement avant (63) située plus en avant que le tube de direction (21), la première partie de chevauchement avant (63) chevauchant le tube de direction (21) dans la vue avant du véhicule ;
le deuxième élément de maintien (77) est situé dans l'autre de la zone droite (AR) et de la zone gauche (AL) ;
lorsque le dispositif de direction (4) est dans la position neutre, le troisième élément de maintien (78, 93) est situé dans l'autre de la zone droite (AR) et la zone gauche (AL) ;
lorsque le dispositif de direction (4) est dans la position neutre, la deuxième partie flexible (82, 97) est située dans l'une de la zone droite (AR) et de la zone gauche (AL) ; et
lorsque le dispositif de direction (4) est dans la position neutre, l'étrier de frein (44, 92) est situé dans l'une de la zone droite (AR) et de la zone gauche (AL) .

14. Le véhicule à enfourcher (1) selon la revendication 13, dans lequel :
la première partie flexible (62) inclut une deuxième extrémité (53b) maintenue pour être immobile par rapport au dispositif de direction (4) ;
la première partie flexible (62) inclut :
une première partie (64) s'étendant de la première extrémité (53c) de la première partie flexible (62) à la première partie de chevauchement avant (63) de la première partie flexible (62) ; et
une deuxième partie (65) s'étendant de la première partie avant chevauchement avant (63) de la première partie flexible (62) à la deuxième extrémité (53b) de la première partie flexible (62) ;
la première partie (64) de la première partie flexible (62) est située dans l'autre de la zone droite (AR) et de la zone gauche (AL) ;
lorsque le dispositif de direction (4) est dans la position neutre, la deuxième partie (65) de la première partie flexible (62) est située plus en avant qu'une arête avant (21b) du tube de direction (21) dans la vue latérale du véhicule ; et
lorsque le dispositif de direction (4) est dans la position neutre, la deuxième partie flexible (82, 97) est, dans la vue latérale du véhicule, située plus en arrière qu'au moins une de l'arête avant (21b) du tube de direction (21), d'une arête avant (33Rb) de la fourche droite avant (33R) et d'une arête avant (33Lb) de la fourche gauche avant (33L).
